# EUROPEAN PATENT APPLICATION

(11) **EP 4 723 726 A1**
(43) Date of publication of application: **08.04.2026**
(21) Application number: 23938893.7
(22) Date of filing: 31.05.2023
(51) Int. Cl.: H04W 28/02

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); ZHANG, Jun, Dongguan, Guangdong 523860 (CN); LUO, Chaoming, Dongguan, Guangdong 523860 (CN)
(74) Representative: Novagraaf Technologies
(86) International application number: PCT/CN2023/097603
(87) International publication number: WO 2024/243902

(57) **Abstract**

The embodiments of the present application provide a wireless communication method, and a device. An STA can acquire traffic flow transmission QoS parameter information that can be supported by a first AP in a first channel, such that the STA can perform subsequent transmission of a traffic flow (e.g., a time-sensitive traffic flow) on the basis of the acquired traffic flow transmission QoS parameter information that can be supported by the first AP in the first channel, so as to optimize the traffic flow transmission performance. The wireless communication method comprises: an STA receiving first information, wherein the first information at least comprises traffic flow transmission QoS parameter information that can be supported by a first AP in a first channel.

## Description

### TECHNICAL FIELD

Embodiments of the present disclosure relate to the field of communications, and in particular, relate to a method and device for wireless communication.

### RELATED ART

In wireless local area networks (WLANs), quality of service (QoS) characteristics have been introduced to improve the transmission performance of traffic flows. However, the transmission performance of the traffic flows based on the QoS characteristics still require further improvement at the present stage.

### SUMMARY

Embodiments of the present disclosure provide a method and device for wireless communication. A station (STA) may acquire QoS parameter information for traffic flow transmission supported by a first access point (AP) on a first channel, and accordingly, the STA may perform subsequent transmission of traffic flows (e.g., delay-sensitive traffic flows) based on the acquired QoS parameter information for traffic flow transmission supported by the first AP on the first channel, to optimize the transmission performance of the traffic flows.

In a first aspect, a method for wireless communication is provided. The method includes:
receiving, by an STA, first information;
wherein the first information includes at least QoS parameter information for traffic flow transmission supported by a first AP on a first channel.

In a second aspect, a method for wireless communication is provided. The method includes:
transmitting, by an AP, first information;
wherein the first information includes at least QoS parameter information for traffic flow transmission supported by a first AP on a first channel.

In a third aspect, an STA is provided for performing the method in the first aspect.

Specifically, the STA includes one or more functional modules configured to perform the method in the first aspect.

In a fourth aspect, an AP is provided for performing the method in the second aspect.

Specifically, the AP includes one or more functional modules configured to perform the method in the second aspect.

In a fifth aspect, an STA is provided. The STA includes a processor and a memory. The memory is configured to store one or more computer programs. The processor is configured to read and run the one or more computer programs stored in the memory to cause the STA to perform the method in the first aspect.

In a sixth aspect, an AP is provided. The AP includes a processor and a memory. The memory is configured to store one or more computer programs. The processor is configured to read and run the one or more computer programs stored in the memory to cause the AP to perform the method in the second aspect.

In a seventh aspect, an apparatus is provided for performing the method in the first aspect or the second aspect.

Specifically, the apparatus includes a processor configured to read one or more computer programs from a memory and run the one or more computer programs to cause a device equipped with the apparatus to perform the method in the first aspect or the second aspect.

In an eighth aspect, a computer-readable storage medium is provided. The computer-readable storage medium stores one or more computer programs, wherein the one or more computer programs, when loaded and run by a computer, cause the computer to perform the method in the first aspect or the second aspect.

In a ninth aspect, a computer program product is provided. The computer program product includes one or more computer program instructions, wherein the one or more computer program instructions, when loaded and executed by a computer, cause the computer to perform the method in the first aspect or the second aspect.

In a tenth aspect, a computer program is provided. The computer program, when loaded and run by a computer, causes the computer to perform the method in the first aspect or the second aspect.

In the technical solutions as described above, the STA may acquire the QoS parameter information for traffic flow transmission supported by the first AP on the first channel, and accordingly, the STA may perform subsequent transmission of traffic flows (e.g., delay-sensitive traffic flows) based on the acquired QoS parameter information for traffic flow transmission supported by the first AP on the first channel, to optimize the transmission performance of the traffic flows.

### BRIEF DESCRIPTION OF DRAWINGS

FIG. 1 is a schematic diagram of a communication system architecture applicable in some embodiments of the present disclosure;
FIG. 2 is a schematic diagram of a format of a QoS Characteristic element according to the present disclosure;
FIG. 3 is a schematic diagram of a Basic Service Set (BSS) Load element according to the present disclosure;
FIG. 4 is a schematic diagram illustrating differential QoS parameters for available service time within the same available medium time according to the present disclosure;
FIG. 5 is a schematic flowchart of a method for wireless communication according to some embodiments of the present disclosure;
FIG. 6 is a schematic diagram of available service time parameters in a BSS according to some embodiments of the present disclosure;
FIG. 7 is a schematic diagram of available service time parameters during restricted target wake time (R-TWT) service periods (SPs) in a BSS according to some embodiments of the present disclosure;
FIG. 8 is another schematic diagram of available service time parameters during R-TWT SPs in a BSS according to some embodiments of the present disclosure;
FIG. 9 is a schematic diagram of a method for estimating QoS parameters for traffic flow transmission based on scheduling capabilities of an AP according to some embodiments of the present disclosure;
FIG. 10 is a schematic diagram of an Estimated Supported Traffic Flow QoS Parameter Information field according to some embodiments of the present disclosure;
FIG. 11 is a schematic diagram of an Estimated Supported Traffic Flow QoS Parameter Control field according to some embodiments of the present disclosure;
FIG. 12 is a schematic diagram of another Estimated Supported Traffic Flow QoS Parameter Control field according to some embodiments of the present disclosure;
FIG. 13 is a schematic diagram of yet another Estimated Supported Traffic Flow QoS Parameter Control field according to some embodiments of the present disclosure;
FIG. 14 is a schematic diagram of a Supported Traffic Flow QoS Parameters field according to some embodiments of the present disclosure;
FIG. 15 is a schematic diagram of another Supported Traffic Flow QoS Parameters field according to some embodiments of the present disclosure;
FIG. 16 is a schematic diagram of an Available Service Time Parameters field according to some embodiments of the present disclosure;
FIG. 17 is a schematic diagram of a Recommended STA Operation and Capability Parameters field according to some embodiments of the present disclosure;
FIG. 18 is a schematic diagram of a Recommended STA Rx/Tx Parameters field according to some embodiments of the present disclosure;
FIG. 19 is a schematic diagram of an Estimated Supported Traffic Flow QoS Parameters element according to some embodiments of the present disclosure;
FIG. 20 is a schematic diagram of an R-TWT element according to some embodiments of the present disclosure;
FIG. 21 is a schematic diagram of an Estimated Supported Traffic Flow QoS Parameters field according to some embodiments of the present disclosure;
FIG. 22 is a schematic diagram of a format of a Broadcast TWT Info field according to some embodiments of the present disclosure;
FIG. 23 is a schematic diagram of an example of a QoS parameter estimation and signaling for traffic flow transmission in a BSS according to some embodiments of the present disclosure;
FIG. 24 is a schematic diagram of an example of a QoS parameter estimation and signaling for traffic flow transmission based on a specific R-TWT in a BSS according to some embodiments of the present disclosure;
FIG. 25 is a schematic diagram of another example of a QoS parameter estimation and signaling for traffic flow transmission based on a specific R-TWT in a BSS according to some embodiments of the present disclosure;
FIG. 26 is a schematic block diagram of an STA according to some embodiments of the present disclosure;
FIG. 27 is a schematic block diagram of an AP according to some embodiments of the present disclosure;
FIG. 28 is a schematic block diagram of a communication device according to some embodiments of the present disclosure;
FIG. 29 is a schematic block diagram of an apparatus according to some embodiments of the present disclosure; and
FIG. 30 is a schematic block diagram of a communication system according to some embodiments of the present disclosure.

### DETAILED DESCRIPTION

The technical solutions according to the embodiments of the present disclosure are described hereinafter with reference to the accompanying drawings in the embodiments of the present disclosure. Obviously, the described embodiments are part of the embodiments of the present disclosure, rather than all of the embodiments of the present disclosure. Any other embodiments besides the embodiments in the present disclosure, derived by those of ordinary skill in the art without any creative efforts, shall fall within the scope of protection of the present disclosure.

The technical solutions according to the embodiments of the present disclosure may be applicable to various communication systems, such as WLANs, wireless fidelity (Wi-Fi) systems, or other communication systems.

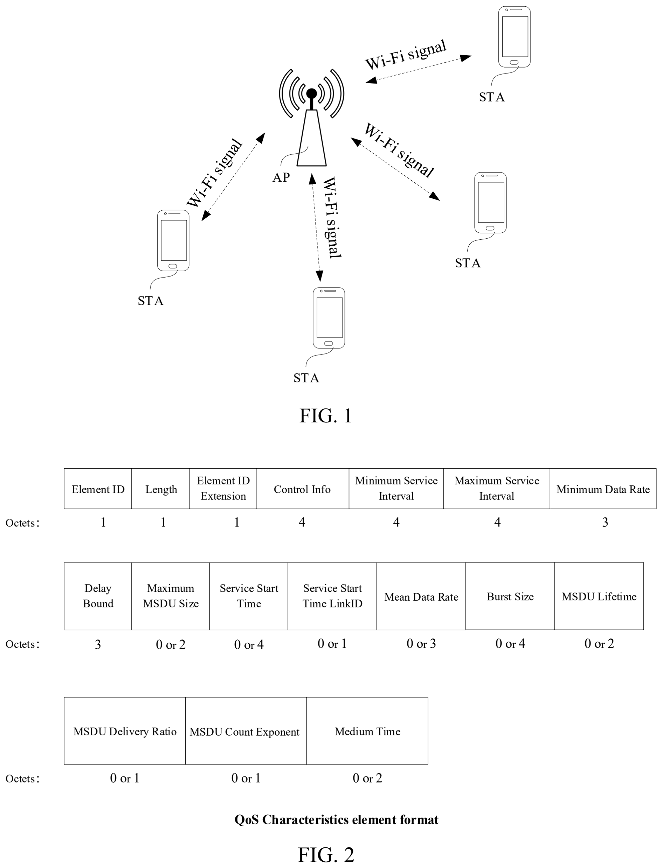

FIG. 1 is a schematic diagram of a wireless communication system according to some embodiments of the present disclosure. As illustrated in FIG. 1, the wireless communication system may include: an AP and an STA.

In some scenarios, an AP may also be referred to as an "AP STA," which means that an AP is also a type of STA in a sense. In some scenarios, an STA may also be referred to as a "non-AP STA."

In some embodiments, an STA may include an AP STA and a non-AP STA. In the communication system, communication may be conducted between an AP and a non-AP STA, between non-AP STAs, or between an STA and a peer STA. Herein, the peer STA may refer to a counterpart STA (device) that communicates with the STA. For example, the peer STA may be an AP or a non-AP STA.

The AP acts as a bridge connected between a wired network and a wireless network, and is mainly configured to connect wireless network clients and access the wireless network to the Ethernet. An AP device may be a terminal device (e.g., a mobile phone) equipped with a Wi-Fi chip, or a network device (e.g., a router) equipped with a Wi-Fi chip.

It should be understood that the role of the STA in the communication system is not particularly defined. For example, in some scenarios, in a case where a mobile phone is connected to a router, the mobile phone is a non-AP STA; or in a case where the mobile phone serves as a hotspot for other phones, the mobile phone acts as an AP.

The AP and the non-AP STA may be devices applied in Internet of vehicles (IoV), Internet of things (IoT) nodes, sensors, or the like in the IoT, smart cameras, smart remote controllers, smart water/electricity meters in smart homes, as well as sensors and similar devices in smart cities.

In some embodiments, the non-AP STA may support the 802.11be standard. The non-AP STA may also support a plurality of the current WLAN standards (e.g., 802.11ax, 802.11ac, 802.11n, 802.11g, 802.11b, and 802.11a) and future WLAN standards in the 802.11 family.

In some embodiments, the AP may be a device that supports the 802.11be standard. The AP may also be a device that supports a plurality of the current WLAN standards (e.g., 802.11ax, 802.11ac, 802.11n, 802.11g, 802.11b, and 802.11a) and future WLAN standards in the 802.11 family.

In some embodiments, the STA may include one of the following devices that support the WLAN/Wi-Fi technology: a mobile phone, a tablet computer (e.g., a Pad), a computer, a virtual reality (VR) device, an augmented reality (AR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, a wireless communication chip, an application specific integrated circuit, a system on chip (SoC), or the like.

Frequency bands supported by the WLAN technology include, but are not limited to, low frequency bands (e.g., 2.4 GHz, 5 GHz, or 6 GHz) and high frequency bands (e.g., 45 GHz, or 60 GHz).

One or more links may be present between an STA and an AP. In some embodiments, the STA and the AP support multi-band communication, such as simultaneous communication in 2.4 GHz, 5 GHz, 6 GHz, as well as 45 GHz and 60 GHz frequency bands, or simultaneous communication on different channels within the same or different frequency bands, to improve communication throughput and/or reliability between devices. Such devices are typically referred to as multi-band devices or multi-link devices (MLDs), and sometimes referred to as multi-link entities or multi-band entities. An MLD may be an AP device or an STA device. In a case where the MLD is an AP device, the MLD includes one or more APs. In a case where the MLD is an STA device, the MLD includes one or more non-AP STAs.

An MLD that includes one or more APs may be referred to as an "AP MLD." An MLD that includes one or more non-AP STAs may be referred to as a "non-AP MLD."

In some embodiments, an AP entity may include a plurality of affiliated APs, and a non-AP entity may include a plurality of affiliated STAs. A plurality of links may be established between the affiliated APs in the AP entity and the affiliated STAs in the non-AP entity. Data communication may be conducted between the affiliated APs in the AP entity and their corresponding affiliated STAs in the non-AP entity via corresponding links.

An AP is a device deployed in a WLAN to provide wireless communication functions for STAs. An STA may be a user equipment (UE), an access terminal, a subscriber unit, a subscriber station, a mobile station, a remote station, a remote terminal, a mobile device, a wireless communication device, a user agent, or a user device. In some embodiments, the STA may also be a cellular phone, a cordless phone, a Session Initiation Protocol (SIP) phone, a wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

In some embodiments, both the AP and the STA may support the IEEE 802.11 standard.

It should be understood that the terms "system" and "network" are used interchangeably herein. The term "and/or" as used herein describes an association relationship of associated objects, indicating that three relationships may exist. For example, the phrase "A and/or B" may indicate (A), (A and B), and (B). In addition, the character "/" as used herein generally indicates that associated objects preceding and following the character are in an "or" relationship.

It should be understood that the "indication" as mentioned in the embodiments of the present disclosure may be direct indication, indirect indication, or indicate an association relationship. For example, "A indicates B" may mean that A directly indicates B (for example, B may be acquired via A); A indirectly indicates B (for example, A indicates C, and B may be acquired via C); or an association relationship may be present between A and B.

The terms as used in the description of the present disclosure are solely for the purpose of explaining specific embodiments of the present disclosure and are not intended to limit the present disclosure. The terms "first," "second," "third," "fourth," and the like, as used in the description, claims, and accompanying drawings of the present disclosure, are intended to distinguish between different objects rather than to describe a specific sequence. Additionally, the terms "include/comprise" and "have," as well as any variations thereof, are intended to cover non-exclusive inclusion.

It should be understood that the phrase "at least one or at least one of" mentioned in the embodiments of the present disclosure may mean "one or more." Furthermore, the term "positive integer" mentioned in the embodiments of the present disclosure may represent values such as "1, 2, 3, ...;" the term "non-negative integer" may represent values such as "0, 1, 2, 3, ...;" and the term "integer" may represent values such as "... - 3, -2, -1, 0, 1, 2, 3, ..." These terms may be replaced with any possible values based on the requirements of the embodiments.

It should be understood that the diagrams and/or tables according to the embodiments of the present disclosure are merely illustrative. Specifically, in some scenarios, part of the information included in the diagrams and/or tables illustrated in the embodiments of the present disclosure may separately constitute an optional embodiment. For example, each row or column in a table may separately constitute an optional embodiment, which is not limited in the present disclosure.

In the description of the embodiments of the present disclosure, the term "corresponding" may indicate a direct or indirect correspondence relationship between two elements, or may also indicate an association relationship between two elements, or may indicate relationships such as a relationship between an instructor and an instructed element, or a relationship between a configurator and a configured element.

In the embodiments of the present disclosure, a "predefined" or "preconfigured" operation may be performed by pre-storing corresponding codes or tables in a device (e.g., a device including an STA and a network device), or may be performed by other means that may be used to indicate relevant information. The present disclosure does not impose any restrictions on specific methods for performing the predefined or preconfigured operation. For example, the predefined operation may be agreed in a protocol.

In the embodiments of the present disclosure, the "protocol" may refer to a standard protocol in the communication field. For example, the protocol may include a Wi-Fi protocol and related protocols applied in future Wi-Fi communication systems, which is not limited in the present disclosure.

For better understanding of the embodiments of the present disclosure, a predictable delay related to the present disclosure is explained hereinafter.

Traffic flows sourced from many real-time applications have strict requirements in terms of delay, jitter, and reliability constraints. Such traffic flows are referred to as delay-sensitive traffic flows. The delay-sensitive traffic flows require to transmit data packets on wireless links with predictable delays in terms of both average delays and worst-case delays. This type of traffic typically presents a periodic pattern of data bursts arriving at regular intervals. Mechanisms such as a stream classification service (SCS) and an R-TWT enable a BSS to provide predictable delays with higher reliability for the delay-sensitive traffics on the wireless links using enhanced medium access protection and resource reservation.

For better understanding of the embodiments of the present disclosure, a QoS Characteristics element related to the present disclosure is explained hereinafter.

The QoS Characteristics element includes a set of parameters that define characteristics and QoS expectations of traffic flows for a specific non-AP extremely-high throughput STA (non-AP EHT STA), and is used by an EHT AP and the non-AP EHT STA to support QoS traffic flow transmission using an SCS mechanism and R-TWT operations.

For example, a format of the QoS Characteristics element is defined as illustrated in FIG. 2, wherein a Delay Bound field is represented as an unsigned integer that specifies a maximum amount of time (in microseconds) allowed for transmitting medium access control service data units (MSDUs) or aggregating medium access control service data units (A-MSDUs) belonging to a traffic flow described by the QoS Characteristics element. The maximum amount of time is measured from a moment when an MSDU or a first MSDU of MSDUs constituting an A-MSDU is marked upon arrival at a local medium access control (MAC) sublayer via a local MAC secondary AP (SAP), until the completion time when the MSDU or the A-MSDU is successfully transmitted or retransmitted to a destination. The completion time of the transmission of the MSDU or the A-MSDU includes a transmission duration of a corresponding acknowledgment frame.

An MSDU Delivery Ratio subfield specifies an MSDU loss requirement and is encoded as defined in values of the MSDU Delivery Ratio subfield as listed in Table 1.

**Table 1**

| Value | MSDU delivery ratio |
|---|---|
| 0 | Reserved |
| 1 | 95% |
| 2 | 96% |
| 3 | 97% |
| 4 | 98% |
| 5 | 99% |
| 6 | 99.9% |
| 7 | 99.99% |
| 8 | 99.999% |
| 9 | 99.9999% |
| 10-15 | Reserved |

An MSDU Count Exponent subfield is represented as an unsigned integer that specifies an exponent for calculating the number of incoming MSDUs used to calculate the MSDU delivery ratio.

For better understanding of the embodiments of the present disclosure, an EHT SCS mechanism related to the present disclosure is explained hereinafter.

A non-AP MLD uses the SCS mechanism to: request an AP MLD to classify incoming individually addressed MSDUs based on parameters provided by the Non-AP MLD; and/or describe traffic characteristics of the non-AP MLD to the AP MLD.

A non-AP EHT STA may transmit an SCS request frame with an SCS Descriptor element, wherein the SCS Descriptor element includes a QoS Characteristics element. In the SCS request frame, a Request Type field is set to "Add" or "Change." The QoS Characteristics element describes traffic characteristics of a requested SCS flow.

The MLD maintains an SCS identifier (SCS ID) at an MLD level, which means that, in the SCS request frame transmitted to an AP affiliated to the AP MLD, the SCS ID used by a non-AP STA affiliated to the non-AP MLD is unique for all STAs affiliated to the non-AP MLD.

In a case where the SCS request frame with the SCS Descriptor element including the QoS Characteristics element is rejected by the EHT AP by setting a value of a Status field to "REJECTED_WITH_SUGGESTED_CHANGES," the AP shall include an SCS Descriptor element with a QoS Characteristics element in an SCS response frame to signal recommended QoS characteristics parameters for the SCS flow. The AP shall include the SCS Descriptor element with the QoS Characteristics element in the SCS response frame only in a case where the SCS Descriptor element in the corresponding SCS request frame includes the QoS Characteristics element, wherein a value of the Status field in the SCS response frame is set to "SUCCESS" or "REJECTED_WITH_SUGGESTED_CHANGES."

In the SCS response frame, fields, such as a Minimum Service Interval field, a Maximum Service Interval field, a Service Start Time field, and a Medium Time field, included in the QoS Characteristics element in the corresponding SCS Descriptor element may be different from corresponding values in the requested SCS flow.

The QoS Characteristics element is a reference for scheduling by the EHT AP. In a case where a Direction subfield of the QoS Characteristics element indicates "Downlink," the EHT AP shall schedule the transmission of downlink frames, such that a requested delay bound and a requested minimum data rate are satisfied for downlink data frames. The EHT AP shall enable the transmission of uplink frames from the EHT STA at intervals between a requested minimum service interval and a requested maximum service interval. In a case where the Direction subfield of the QoS Characteristics element indicates "Uplink," the AP shall satisfy the requested minimum data rate. The EHT AP shall enable the transmission of sidelink frames from the EHT STA to another STA on a link specified in a LinkID subfield of a Control Information field at intervals between the requested minimum service interval and the requested maximum service interval.

In a case where the EHT STA is a TWT scheduling STA or a TWT requesting STA, and a TWT SP negotiated with the EHT AP is present for a traffic identifier (TID) specified in the QoS Characteristics element, the EHT AP shall ensure that a service interval aligns with a negotiated TWT wake interval.

In a case where the EHT STA is an R-TWT scheduling STA and a negotiated R-TWT SP is present for the TID specified in the QoS Characteristics element, and the negotiated R-TWT SP for the TID specified in the QoS Characteristics element is a trigger-enabled R-TWT, the EHT AP shall ensure that a trigger frame is scheduled at the start of the R-TWT SP.

For better understanding of the embodiments of the present disclosure, the R-TWT related to the present disclosure is explained hereinafter.

A TWT scheduled wake-up mechanism first provided in the IEEE 802.11ah standard, marked as Wi-Fi HaLow, which is used to support energy-saving operations in large-scale IoT environments. In IEEE 802.11ax, the TWT mechanism is based on IEEE 802.11ah and adds support for trigger-based uplink transmission, thereby expanding the scope of TWT operations.

In the TWT mechanism, a schedule is established between STAs and an AP (for example, the schedule is specified by the STAs and the AP), and the schedule consists of TWT periods. Upon arrival of a time period negotiated by an STA and an AP, the STA wakes up, waits for a trigger frame from the AP, and performs a data exchange. Upon completion of the current transmission, the STA returns back to a sleep state. Each STA may negotiate independently with the AP, and each STA has an individual TWT period.

The TWT mechanism allows an AP to manage activities of a BSS to mitigate contention between STAs and reduce awake time of STAs using power management modes, which is achieved by the STAs operating in non-overlapping time and/or frequency domains and concentrating frame exchanges in predefined SPs. Therefore, to ensure application effects of TWT, the AP typically requires all associated STAs in the BSS to join or participate in the TWT mechanism for scheduling purposes. According to the TWT protocol specified in IEEE 802.11ax, a high-efficiency (HE) AP (specifically referring to an AP compliant with IEEE 802.11ax) may request all associated STAs that announce support for the TWT mechanism to join the TWT mechanism. Upon receiving an indication from the AP for requesting participation in the TWT mechanism, a non-AP STA shall perform individual TWT protocol negotiation or participate in broadcast TWT. Furthermore, SPs in the TWT mechanism include trigger-enabled SPs and non-trigger-enabled SPs, and a TWT scheduling AP performs scheduling by transmitting a trigger frame in a trigger-enabled SP. Additionally, IEEE 802.11ax specifies that, outside a broadcast TWT SP, TWT scheduled STAs are not allowed to transmit frames to the TWT scheduling AP; and in a trigger-enabled broadcast TWT, the TWT scheduled STAs are not allowed to transmit frames to the TWT scheduling AP unless the frames are carried in an HE trigger-based physical layer protocol data unit (HE TB PPDU).

Currently defined R-TWT is based on broadcast TWT. In a broadcast TWT operation, a TWT scheduling AP carries a broadcast TWT element in a broadcast Beacon frame to indicate a broadcast TWT SP. In a trigger-enabled SP, an AP, upon contention for a channel access opportunity, transmits a trigger frame or a downlink buffer unit (BU) to TWT scheduled STAs (e.g., STA 1 and STA 2). Upon completion of frame exchanges with the AP within the TWT SP, STA 1 and STA 2 enter a sleep state outside the TWT SP.

IEEE 802.11be proposes a restricted TWT operation to allow an AP to utilize enhanced medium access protection and resource reservation mechanisms to provide more predictable, lower worst-case delay and jitter, and higher reliability for the transmission of low-delay traffics. Currently, the restricted TWT mechanism mainly introduces two rules in terms of channel access. The two channel access rules include: a non-AP EHT STA, as a transmission opportunity (TXOP) holder, in a case where the TXOP is acquired outside a restricted TWT SP, shall ensure to end its TXOP before the start of any restricted TWT SP; and an EHT AP may schedule a quiet interval overlapping with a restricted TWT SP to block operations of legacy STAs supporting a Quiet element within the TWT SP, wherein the blocking operation within this quiet interval is invalid for non-AP EHT STAs.

For better understanding of the embodiments of the present disclosure, a BSS Load element related to the present disclosure is explained hereinafter.

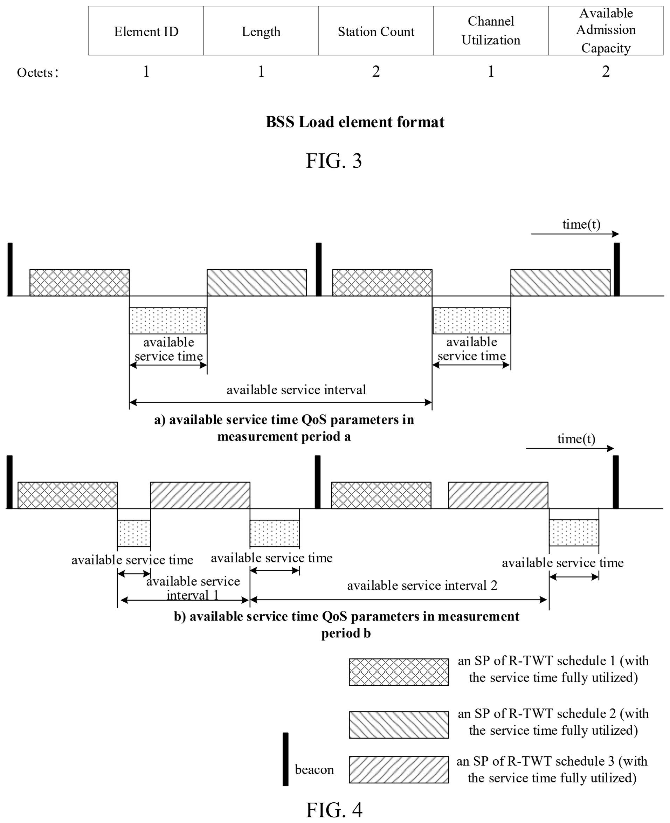

The BSS Load element includes information about the current number of STAs and traffic levels in a BSS. An information format of this element is as illustrated in FIG. 3, i.e., a BSS Load element format as illustrated. During performing a BSS transition, an STA may use the BSS Load element for vendor-specific AP selection algorithms.

In the BSS Load element, a Channel Utilization field is defined as a percentage of time during which an AP senses a medium as busy, represented using a linear scale of 255, wherein "255" denotes 100%. Herein, the medium being busy is indicated by physical or virtual carrier sensing (CS) mechanisms.

An Available Admission Capacity field is represented as an unsigned integer specifying a remaining amount of available medium time via explicit admission control, in units of 32 µs/s. The Available Admission Capacity field assists the BSS transition in selecting an AP that may accept future admission control requests, but does not represent a guarantee that a hybrid coordinator (HC) may admit these requests.

For better understanding of the embodiments of the present disclosure, issues addressed by the present disclosure are explained hereinafter.

Although a restricted TWT operation provides a mechanism for prioritizing the transmission of delay-sensitive traffic flows using pre-scheduled SPs, application effects of the restricted TWT operation in enhancing the transmission of the delay-sensitive traffic flows is limited by factors such as: transmissions by associated EHT STAs that do not support R-TWT in a BSS corresponding to the restricted TWT operation, and/or transmissions by legacy STAs (also referred to as pre-EHT STAs) that do not support quiet intervals in the BSS corresponding to the restricted TWT operation, as well as overlapping basic service sets (OBSSs).

In addition, although a current BSS Load element provides the current BSS load by including information about a current number of STAs and traffic volume levels in the BSS, as well as available admission capacity, resources available for delay-sensitive traffic flow transmission based on scheduling capabilities of an AP fail to be reflected, thus being unfavorable for an STA intending to transmit delay-sensitive traffic flows to select an associated AP or link, a specific R-TWT, and to establish an SCS.

As illustrated in FIG. 4, in measurement periods *a* and *b*, although a value of an Available Admission Capacity field is the same for parameters in the BSS Load element, available service time QoS parameters (e.g., available SP duration, available service interval, etc.) have significant differences, resulting in different levels of support for delay-sensitive traffics.

In view of the above issues, the present disclosure proposes a mechanism for estimating QoS parameters for delay-sensitive traffic flow transmission based on scheduling capabilities of an AP. By providing estimation information on QoS parameters for delay-sensitive traffic flow transmission based on scheduling capabilities of an AP, as well as information on recommended traffic flow characteristic parameters, recommended STA or link operation and capability parameters, and recommended STA or link Rx/Tx capability parameters to meet the estimated QoS parameters for delay-sensitive traffic flow transmission, an STA receiving such information is enabled to use its conveyed contents for the following purposes: first, to select an AP or a link for low-delay traffic flow transmission using an AP or link selection algorithm specific to implementation; second, for a specific AP or link, to select an R-TWT corresponding to a specific R-TWT schedule, wherein the specific R-TWT schedule has been established by the specific AP or link, and the STA intends to join or participate in the specific R-TWT schedule.

For better understanding of the embodiments of the present disclosure, technical solutions of the present disclosure are described in detail hereinafter with reference to specific embodiments. Any combination of related technologies in the following description as optional solutions and the technical solutions of the embodiments of the present disclosure is possible and all such combinations fall within the scope of protection of the embodiments of the present disclosure. The embodiments of the present disclosure include at least some of the following contents.

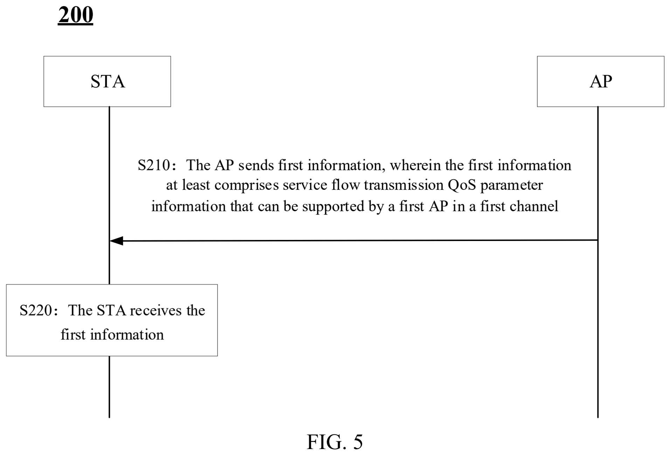

FIG. 5 is a schematic flowchart of a method 200 for wireless communication according to some embodiments of the present disclosure. As illustrated in FIG. 5, the method 200 may include at least some of the following processes.

In S210, an AP transmits first information, wherein the first information includes at least QoS parameter information for traffic flow transmission supported by a first AP on a first channel.

In S220, an STA receives the first information.

It should be understood that although FIG. 5 illustrates steps or operations of the method 200 for wireless communication, these steps or operations are only illustrative, and the embodiments of the present disclosure may also include other operations or variations of the operations in FIG. 5.

In some embodiments, traffic flows described in the embodiments of the present disclosure include at least time-domain sensitive traffic flows (also referred to as low-delay traffic flows). The traffic flows described in the embodiments of the present disclosure may also include traffic flows classified based on other standards, such as traffic flows classified based on QoS levels, data volume, or the like, which is not limited in the present disclosure.

In the embodiments of the present disclosure, the STA may acquire the QoS parameter information for traffic flow transmission supported by the first AP on the first channel, and accordingly, the STA may perform subsequent transmission of traffic flows (e.g., delay-sensitive traffic flows) based on the acquired QoS parameter information for traffic flow transmission supported by the first AP on the first channel, to optimize transmission performances of the traffic flows.

In some embodiments, the first channel may include one or more channels within an operation bandwidth range of a BSS corresponding to the first AP. In some embodiments, the first channel may be a channel on which the first AP is in current operation, or other channels. For example, the first channel may include one or more channels specified by a protocol, or one or more pre-configured channels, or one or more pre-negotiated channels, which is not limited in the present disclosure.

In some embodiments, the first AP may be: the AP that transmits the first information; a neighboring AP of the AP that transmits the first information; another AP in the same co-located AP set as the AP that transmits the first information; or another AP in the same set of a plurality of BSS identifiers (BSSIDs) as the AP that transmits the first information.

For example, in a case where the first AP is different from the AP that transmits the first information, the AP that transmits the first information may acquire the first information or information related to the first information from the first AP.

The embodiments of the present disclosure may be applicable to MLDs.

In an example, S210 may be replaced with a process that: an AP MLD transmits information X, wherein the information X includes at least QoS parameter information for traffic flow transmission supported by the AP MLD on a first channel; and S220 may be replaced with a process that: a non-AP MLD receives the information X. Specifically, the non-AP MLD may perform subsequent transmission of traffic flows (e.g., delay-sensitive traffic flows) based on the acquired QoS parameter information for traffic flow transmission supported by the AP MLD on the first channel, to optimize transmission performances of the traffic flows.

In another example, S210 may be replaced with a process that: an AP MLD transmits information X, wherein the information X includes at least QoS parameter information for traffic flow transmission supported by one or more affiliated APs of the AP MLD on a first channel; and S220 may be replaced with a process that: a non-AP MLD receives the information X. Specifically, the non-AP MLD may perform subsequent transmission of traffic flows (e.g., delay-sensitive traffic flows) based on the acquired QoS parameter information for traffic flow transmission supported by the one or more affiliated APs of the AP MLD on the first channel, to optimize transmission performances of the traffic flows.

In some embodiments, the QoS parameter information for traffic flow transmission supported by the first AP on the first channel is associated with an estimation result of QoS parameters for traffic flow transmission in a first BSS during a first estimation duration.

Specifically, the first AP estimates the QoS parameters for traffic flow transmission (e.g., delay-sensitive traffic flow transmission) in the first BSS during the first estimation duration, to acquire the estimation result of the QoS parameters for traffic flow transmission in the first BSS during the first estimation duration.

For example, the first AP screens out the QoS parameter information for traffic flow transmission supported by the first AP on the first channel, based on the estimation result of the QoS parameters for traffic flow transmission in the first BSS during the first estimation duration.

In some embodiments, the first estimation duration may be: specified in a protocol, configured by the first AP, or configured by a physical AP MLD or logical AP MLD to which the first AP belongs.

In some embodiments, the first estimation duration may include or span a plurality of preset beacon intervals.

In some embodiments, the first BSS may be any BSS corresponding to the first AP, or a specific BSS corresponding to the first AP. For example, the specific BSS is: a BSS where the STA is currently associated; a BSS with the highest number of delay-sensitive traffics in all BSSs corresponding to the first AP; a BSS with the largest volume of delay-sensitive traffics in all BSSs corresponding to the first AP; a BSS with the smallest identifier in all BSSs corresponding to the first AP; a BSS with the largest identifier in all BSSs corresponding to the first AP; any BSS associated with R-TWT in all BSSs corresponding to the first AP; a BSS with the smallest identifier in BSSs associated with R-TWT in all BSSs corresponding to the firstAP; or a BSS with the largest identifier in BSSs associated with R-TWT in all BSSs corresponding to the first AP.

In some embodiments, the estimation result of the QoS parameters for traffic flow transmission in the first BSS during the first estimation duration is associated with one or more available service time parameters in the first BSS during the first estimation duration.

The one or more available service time parameters include, but are not limited to, at least one of: a minimum available service duration, a maximum available service duration, a minimum available service interval, or a maximum available service interval.

For example, the first AP estimates, based on one or more available service time parameters in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include a minimum available service duration. That is, the first AP estimates, based on the minimum available service duration in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include a maximum available service duration. That is, the first AP estimates, based on the maximum available service duration in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include a minimum available service interval. That is, the first AP estimates, based on the minimum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include a maximum available service interval. That is, the first AP estimates, based on the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration and a minimum available service interval. That is, the first AP estimates, based on the minimum available service duration and the minimum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a maximum available service duration and a maximum available service interval. That is, the first AP estimates, based on the maximum available service duration and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration and a maximum available service interval. That is, the first AP estimates, based on the minimum available service duration and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a maximum available service duration and a minimum available service interval. That is, the first AP estimates, based on the maximum available service duration and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration, a maximum available service duration, and a minimum available service interval. That is, the first AP estimates, based on the minimum available service duration, the maximum available service duration, and the minimum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration, a maximum available service duration, and a maximum available service interval. That is, the first AP estimates, based on the minimum available service duration, the maximum available service duration, and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration, a minimum available service interval, and a maximum available service interval. That is, the first AP estimates, based on the minimum available service duration, the minimum available service interval, and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

For example, the one or more available service time parameters in the first BSS during the first estimation duration include: a minimum available service duration, a maximum available service duration, a minimum available service interval, and a maximum available service interval. That is, the first AP estimates, based on the minimum available service duration, the maximum available service duration, the minimum available service interval, and the maximum available service interval in the first BSS during the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission in the first BSS during the first estimation duration.

In some embodiments, the one or more available service time parameters in the first BSS during the first estimation duration are associated with at least one of: scheduling capabilities of the first AP, or channel conditions of the first channel.

Specifically, the first AP determines the one or more available service time parameters in the first BSS during the first estimation duration based on at least one of: the scheduling capabilities of the first AP, or the channel conditions of the first channel.

For example, the first AP determines the one or more available service time parameters in the first BSS during the first estimation duration based on the channel conditions of the first channel, such as actual channel idle time and actual channel busy time of the first channel within the first estimation duration, and a communication status between the AP and the STA within the first estimation duration.

For example, the first AP determines the one or more available service time parameters in the first BSS during the first estimation duration based on the scheduling capabilities of the first AP, such as the AP supports prioritized channel access, R-TWT operations, and other scheduling or control mechanisms.

For example, the first AP determines the one or more available service time parameters in the first BSS during the first estimation duration based on the channel conditions of the first channel (e.g., actual channel idle time and actual channel busy time of the first channel within the first estimation duration, and a communication status between the AP and the STA within the first estimation duration), as well as the scheduling capabilities of the first AP (e.g., the AP supports prioritized channel access, R-TWT operations, and other scheduling or control mechanisms).

In some embodiments, the minimum available service duration may specifically refer to: a minimum amount of service time available for traffic flow transmission during a service interval period in the first BSS within the first estimation duration, which is estimated based on the scheduling capabilities of the first AP and/or the channel conditions of the first channel. Herein, the service interval period refers to a time interval between start moments of two consecutive supported service durations in the first BSS as estimated. For example, the minimum available service duration may be represented as an unsigned integer in time units (TUs).

In some embodiments, the maximum available service duration may specifically refer to: a maximum amount of service time available for traffic flow transmission during a service interval period in the first BSS within the first estimation duration, which is estimated based on the scheduling capabilities of the first AP and/or the channel conditions of the first channel. Herein, the service interval period refers to a time interval between start moments of two consecutive service durations that may be provided in the first BSS as estimated. For example, the maximum available service duration may be represented as an unsigned integer, in units of TU.

In some embodiments, the minimum available service interval may specifically refer to: a minimum time interval between start moments of two consecutive service durations in the first BSS during the first estimation duration, which is estimated based on the scheduling capabilities of the first AP and/or the channel conditions of the first channel. For example, the minimum available service interval may be represented as an unsigned integer, in units of microseconds.

In some embodiments, the maximum available service interval may specifically refer to: a maximum time interval between start moments of two consecutive service durations in the first BSS during the first estimation duration, which is estimated based on the scheduling capabilities of the first AP and/or the channel conditions of the first channel. For example, the minimum available service interval may be represented as an unsigned integer, in units of microseconds.

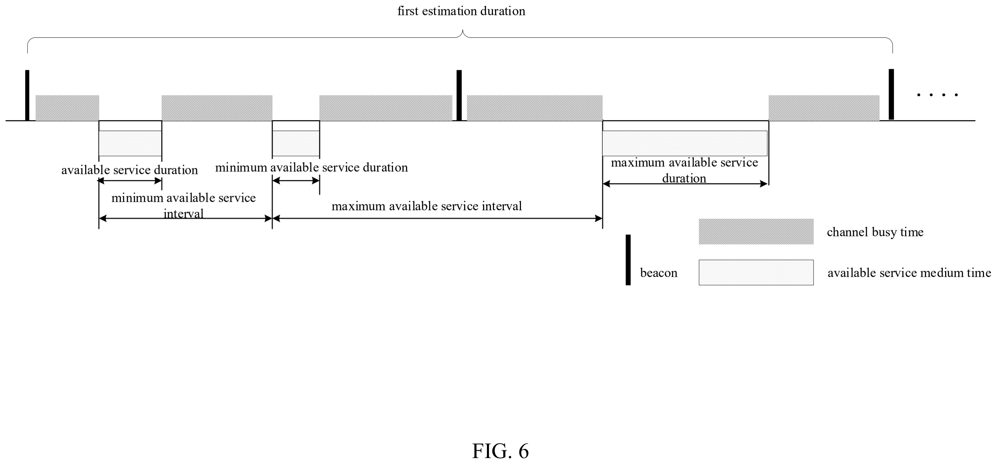

In some embodiments, the QoS parameters (e.g., the minimum available service duration, the maximum available service duration, the minimum available service interval, or the maximum available service interval, or the like) for traffic flow transmission in the first BSS during the first estimation duration (e.g., a plurality of preset beacon intervals) may be estimated, as illustrated in FIG. 6.

In some embodiments, the first information further includes the one or more available service time parameters in the first BSS during the first estimation duration. That is, the first information includes: the QoS parameter information for traffic flow transmission supported by the first AP on the first channel, and the one or more available service time parameters in the first BSS during the first estimation duration.

In some embodiments, the QoS parameter information for traffic flow transmission supported by the first AP on the first channel is associated with an estimation result of QoS parameters for traffic flow transmission during N SPs in the first BSS within the first estimation duration, wherein N is a positive integer.

Specifically, the first AP estimates the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the first AP screens out the QoS parameter information for traffic flow transmission supported by the first AP on the first channel based on the estimation result of the QoS parameters for traffic flow transmission during the N SPs in the first BSS within the first estimation duration.

In some embodiments, the first estimation duration may be: specified in a protocol, configured by the AP that transmits the first information or the first AP, or configured by a physical AP MLD or logical AP MLD to which the first AP belongs.

In some embodiments, the first estimation duration may include or span a plurality of preset beacon intervals.

In some embodiments, the first BSS may be any BSS corresponding to the first AP, or a specific BSS corresponding to the first AP. For example, the specific BSS is: a BSS where the STA is currently associated; a BSS with the highest number of delay-sensitive traffics in all BSSs corresponding to the first AP; a BSS with the largest volume of delay-sensitive traffics in all BSSs corresponding to the first AP; a BSS with the smallest identifier in all BSSs corresponding to the first AP; a BSS with the largest identifier in all BSSs corresponding to the first AP; any BSS associated with R-TWT in all BSSs corresponding to the first AP; a BSS with the smallest identifier in BSSs associated with R-TWT in all BSSs corresponding to the firstAP; or a BSS with the largest identifier in BSSs associated with R-TWT in all BSSs corresponding to the first AP.

In some embodiments, the N SPs are SPs in the first BSS where traffic flow scheduling and transmission are to be performed; or alternatively, the N SPs are SPs in the first BSS where traffic flow scheduling and transmission have been performed.

In some embodiments, the estimation result of the QoS parameters for traffic flow transmission during the N SPs in the first BSS within the first estimation duration is associated with one or more available service time parameters during the N SPs in the first BSS within the first estimation duration.

Herein, the one or more available service time parameters include, but are not limited to, a minimum available service duration, a maximum available service duration, a minimum available service interval, or a maximum available service interval.

For example, the first AP estimates the QoS parameters for traffic flow transmission (e.g., delay-sensitive traffic flow transmission) during N SPs in the first BSS within the first estimation duration based on the one or more available service time parameters during the N SPs in the first BSS within the first estimation duration, to acquire the estimation result of the QoS parameters for traffic flow transmission during the N SPs in the first BSS within the first estimation duration.

For example, the one or more available service time parameters during the N SPs in the first BSS within the first estimation duration include a minimum available service duration. That is, the first AP estimates, based on the minimum available service duration during the N SPs in the first BSS within the first estimation duration, the QoS parameters for traffic flow transmission (e.g., delay-sensitive traffic flow transmission) in the first BSS during the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a maximum available service duration. That is, the first AP estimates, based on the maximum available service duration during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a minimum available service interval. That is, the first AP estimates, based on the minimum available service interval during the N SPs in the first BSS within the first estimation duration, the QoS parameters for traffic flow transmission (e.g., delay-sensitive traffic flow transmission) during the N SPs in the first BSS within the first estimation duration, to acquire the estimation result of the QoS parameters for traffic flow transmission during the N SPs in the first BSS within the first estimation duration.

For example, the one or more available service time parameters during the N SPs in the first BSS within the first estimation duration include a maximum available service interval. That is, the first AP estimates, based on the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire the estimation result of the QoS parameters for traffic flow transmission during the N SPs in the first BSS within the first estimation duration.

For example, the one or more available service time parameters during the N SPs in the first BSS within the first estimation duration include a minimum available service duration and a minimum available service interval. That is, the first AP estimates, based on the minimum available service duration and the minimum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a maximum available service duration and a maximum available service interval. That is, the first AP estimates, based on the maximum available service duration and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a minimum available service duration and a maximum available service interval. That is, the first AP estimates, based on the minimum available service duration and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a maximum available service duration and a minimum available service interval. That is, the first AP estimates, based on the maximum available service duration and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a minimum available service duration, a maximum available service duration, and a minimum available service interval. That is, the first AP estimates, based on the minimum available service duration, the maximum available service duration, and the minimum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a minimum available service duration, a maximum available service duration, and a maximum available service interval. That is, the first AP estimates, based on the minimum available service duration, the maximum available service duration, and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

For example, the one or more available service time parameters during the N SPs in the first BSS within the first estimation duration include a minimum available service duration, a minimum available service interval, and a maximum available service interval. That is, the first AP estimates, based on the minimum available service duration, the minimum available service interval, and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire the estimation result of the QoS parameters for traffic flow transmission during the N SPs in the first BSS within the first estimation duration.

For example, the one or more available service time parameters during the N SPs in the first BSS within the first estimation duration include a minimum available service duration, a maximum available service duration, a minimum available service interval, and a maximum available service interval. That is, the first AP estimates, based on the minimum available service duration, the maximum available service duration, the minimum available service interval, and the maximum available service interval during the N SPs in the first BSS within the first estimation duration, the QoS parameters for traffic flow transmission (e.g., delay-sensitive traffic flow transmission) during the N SPs in the first BSS within the first estimation duration, to acquire or obtain the estimation result of the QoS parameters for traffic flow transmission during the N SPs in the first BSS within the first estimation duration.

In some embodiments, the one or more available service time parameters during the N SPs in the first BSS within the first estimation duration are associated with at least one of: scheduling capabilities of the first AP, or channel conditions of the first channel.

Specifically, the first AP determines the one or more available service time parameters during the N SPs in the first BSS within the first estimation duration based on at least one of: the scheduling capabilities of the first AP, or the channel conditions of the first channel.

For example, the first AP determines the one or more available service time parameters during the N SPs in the first BSS within the first estimation duration based on the channel conditions of the first channel, such as actual channel idle time and actual channel busy time of the first channel within the first estimation duration, and a communication status between the first AP and the STA within the first estimation duration.

For example, the first AP determines the one or more available service time parameters during the N SPs in the first BSS within the first estimation duration based on the scheduling capabilities of the first AP, such as the first AP supports prioritized channel access, R-TWT operations, and other scheduling or control mechanisms.

For example, the first AP determines the one or more available service time parameters during the N SPs in the first BSS within the first estimation duration based on the channel conditions of the first channel (e.g., actual channel idle time and actual channel busy time of the first channel within the first estimation duration, and a communication status between the first AP and the STA within the first estimation duration), as well as the scheduling capabilities of the first AP (e.g., the AP supports prioritized channel access, R-TWT operations, and other scheduling or control mechanisms).

In some embodiments, the N SPs are, within the first estimation duration, R-TWT SPs corresponding to one or more R-TWT schedules, wherein the one or more R-TWT schedules have been established in the first BSS.

In some embodiments, the minimum available service duration may specifically refer to: a minimum amount of service time available within service interval periods for traffic flow transmission during the N SPs, which is estimated based on the scheduling capabilities of the first AP and/or the channel conditions of the first channel. Herein, the service interval period refers to a time interval between start moments of two consecutive supported service durations during the N SPs in the first BSS as estimated. For example, the minimum available service duration may be represented as an unsigned integer, in units of TU.

In some embodiments, the maximum available service duration may specifically refer to: a maximum amount of service time available within service interval periods for traffic flow transmission during the N SPs, which is estimated based on the scheduling capabilities of the first AP and/or the channel conditions of the first channel. Herein, the service interval period refers to a time interval between start moments of two consecutive service durations that may be provided during the N SPs in the first BSS as estimated. For example, the maximum available service duration may be represented as an unsigned integer, in units of TU.

In some embodiments, the minimum available service interval may specifically refer to: a minimum time interval between start moments of two consecutive service durations during the N SPs, which is estimated based on the scheduling capabilities of the first AP and/or the channel conditions of the first channel. For example, the minimum available service interval may be represented as an unsigned integer, in units of microseconds.

In some embodiments, the maximum available service interval may specifically refer to: a maximum time interval between start moments of two consecutive service durations during the N SPs, which is estimated based on the scheduling capabilities of the first AP and/or the channel conditions of the first channel. For example, the minimum available service interval may be represented as an unsigned integer, in units of microseconds.

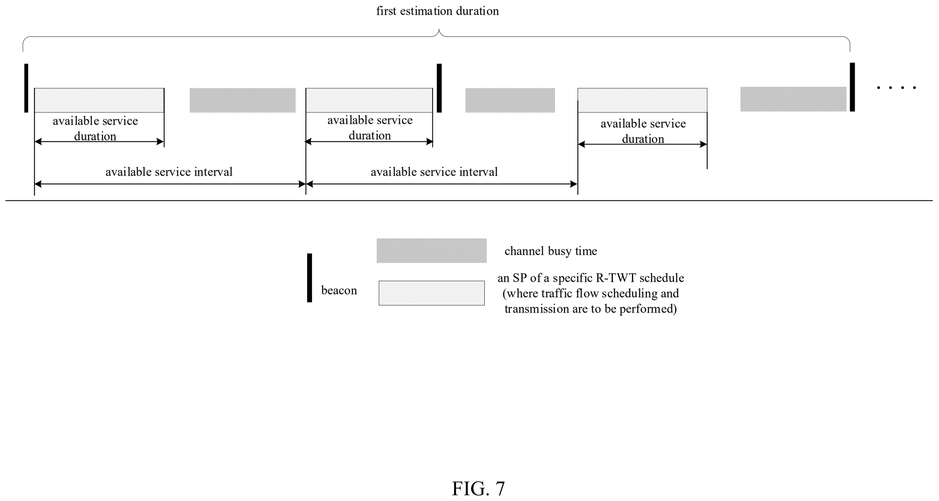

In some embodiments, the QoS parameters for traffic flow transmission during the N SPs where traffic flow scheduling and transmission are to be performed in the first BSS within the first estimation duration may be estimated, as illustrated in FIG. 7. The QoS parameters may include the minimum available service duration, the maximum available service duration, the minimum available service interval, or the maximum available service interval, or the like. The N SPs may include R-TWT SPs corresponding to a specific R-TWT schedule that has been established in the first BSS. The first estimation duration may include a plurality of preset beacon intervals. Specifically, FIG. 7 illustrates a scenario for estimating QoS parameters for traffic flow transmission during SPs of a specific R-TWT schedule (e.g., a newly created R-TWT) where traffic flow scheduling and transmission are to be performed.

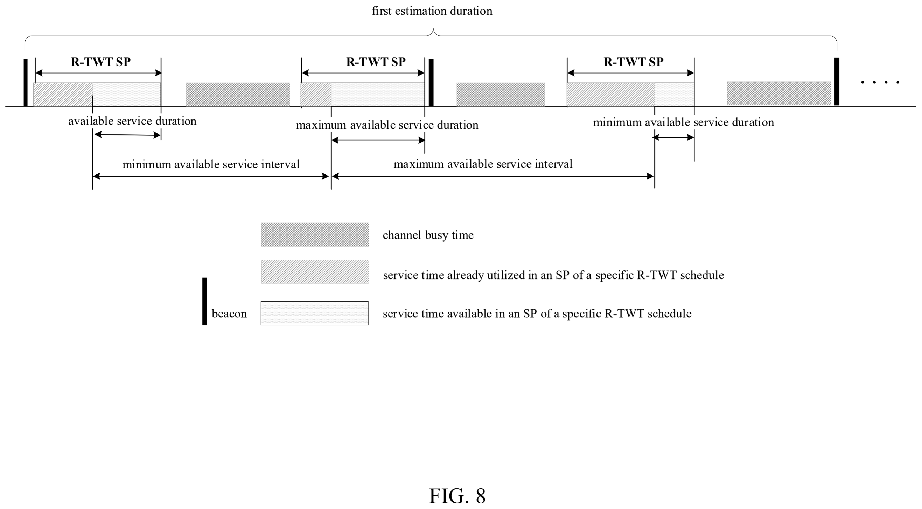

In some embodiments, the QoS parameters for traffic flow transmission during the N SPs where traffic flow scheduling and transmission have been performed in the first BSS within the first estimation duration may be estimated, as illustrated in FIG. 8. The QoS parameters may include the minimum available service duration, the maximum available service duration, the minimum available service interval, or the maximum available service interval, or the like. The N SPs may include R-TWT SPs corresponding to a specific R-TWT schedule that has been established in the first BSS. The first estimation duration may include a plurality of preset beacon intervals. Specifically, FIG. 8 illustrates a scenario for estimating QoS parameters for traffic flow transmission during SPs of a specific R-TWT schedule where corresponding traffic flow scheduling and transmission have been performed.

In some embodiments, the first information further includes the one or more available service time parameters during the N SPs in the first BSS within the first estimation duration. That is, the first information includes: the QoS parameter information for traffic flow transmission supported by the first AP on the first channel, and the one or more available service time parameters during the N SPs in the first BSS within the first estimation duration.

In some embodiments, the STA selects, based on the first information, an AP and/or a link for traffic flow transmission (e.g., delay-sensitive traffic flow transmission). Thus, the STA is capability of selecting an AP and/or a link that is more favorable for the transmission of delay-sensitive traffic flows.

In some embodiments, the STA selects, based on the first information, a broadcast TWT corresponding to a target R-TWT schedule, wherein the target R-TWT schedule has been established by a target AP and the STA intends to join the target R-TWT schedule, and/or the STA selects, based on the first information, a broadcast TWT corresponding to a target R-TWT schedule, wherein the target R-TWT schedule has been established by a target link and the STA intends to join the target R-TWT schedule. Thus, the STA is capability of selecting a broadcast TWT which corresponds to a target R-TWT schedule and is more favorable for traffic flow transmission (e.g., delay-sensitive traffic flow transmission), wherein the target R-TWT schedule has been established by a target AP and the STA intends to join the target R-TWT schedule; or alternatively, the STA is capability of selecting a broadcast TWT which corresponds to a target R-TWT schedule and is more favorable for traffic flow transmission (e.g., delay-sensitive traffic flow transmission), wherein the target R-TWT has been established by a target link and the STA intends to join the target R-TWT schedule.

In some embodiments, the target AP is configured or indicated by the first AP or the AP that transmits the first information, or determined by the STA. For example, the target AP is an AP selected for delay-sensitive traffics, or any AP selected for delay-sensitive traffics.

In some embodiments, the target link is configured or indicated by the first AP or the AP that transmits the first information, or determined by the STA. For example, the target link is a link selected for delay-sensitive traffics, or any link selected for delay-sensitive traffics.

In some embodiments, the target R-TWT schedule is configured or indicated by the first AP or the AP that transmits the first information, or determined by the STA.

For example, the STA selects, based on the first information, an AP and/or a link for traffic flow transmission (e.g., delay-sensitive traffic flow transmission); and selects, based on the first information, a broadcast TWT corresponding to a target R-TWT schedule, wherein the target R-TWT schedule has been established by a target AP and the STA intends to join the target R-TWT schedule.

For example, the STA selects, based on the first information, an AP and/or a link for traffic flow transmission (e.g., delay-sensitive traffic flow transmission); and selects, based on the first information, a broadcast TWT corresponding to a target R-TWT schedule, wherein the target R-TWT schedule has been established by a target link and the STA intends to join the target R-TWT schedule.

For example, the STA selects, based on the first information, an AP and/or a link for traffic flow transmission (e.g., delay-sensitive traffic flow transmission); selects, based on the first information, a broadcast TWT corresponding to a first target R-TWT schedule, wherein the first target R-TWT schedule has been established by a target AP and the STA intends to join the first target R-TWT schedule; and selects, based on the first information, a broadcast TWT corresponding to a second target R-TWT schedule, wherein the second target R-TWT schedule has been established by a target link and the STA intends to join the second target R-TWT schedule.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes, but is not limited to, at least one of the following QoS parameters: an estimated delay bound, an estimated MSDU delivery ratio, an estimated MSDU count exponent, an estimated maximum MSDU size, an estimated burst size, an estimated averaging window, an estimated minimum data rate, or an estimated maximum data rate.

Herein, *m* is a positive integer, and *m* is equal to 1 or *m* is greater than or equal to 2.

In some embodiments, in a case where *m* is greater than or equal to 2, different values are assigned to part or all of the QoS parameters included in different sets of the *m* supported QoS parameter sets for traffic flow transmission.

In some embodiments, a value of *m* is specified by a protocol or determined by the AP.

For example, the estimated delay bound is represented as an unsigned integer used to define a maximum amount of time (in microseconds), as estimated (e.g., based on scheduling capabilities of the first AP and/or channel conditions of the first channel), that may be achieved for the transmission of MSDUs or A-MSDUs for a specific traffic flow. This maximum amount of time is estimated from a moment when an MSDU or a first MSDU of MSDUs constituting an A-MSDU is marked upon arrival at a local (or source) MAC sublayer via a local (or source) MAC SAP, until the completion time when the MSDU or the A-MSDU is successfully transmitted or retransmitted to a destination. The completion time of the transmission of the MSDU or the A-MSDU includes a transmission duration of a corresponding acknowledgment frame.

For example, the estimated MSDU delivery ratio is used to indicate a percentage of MSDUs or A-MSDUs, as estimated (e.g., based on scheduling capabilities of the first AP and/or channel conditions of the first channel), that may be successfully transmitted within the delay bound specified by the "estimated delay bound."

For example, the estimated MSDU count exponent is represented as an unsigned integer that specifies the exponent used to calculate the number of incoming MSDUs for the estimated MSDU delivery ratio. The number of incoming MSDUs is equal to 10 raised to the power of the estimated MSDU count exponent, i.e., 10^{the estimated MSDU count exponent}.

For example, the estimated maximum MSDU size is represented as an unsigned integer that specifies a maximum length (in octets) of an MSDU or an A-MSDU used to estimate the QoS parameters for a traffic flow.

For example, the estimated burst size is represented as an unsigned integer that specifies a maximum burst (in octets) of MSDUs or A-MSDUs, belonging to estimated traffic flows arriving at the MAC SAP, within a duration specified in the estimated delay bound.

For example, the estimated averaging window is represented as an unsigned integer that specifies a duration (in units of TU) used to estimate a minimum data rate and a maximum data rate.

For example, the estimated minimum data rate is represented as an unsigned integer that defines a minimum data rate (in kilobits per second) as estimated, and the minimum data rate is supported for transmitting MSDUs or A-MSDUs of a specific traffic flow at the MAC SAP.

For example, the estimated maximum data rate is represented as an unsigned integer that defines a maximum data rate (in kilobits per second) as estimated, and the maximum data rate is supported for transmitting MSDUs or A-MSDUs of a specific traffic flow at the MAC SAP.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated delay bound. Accordingly, the STA may perform subsequent transmission of traffic flows (e.g., delay-sensitive traffic flows) based on the estimated delay bound supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated MSDU delivery ratio. Accordingly, the STA may perform subsequent transmission of traffic flows (e.g., delay-sensitive traffic flows) based on the estimated MSDU delivery ratio supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated MSDU count exponent. Accordingly, the STA may perform subsequent transmission of traffic flows (e.g., delay-sensitive traffic flows) based on the estimated MSDU count exponent supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated maximum MSDU size. Accordingly, the STA may perform subsequent transmission of traffic flows (e.g., delay-sensitive traffic flows) based on the estimated maximum MSDU size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of in the *m* supported QoS parameter sets for traffic flow transmission includes: an estimated burst size. Accordingly, the STA may perform subsequent transmission of traffic flows (e.g., delay-sensitive traffic flows) based on the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated averaging window. Accordingly, the STA may perform subsequent transmission of traffic flows (e.g., delay-sensitive traffic flows) based on the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffics based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated minimum data rate. Accordingly, the STA may perform subsequent transmission of traffic flows (e.g., delay-sensitive traffic flows) based on the estimated minimum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated maximum data rate. Accordingly, the STA may perform subsequent transmission of traffic flows (e.g., delay-sensitive traffic flows) based on the estimated maximum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated delay bound, and an estimated MSDU delivery ratio. Accordingly, the STA may perform subsequent transmission of traffic flows (e.g., delay-sensitive traffic flows) based on the estimated delay bound and the estimated MSDU delivery ratio supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated delay bound, and an estimated MSDU count exponent. Accordingly, the STA may perform subsequent transmission of traffic flows (e.g., delay-sensitive traffic flows) based on the estimated delay bound and the estimated MSDU count exponent supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated delay bound, and an estimated maximum MSDU size. Accordingly, the STA may perform subsequent transmission of traffic flows (e.g., delay-sensitive traffic flows) based on the estimated delay bound and the estimated maximum MSDU size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission, wherein each of the *m* supported QoS parameter sets for traffic flow transmission includes: an estimated delay bound, and an estimated burst size. Accordingly, the STA may perform subsequent transmission of traffic flows (e.g., delay-sensitive traffic flows) based on the estimated delay bound and the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, and an estimated averaging window. Accordingly, the STA may perform subsequent transmission of traffic flows (e.g., delay-sensitive traffic flows) based on the estimated delay bound and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, and an estimated minimum data rate. Accordingly, the STA may perform subsequent transmission of traffic flows (e.g., delay-sensitive traffic flows) based on the estimated delay bound and the estimated minimum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, and an estimated maximum data rate. Accordingly, the STA may perform subsequent transmission of traffic flows (e.g., delay-sensitive traffic flows) based on the estimated delay bound and the estimated maximum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU delivery ratio, and an estimated burst size. Accordingly, the STA may perform subsequent transmission of traffic flows (e.g., delay-sensitive traffic flows) based on the estimated delay bound, the estimated MSDU delivery ratio, and the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated MSDU count exponent, and an estimated maximum MSDU size. Accordingly, the STA may perform subsequent transmission of traffic flows (e.g., delay-sensitive traffic flows) based on the estimated MSDU count exponent and the estimated maximum MSDU size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated MSDU count exponent, and an estimated burst size. Accordingly, the STA may perform subsequent transmission of traffic flows (e.g., delay-sensitive traffic flows) based on the estimated MSDU count exponent and the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated MSDU count exponent, and an estimated averaging window. Accordingly, the STA may perform subsequent transmission of traffic flows (e.g., delay-sensitive traffic flows) based on the estimated MSDU count exponent and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the m supported QoS parameter sets for traffic flow transmission includes: an estimated MSDU count exponent, and an estimated minimum data rate. Accordingly, the STA may perform subsequent transmission of traffic flows (e.g., delay-sensitive traffic flows) based on the estimated MSDU count exponent and the estimated minimum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated MSDU count exponent, and an estimated maximum data rate. Accordingly, the STA may perform subsequent transmission of traffic flows (e.g., delay-sensitive traffic flows) based on the estimated MSDU count exponent and the estimated maximum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated maximum MSDU size, and an estimated burst size. Accordingly, the STA may perform subsequent transmission of traffic flows (e.g., delay-sensitive traffic flows) based on the estimated maximum MSDU size and the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated maximum MSDU size, and an estimated averaging window. Accordingly, the STA may perform subsequent transmission of traffic flows (e.g., delay-sensitive traffic flows) based on the estimated maximum MSDU size and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated maximum MSDU size, and an estimated minimum data rate. Accordingly, the STA may perform subsequent transmission of traffic flows (e.g., delay-sensitive traffic flows) based on the estimated maximum MSDU size and the estimated minimum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated maximum MSDU size, and an estimated maximum data rate. Accordingly, the STA may perform subsequent transmission of traffic flows (e.g., delay-sensitive traffic flows) based on the estimated maximum MSDU size and the estimated maximum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU count exponent, and an estimated maximum MSDU size. Accordingly, the STA may perform subsequent transmission of traffic flows (e.g., delay-sensitive traffic flows) based on the estimated delay bound, the estimated MSDU count exponent, and the estimated maximum MSDU size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU count exponent, and an estimated burst size. Accordingly, the STA may perform subsequent transmission of traffic flows (e.g., delay-sensitive traffic flows) based on the estimated delay bound, the estimated MSDU count exponent, and the estimated burst size supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU count exponent, and an estimated averaging window. Accordingly, the STA may perform subsequent transmission of traffic flows (e.g., delay-sensitive traffic flows) based on the estimated delay bound, the estimated MSDU count exponent, and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU delivery ratio, an estimated MSDU count exponent, and an estimated averaging window. Accordingly, the STA may perform subsequent transmission of traffic flows (e.g., delay-sensitive traffic flows) based on the estimated delay bound, the estimated MSDU delivery ratio, the estimated MSDU count exponent, and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU delivery ratio, an estimated MSDU count exponent, an estimated burst size, and an estimated averaging window. Accordingly, the STA may perform subsequent transmission of traffic flows (e.g., delay-sensitive traffic flows) based on the estimated delay bound, the estimated MSDU delivery ratio, the estimated MSDU count exponent, the estimated burst size, and the estimated averaging window supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes *m* supported QoS parameter sets for traffic flow transmission. Each of the *m* supported QoS parameter sets for traffic flow transmission includes: an estimated delay bound, an estimated MSDU delivery ratio, an estimated MSDU count exponent, an estimated burst size, an estimated averaging window, an estimated minimum data rate, and an estimated maximum data rate. Accordingly, the STA may perform subsequent transmission of traffic flows (e.g., delay-sensitive traffic flows) based on the estimated delay bound, the estimated MSDU delivery ratio, the estimated MSDU count exponent, the estimated burst size, the estimated averaging window, the estimated minimum data rate, and the estimated maximum data rate supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the QoS parameter information for traffic flow transmission supported by the first AP on the first channel includes an identifier bitmap for supported QoS parameter sets for traffic flow transmission, wherein an i^{th} bit position in the identifier bitmap is configured to indicate whether an i^{th} QoS parameter set for traffic flow transmission, in a list of QoS parameter sets for traffic flow transmission, is supported, i being a positive integer.

In the list of QoS parameter sets for traffic flow transmission, each QoS parameter set for traffic flow transmission includes, but is not limited to, at least one of the following QoS parameters: a delay bound, an MSDU delivery ratio, an MSDU count exponent, a maximum MSDU size, a burst size, an averaging window, a minimum data rate, or a maximum data rate.

For example, a value of 0 at the i^{th} bit position is configured to indicate that the i^{th} QoS parameter set for traffic flow transmission, in the list of QoS parameter sets for traffic flow transmission, is supported; and a value of 1 at the i^{th} bit position is configured to indicate that the i^{th} QoS parameter set for traffic flow transmission, in the list of QoS parameter sets for traffic flow transmission, is supported. Alternatively, a value of 1 at the i^{th} bit position is configured to indicate that the i^{th} QoS parameter set for traffic flow transmission, in the list of QoS parameter sets for traffic flow transmission, is supported; and a value of 0 at the i^{th} bit position is configured to indicate that the i^{th} QoS parameter set for traffic flow transmission, in the list of QoS parameter sets for traffic flow transmission, is supported.

In some embodiments, in the list of QoS parameter sets for traffic flow transmission, part or all of the QoS parameters included in different QoS parameter sets for traffic flow transmission have different values.

For example, the list of QoS parameter sets for traffic flow transmission may be as listed in Table 2, where part or all of the QoS parameters included in different QoS parameter sets for traffic flow transmission in the list of QoS parameter sets have different values.

**Table 2**

| Identifier Of QoS Parameter Set For Traffic flow Transmission | Delay Bound | MSDU Delivery Ratio | MSDU Count Exponent | Maximum MSDU Size | Burst Size | Averaging Window | Minimum Data Rate | Maximum Data Rate |
|---|---|---|---|---|---|---|---|---|
| 0 | X¹₀ | x²₀ | X³₀ | X⁴₀ | X⁵₀ | X⁶₀ | X⁷₀ | X⁸₀ |
| 1 | x¹₁ | X²₁ | X³₁ | X⁴₁ | X⁵₁ | X⁶₁ | X⁷₁ | X⁸₁ |
| 2 | X¹₂ | X²₂ | X³₂ | X⁴₂ | X⁵₂ | X⁶₂ | X⁷₂ | X⁸₂ |
| 3 | X¹₃ | X²₃ | X³₃ | X⁴₃ | X⁵₃ | X⁶₃ | X⁷₃ | X⁸₃ |
| ... | ... | ... | ... | ... | ... | ... | ... | ... |

It should be noted that in Table 2, the types and/or order of the QoS parameters in the QoS parameter set for traffic flow transmission may be adjusted based on requirements, which is not limited in the present disclosure.

Specifically, the STA may perform subsequent transmission of traffic flows (e.g., delay-sensitive traffic flows) based on the identifier bitmap for supported QoS parameter sets for traffic flow transmission. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the identifier bitmap for the supported QoS parameter sets for traffic flow transmission indicates support for a QoS type and/or corresponding QoS characteristics of a service corresponding to traffic flows. For example, a value of 1 at an i^{th} bit position, in the identifier bitmap for the supported QoS parameter sets for traffic flow transmission, indicates that a QoS type and/or corresponding QoS characteristics, of a service corresponding to a value of a QoS identifier being i, are supported. And, a value of 0 at an i^{th} bit position, in the identifier bitmap for the supported QoS parameter sets for traffic flow transmission, indicates that a QoS type and/or corresponding QoS characteristics, of a service corresponding to a value of a QoS identifier being i, are not supported. Herein, the value of the QoS identifier may be defined to identify a service that is typically assumed to be frequently used. Therefore, by establishing a mapping relationship between a value of a QoS identifier and pre-defined or pre-configured (or standardized) service QoS characteristic parameters, a service type and/or QoS characteristics corresponding to the value of the QoS identifier may be determined, such that the identifier bitmap for the supported QoS parameter sets for traffic flow transmission may be used in signaling to reduce signaling overhead. The service QoS characteristic parameters include one or more parameters defined in Format 1 of a Supported Traffic Flow QoS Parameter Information field.

In some embodiments, the list of QoS parameter sets for traffic flow transmission is specified by a protocol or configured by the AP.

In some embodiments, the first information further includes at least one of following information recommended based on the QoS parameter information for traffic flow transmission supported by the first AP on the first channel: operation and capability parameter information for the STA; or reception/transmission (Rx/Tx) parameter information for the STA.

For example, the first information includes operation and capability parameter information recommended for the STA based on the QoS parameter information for traffic flow transmission supported by the first AP on the first channel. Accordingly, the STA may perform subsequent transmission of traffic flows (e.g., delay-sensitive traffic flows) based on the operation and capability parameter information for the STA, wherein the operation and capability parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes Rx/Tx parameter information recommended for the STA based on the QoS parameter information for traffic flow transmission supported by the first AP on the first channel. Accordingly, the STA may perform subsequent transmission of traffic flows (e.g., delay-sensitive traffic flows) based on the Rx/Tx parameter information for the STA, wherein the Rx/Tx parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes operation and capability parameter information and Rx/Tx parameter information that are recommended for the STA based on the QoS parameter information for traffic flow transmission supported by the first AP on the first channel. Accordingly, the STA may perform subsequent transmission of traffic flows (e.g., delay-sensitive traffic flows) based on the operation and capability parameter information and the Rx/Tx parameter information for the STA, wherein the operation and capability parameter information and the Rx/Tx parameter information are recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, and the operation and capability parameter information for the STA. Accordingly, the STA may perform subsequent transmission of traffic flows (e.g., delay-sensitive traffic flows) based on the QoS parameter information for traffic flow transmission supported by the first AP on the first channel, and the operation and capability parameter information for the STA, wherein the operation and capability parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, and the Rx/Tx parameter information for the STA, wherein the Rx/Tx parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the operation and capability parameter information for the STA, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, the operation and capability parameter information for the STA, and the Rx/Tx parameter information for the STA, wherein the operation and capability parameter information, and the Rx/Tx parameter information are recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters in the first BSS during the first estimation duration, and the operation and capability parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters in the first BSS during the first estimation duration, and the operation and capability parameter information for the STA, wherein the operation and capability parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters in the first BSS during the first estimation duration, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters in the first BSS during the first estimation duration, and the Rx/Tx parameter information for the STA, wherein the Rx/Tx parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters in the first BSS during the first estimation duration, the operation and capability parameter information for the STA, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters in the first BSS during the first estimation duration, the operation and capability parameter information for the STA, and the Rx/Tx parameter information for the STA, wherein the operation and capability parameter information, and the Rx/Tx parameter information are recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters during the N SPs in the first BSS within the first estimation duration, and the operation and capability parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters during the N SPs in the first BSS within the first estimation duration, and the operation and capability parameter information for the STA, wherein the operation and capability parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters during the N SPs in the first BSS within the first estimation duration, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters during the N SPs in the first BSS within the first estimation duration, and the Rx/Tx parameter information for the STA, wherein the Rx/Tx parameter information is recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

For example, the first information includes: the QoS parameter information for traffic flow transmission supported by the first AP on the first channel, the one or more available service time parameters during the N SPs in the first BSS within the first estimation duration, the operation and capability parameter information for the STA, and the Rx/Tx parameter information for the STA. Accordingly, the STA may perform subsequent transmission of traffic flows (e.g., delay-sensitive traffic flows) based on the QoS parameter information for traffic flow transmission supported by the first AP on the first channel, the one or more available service time parameters during the N SPs in the first BSS within the first estimation duration, the operation and capability parameter information for the STA, and the Rx/Tx parameter information for the STA, wherein the operation and capability parameter information, and the Rx/Tx parameter information are recommended based on the QoS parameter information for traffic flow transmission supported by the first AP on the first channel. The subsequent transmission by the STA may include: selecting an AP and/or a link for delay-sensitive traffic flow transmission; selecting a broadcast TWT corresponding to a target R-TWT schedule, wherein the target R-TWT schedule has been established by a target AP and the STA intends to join the target R-TWT schedule; or selecting a broadcast TWT corresponding to a target R-TWT schedule, wherein the target R-TWT schedule has been established by a target link and the STA intends to join the target R-TWT. In this way, transmission performances of delay-sensitive traffic based on R-TWT are optimized.

In some embodiments, the operation and capability parameter information for the STA includes, but is not limited to, at least one of:
information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, or information indicating whether the STA supports an SCS traffic descriptor operation for traffic flow transmission.

In some embodiments, the Rx/Tx parameter information for the STA includes, but is not limited to, at least one of:
a number of spatial streams (NSS) supported by the STA for reception or transmission; a modulation and coding scheme (MCS) supported by the STA for reception or transmission; a dual carrier modulation (DCM) supported by the STA for reception or transmission; a resource unit (RU) allocation supported by the STA for reception or transmission; or a bandwidth (BW) supported by the STA for reception or transmission.

Specifically, the Rx/Tx parameter information for the STA includes an NSS supported by the STA for reception or transmission. In an example, the NSS supported by the STA for transmission may refer to a recommended NSS for a PPDU carrying an MSDU or an A-MSDU transmitted from the STA to the AP. In another example, the NSS supported by the STA for reception may refer to a recommended NSS for a PPDU carrying an MSDU or an A-MSDU transmitted from the AP to the STA.

Specifically, the Rx/Tx parameter information for the STA includes an MCS supported by the STA for reception or transmission. In an example, the MCS supported by the STA for transmission may refer to a recommended MCS for spatial streams of a PPDU carrying an MSDU or an A-MSDU transmitted from the STA to the AP. In another example, the NSS supported by the STA for reception may refer to a recommended MCS for spatial streams of a PPDU carrying an MSDU or an A-MSDU transmitted from the AP to the STA.

Specifically, the Rx/Tx parameter information of the STA includes a DCM supported by the STA for reception or transmission. In an example, the DCM supported by the STA for transmission may refer to: whether the DCM is recommended for a PPDU carrying an MSDU or an A-MSDU transmitted from the STA to the AP. In another example, the DCM supported by the STA for reception may refer to: whether the DCM is recommended for a PPDU carrying an MSDU or an A-MSDU transmitted from the AP to the STA.

Specifically, the Rx/Tx parameter information of the STA includes a DCM supported by the STA for reception or transmission. In an example, the RU allocation supported by the STA for transmission may refer to an RU for a PPDU carrying an MSDU or an A-MSDU transmitted from the STA to the AP. In another example, the RU allocation supported by the STA for reception may refer to an RU for a PPDU carrying an MSDU or an A-MSDU transmitted from the AP to the STA.

Specifically, the Rx/Tx parameter information of the STA includes a BW supported by the STA for reception or transmission. In an example, the BW supported by the STA for transmission may refer to a BW for a PPDU carrying an MSDU or an A-MSDU transmitted from the STA to the AP. In another example, the BW supported by the STA for reception may refer to a BW for a PPDU carrying an MSDU or an A-MSDU transmitted from the AP to the STA.

For example, the first information includes: operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes an NSS supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes an MCS supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes a DCM supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, and an MCS supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes information indicating whether the STA supports an R-TWT operation for traffic flow transmission; and the Rx/Tx parameter information for the STA includes: an NSS supported by the STA for reception or transmission, an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes an NSS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, and an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an R-TWT operation based on a trigger-enabled SP for traffic flow transmission; and the Rx/Tx parameter information for the STA includes: an NSS supported by the STA for reception or transmission, an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, and an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, and information indicating whether the STA supports an SCS operation for traffic flow transmission; and the Rx/Tx parameter information for the STA includes: an NSS supported by the STA for reception or transmission, an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, and an MCS supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, and a DCM supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, a DCM supported by the STA for reception or transmission, and an RU allocation supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, a DCM supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an MCS supported by the STA for reception or transmission, a DCM supported by the STA for reception or transmission, an RU allocation supported by the STA for reception or transmission, and a BW supported by the STA for reception or transmission.

For example, the first information includes operation and capability parameter information for the STA and Rx/Tx parameter information for the STA. For example, the operation and capability parameter information for the STA includes: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, and information indicating whether the STA supports an SCS traffic descriptor operation for traffic flow transmission; and the Rx/Tx parameter information for the STA includes: an NSS supported by the STA for reception or transmission, an MCS supported by the STA for reception or transmission, a DCM supported by the STA for reception or transmission, an RU allocation supported by the STA for reception or transmission, and a BW supported by the STA for reception or transmission.

Since the estimation of the QoS parameters for traffic flow transmission is based on the scheduling capabilities of the AP and the channel conditions according to some embodiments, the estimation of the QoS parameters for traffic flow transmission, such as the minimum available service duration, the maximum available service duration, the minimum available service interval, and the maximum available service interval within the estimation duration, may be based on actual channel idle time, actual channel busy time, and communication status between the AP and the STAs of the AP during the estimation duration. Alternatively, the estimation of the QoS parameters for traffic flow transmission may be based on traffic flow transmission capabilities achievable for the scheduling capabilities of the AP, rather than relying on the actual channel idle time and the actual channel busy time. The scheduling capabilities of the AP may include that the AP supports prioritized channel access, R-TWT operations, and other scheduling or control mechanisms.

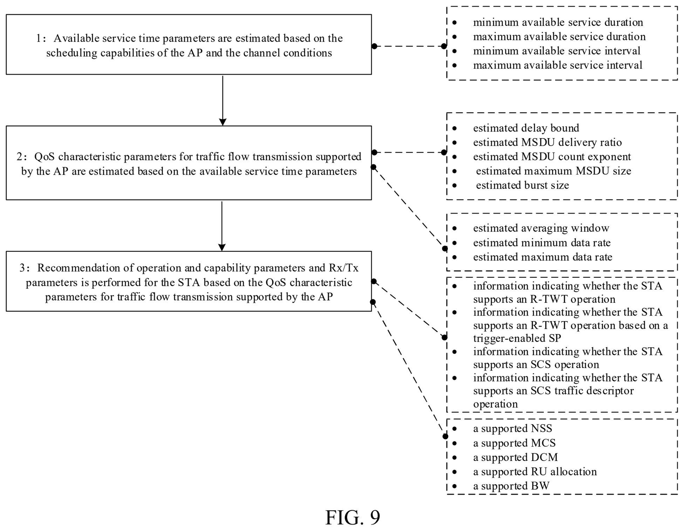

Specifically, as illustrated in FIG. 9, the estimation of the QoS parameters for traffic flow transmission (e.g., delay-sensitive traffic flow transmission), based on the scheduling capabilities of the AP and the channel conditions, mainly includes steps as described hereinafter.
1. Available service time parameters are estimated based on the scheduling capabilities of the AP and the channel conditions. The available service time parameters include: a minimum available service duration, a maximum available service duration, a minimum available service interval, and a maximum available service interval.
2. QoS characteristic parameters for traffic flow transmission supported by the AP are estimated based on the available service time parameters. The estimation may specifically yield an estimated delay bound, an estimated MSDU delivery ratio, an estimated MSDU count exponent, an estimated maximum MSDU size, an estimated burst size, an estimated averaging window, an estimated minimum data rate, and an estimated maximum data rate.
3. Recommendation of operation and capability parameters and Rx/Tx parameters may be performed for the STA based on the QoS characteristic parameters for traffic flow transmission supported by the AP. Specifically, the following information may be recommended: information indicating whether the STA supports an R-TWT operation, information indicating whether the STA supports an R-TWT operation based on a trigger-enabled SP, information indicating whether the STA supports an SCS operation, information indicating whether the STA supports an SCS traffic descriptor operation, a supported NSS, a supported MCS, a supported DCM, a supported RU allocation, and a supported BW.

In some embodiments, the first information is carried by a first element in a first frame.

The first element includes an Estimated Supported Traffic Flow QoS Parameter Information field, wherein the Estimated Supported Traffic Flow QoS Parameter Information field includes at least one of: a Supported Traffic Flow QoS Parameters field, an Available Service Time Parameters field, a Recommended STA Operation and Capability Parameters field, or a Recommended STA Rx/Tx Parameters field.

The Supported Traffic Flow QoS Parameters field is configured to indicate the QoS parameter information for traffic flow transmission supported by the first AP on the first channel.

The Available Service Time Parameters field is configured to indicate one or more available service time parameters during N R-TWT SPs in the first BSS within the first estimation duration, wherein the QoS parameter information for traffic flow transmission supported by the first AP on the first channel is associated with the one or more available service time parameters during the N R-TWT SPs in the first BSS within the first estimation duration, N being a positive integer.

The Recommended STA Operation and Capability Parameters field is configured to indicate operation and capability parameter information recommended for the STA based on the QoS parameter information for traffic flow transmission supported by the first AP on the first channel.

The Recommended STA Rx/Tx Parameters field is configured to indicate Rx/Tx parameter information recommended for the STA based on the QoS parameter information for traffic flow transmission supported by the first AP on the first channel.

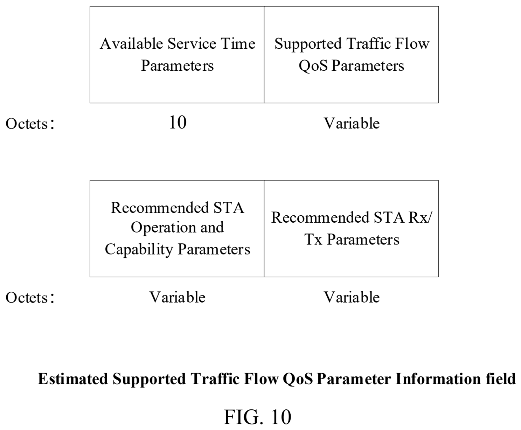

For example, the Estimated Supported Traffic Flow QoS Parameter Information field may be as illustrated in FIG. 10, wherein the Estimated Supported Traffic Flow QoS Parameter Information field may include: a Supported Traffic Flow QoS Parameters field, an Available Service Time Parameters field, a Recommended STA Operation and Capability Parameters field, and a Recommended STA Rx/Tx Parameters field.

In some embodiments, the first element further includes an Estimated Supported Traffic Flow QoS Parameter Control field.

The Estimated Supported Traffic Flow QoS Parameter Control field includes at least one of: a Direction field, a QoS Parameter Set Identifier Bitmap Indicator field, a Supported Traffic Flow QoS Parameter Set Identifier Bitmap Size field, a Number of Supported Traffic Flow QoS Parameters field, a Supported Traffic Flow QoS Parameter Present Bitmap field, a Recommended STA Operation and Capability Parameter Present field, or a Recommended STA Rx/Tx Parameter Present field.

The Direction field is configured to indicate a transmission direction of traffic flow data corresponding to the first element.

The QoS Parameter Set Identifier Bitmap Indicator field is configured to indicate whether the Supported Traffic Flow QoS parameters field uses a Supported Traffic Flow QoS Parameter Set Identifier Bitmap field to indicate the QoS parameter information for traffic flow transmission supported by the first AP on the first channel.

In a case where the Supported Traffic Flow QoS Parameters field uses the Supported Traffic Flow QoS Parameter Set Identifier Bitmap field to indicate the QoS parameter information for traffic flow transmission supported by the first AP on the first channel, the Supported Traffic Flow QoS Parameter Set Identifier Bitmap Size field is configured to indicate a size of an identifier bitmap for supported QoS parameter sets for traffic flow transmission.

In a case where the Supported Traffic Flow QoS Parameters field uses a Supported Traffic Flow QoS Parameter Set field to indicate the QoS parameter information for traffic flow transmission supported by the first AP on the first channel, the Number of Supported Traffic Flow QoS Parameters field is configured to indicate a number of supported QoS parameters for traffic flow transmission in the Supported Traffic Flow QoS Parameter Set field.

In the case where the Supported Traffic Flow QoS Parameters field uses a Supported Traffic Flow QoS Parameter Set field to indicate the QoS parameter information for traffic flow transmission supported by the first AP on the first channel, the Supported Traffic Flow QoS Parameter Present Bitmap field is configured to indicate whether at least one field in the Supported Traffic Flow QoS Parameter Set field is present.

The Recommended STA Operation and Capability Parameter Present field is configured to indicate whether the Estimated Supported Traffic Flow QoS Parameter Information field includes the Recommended STA Operation and Capability Parameters field.

The Recommended STA Rx/Tx Parameter Present field is configured to indicate whether the Estimated Supported Traffic Flow QoS Parameter Information field includes the Recommended STA Rx/Tx Parameters field.

In some embodiments, the Direction field may occupy 2 bits, and the encoding of the Direction field may be as listed in Table 3 or Table 4.

**Table 3 Direction Field Encoding**

| B0 | B1 | Meaning |
|---|---|---|
| 0 | 0 | Uplink: The MSDU or A-MSDU of the traffic flow is estimated as being transmitted from the STA to the AP |
| 0 | 1 | Downlink: The MSDU or A-MSDU of the traffic flow is estimated as being transmitted from the AP to the STA |
| 1 | 0 | Reserved |
| 1 | 1 | Bidirectional (i.e., either uplink or downlink): The MSDU or A-MSDU of the traffic flow is estimated as being transmitted either from the AP to the STA or from the STA to the AP |

**Table 4: Direction Field Encoding**

| B0 | B1 | Meaning |
|---|---|---|
| 0 | 0 | Uplink: The MSDU or A-MSDU of the traffic flow is estimated as being transmitted from the STA to the AP |
| 0 | 1 | Downlink: The MSDU or A-MSDU of the traffic flow is estimated as being transmitted from the AP to the STA |
| 1 | 0 | Bidirectional (i.e., either uplink or downlink): The MSDU or A-MSDU of the traffic flow is estimated as being transmitted either from the AP to the STA or from the STA to the AP |
| 1 | 1 | Reserved |

It should be noted that the meanings represented by each bit in Tables 3 and 4 above may be flexibly adjusted based on requirements.

Specifically, the QoS Parameter Set Identifier Bitmap Indicator field is configured to indicate whether the Supported Traffic Flow QoS parameters field in the Estimated Supported Traffic Flow QoS Parameter field uses a Supported Traffic Flow QoS Parameter Set Identifier Bitmap field. For example, the QoS Parameter Set Identifier Bitmap Indicator field occupies 1 bit, and in a case where this bit is set to 1, the QoS Parameter Set Identifier Bitmap Indicator field indicates that the Supported Traffic Flow QoS Parameter Set Identifier Bitmap field is used; or in a case where this bit is set to 0, the QoS Parameter Set Identifier Bitmap Indicator field indicates that the Supported Traffic Flow QoS Parameter Set Identifier Bitmap field is not used. Alternatively, in a case where this bit is set to 0, the QoS Parameter Set Identifier Bitmap Indicator field indicates that the Supported Traffic Flow QoS Parameter Set Identifier Bitmap field is used; or in a case where this bit is set to 1, the QoS Parameter Set Identifier Bitmap Indicator field indicates that the Supported Traffic Flow QoS Parameter Set Identifier Bitmap field is not used.

In some embodiments, the Supported Traffic Flow QoS Parameter Set Identifier Bitmap Size field and the Number of Supported Traffic Flow QoS Parameters field share a plurality of bits.

In a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the plurality of bits correspond only to the Supported Traffic Flow QoS Parameter Set Identifier Bitmap Size field; and/or in a case where the QoS Parameter Set Identifier Bitmap Indicator field is configured to indicate that the Supported Traffic Flow QoS Parameters field does not use the Supported Traffic Flow QoS Parameter Set Identifier Bitmap field to indicate the QoS parameter information for traffic flow transmission supported by the first AP on the first channel, the plurality of bits correspond only to the Number of Supported Traffic Flow QoS Parameters field.

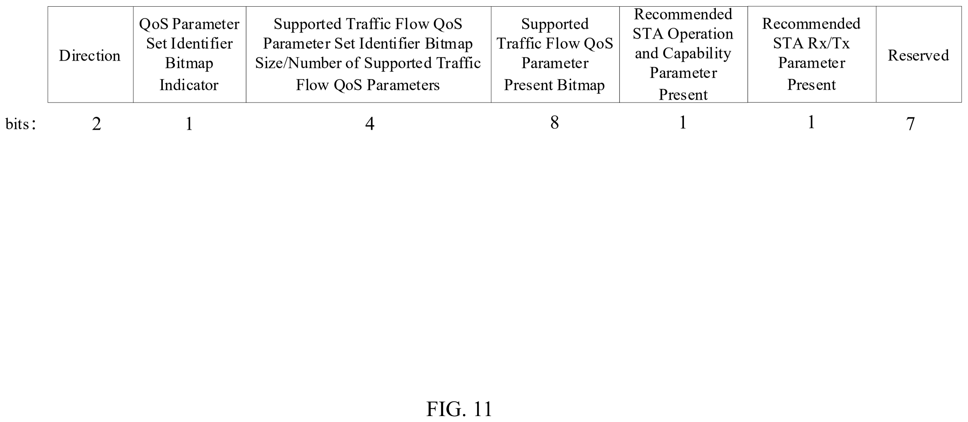

For example, the Estimated Supported Traffic Flow QoS Parameter Control field may be as illustrated in FIG. 11. The Estimated Supported Traffic Flow QoS Parameter Control field may include: a Direction field (occupying 2 bits), a QoS Parameter Set Identifier Bitmap Indicator field (occupying 1 bit), a Supported Traffic Flow QoS Parameter Set Identifier Bitmap Size field/Number of Supported Traffic Flow QoS Parameters field (occupying 4 bits), a Supported Traffic Flow QoS Parameter Present Bitmap field (occupying 8 bits), a Recommended STA Operation and Capability Parameter Present field (occupying 1 bit), and a Recommended STA Rx/Tx Parameter Present field (occupying 1 bit).

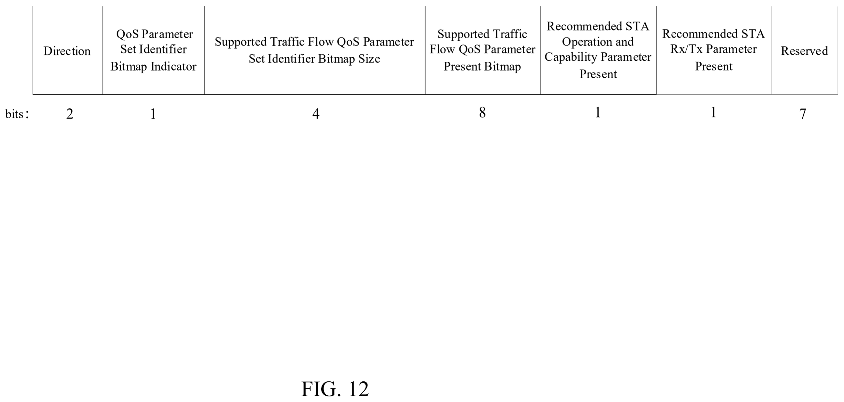

For example, in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the Estimated Supported Traffic Flow QoS Parameter Control field may be as illustrated in FIG. 12. The Estimated Supported Traffic Flow QoS Parameter Control field may include: a Direction field (occupying 2 bits), a QoS Parameter Set Identifier Bitmap Indicator field (occupying 1 bit), a Supported Traffic Flow QoS Parameter Set Identifier Bitmap Size field (occupying 4 bits), a Supported Traffic Flow QoS Parameter Present Bitmap field (occupying 8 bits), a Recommended STA Operation and Capability Parameter Present field (occupying 1 bit), and a Recommended STA Rx/Tx Parameter Present field (occupying 1 bit).

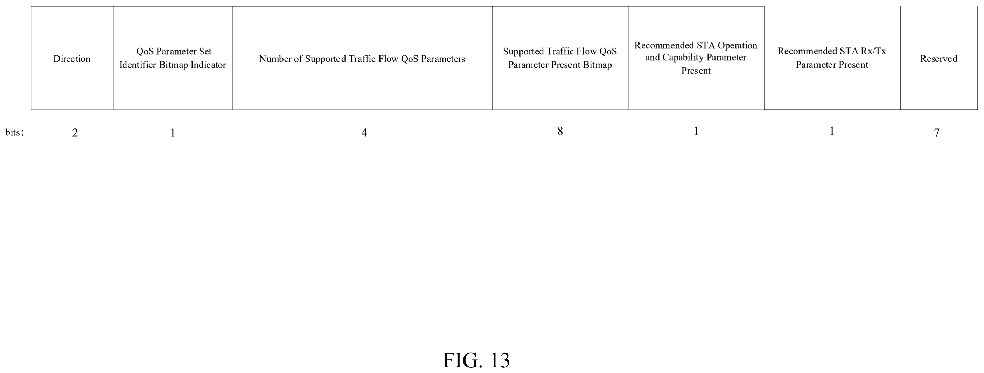

For example, in the case where the QoS Parameter Set Identifier Bitmap Indicator field is configured to indicate that the Supported Traffic Flow QoS Parameters field does not use the Supported Traffic Flow QoS Parameter Set Identifier Bitmap field to indicate the QoS parameter information for traffic flow transmission supported by the first AP on the first channel, the Estimated Supported Traffic Flow QoS Parameter Control field may be as illustrated in FIG. 13. The Estimated Supported Traffic Flow QoS Parameter Control field may include: a Direction field (occupying 2 bits), a QoS Parameter Set Identifier Bitmap Indicator field (occupying 1 bit), a Number of Supported Traffic Flow QoS Parameters field (occupying 4 bits), a Supported Traffic Flow QoS Parameter Present Bitmap field (occupying 8 bits), a Recommended STA Operation and Capability Parameter Present field (occupying 1 bit), and a Recommended STA Rx/Tx Parameter Present field (occupying 1 bit).

Specifically, the Recommended STA Operation and Capability Parameter Present field indicates whether the Recommended STA Operation and Capability Parameters field is present in the Estimated Supported Traffic Flow QoS Parameter Information field. In a case where the Recommended STA Operation and Capability Parameter Present field is set to 1, the Recommended STA Operation and Capability Parameters field is present in the Estimated Supported Traffic Flow QoS Parameter Information field; or in a case where the Recommended STA Operation and Capability Parameter Present field is set to 0, the Recommended STA Operation and Capability Parameters field is absent in the Estimated Supported Traffic Flow QoS Parameter Information field. Alternatively, in a case where the Recommended STA Operation and Capability Parameter Present field is set to 0, the Recommended STA Operation and Capability Parameters field is present in the Estimated Supported Traffic Flow QoS Parameter Information field; or in a case where the Recommended STA Operation and Capability Parameter Present field is set to 1, the Recommended STA Operation and Capability Parameters field is absent in the Estimated Supported Traffic Flow QoS Parameter Information field.

Specifically, the Recommended STA Rx/Tx Parameter Present field indicates whether the Recommended STA Rx/Tx Parameters field is present in the Estimated Supported Traffic Flow QoS Parameter Information field. In a case where the Recommended STA Rx/Tx Parameter Present field is set to 1, the Recommended STA Rx/Tx Parameters field is present in the Estimated Supported Traffic Flow QoS Parameter Information field; or in a case where the Recommended STA Rx/Tx Parameter Present field is set to 0, the Recommended STA Rx/Tx Parameters field is absent in the Estimated Supported Traffic Flow QoS Parameter Information field. Alternatively, in a case where the Recommended STA Rx/Tx Parameter Present field is set to 0, the Recommended STA Rx/Tx Parameters field is present in the Estimated Supported Traffic Flow QoS Parameter Information field; or in a case where the Recommended STA Rx/Tx Parameter Present field is set to 1, the Recommended STA Rx/Tx Parameters field is absent in the Estimated Supported Traffic Flow QoS Parameter Information field.

In some embodiments, in the case where the QoS Parameter Set Identifier Bitmap Indicator field is configured to indicate that the Supported Traffic Flow QoS Parameters field does not use the Supported Traffic Flow QoS Parameter Set Identifier Bitmap field to indicate the QoS parameter information for traffic flow transmission supported by the first AP on the first channel, the Supported Traffic Flow QoS Parameters field includes m Supported Traffic Flow QoS Parameter Set fields, wherein *m* is a positive integer, and *m* is equal to 1 or *m* is greater than 2 or equal to 2.

Each of the m Supported Traffic Flow QoS Parameter Set fields includes at least one of: an Estimated Delay Bound field, an Estimated MSDU Delivery Ratio field, an Estimated MSDU Count Exponent field, an Estimated Maximum MSDU Size field, an Estimated Burst Size field, an Estimated Averaging Window field, an Estimated Minimum Data Rate field, or an Estimated Maximum Data Rate field;

The Estimated Delay Bound field is configured to indicate an estimated delay bound. The Estimated MSDU Delivery Ratio field is configured to indicate an estimated MSDU delivery ratio. The Estimated MSDU Count Exponent field is configured to indicate an estimated MSDU count exponent. The Estimated Maximum MSDU Size field is configured to indicate an estimated maximum MSDU size. The Estimated Burst Size field is configured to indicate an estimated burst size. The Estimated Averaging Window field is configured to indicate an estimated averaging window. The Estimated Minimum Data Rate field is configured to indicate an estimated minimum data rate. The Estimated Maximum Data Rate field is configured to indicate an estimated maximum data rate.

In some embodiments, in a case where m is greater than or equal to 2, different values are assigned to part or all of QoS parameters indicated by different Supported Traffic Flow QoS Parameter Set fields in the m Supported Traffic Flow QoS Parameter Set fields.

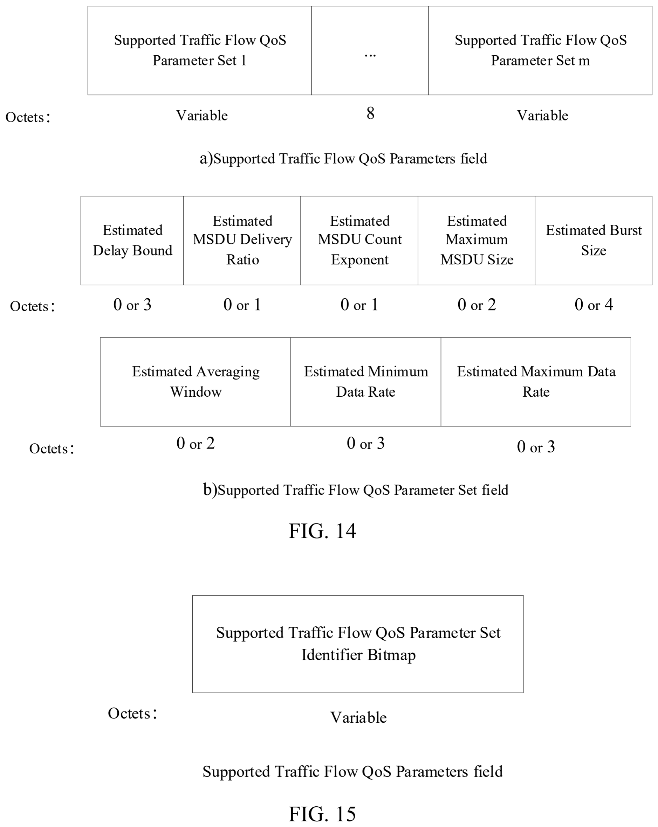

Specifically, in the case where the QoS Parameter Set Identifier Bitmap Indicator field is configured to indicate that the Supported Traffic Flow QoS Parameters field does not use the Supported Traffic Flow QoS Parameter Set Identifier Bitmap field to indicate the QoS parameter information for traffic flow transmission supported by the first AP on the first channel, the Supported Traffic Flow QoS Parameters field may be as illustrated in FIG. 14. The Supported Traffic Flow QoS Parameters field may include m Supported Traffic Flow QoS Parameter Set fields, wherein each of the m Supported Traffic Flow QoS Parameter Set fields includes at least one of: an Estimated Delay Bound field (occupying 0 or 3 octets, i.e., the field is optional), an Estimated MSDU Delivery Ratio field (occupying 0 or 1 octet, i.e., the field is optional), an Estimated MSDU Count Exponent field (occupying 0 or 1 octet, i.e., the field is optional), an Estimated Maximum MSDU Size field (occupying 0 or 2 octets, i.e., the field is optional), an Estimated Burst Size field (occupying 0 or 4 octets, i.e., the field is optional), an Estimated Averaging Window field (occupying 0 or 2 octets, i.e., the field is optional), an Estimated Minimum Data Rate field (occupying 0 or 3 octets, i.e., the field is optional), or an Estimated Maximum Data Rate field (occupying 0 or 3 octets, i.e., the field is optional).

In some embodiments, at least one field corresponding to the Supported Traffic Flow QoS Parameter Present Bitmap field as illustrated in FIGS. 11 to 13 includes part or all of:
the Estimated Delay Bound field, the Estimated MSDU Delivery Ratio field, the Estimated MSDU Count Exponent field, the Estimated Maximum MSDU Size field, the Estimated Burst Size field, the Estimated Averaging Window field, the Estimated Minimum Data Rate field, or the Estimated Maximum Data Rate field.

Specifically, the Supported Traffic Flow QoS Parameter Present Bitmap field includes a bitmap as illustrated in FIGS. 11 to 13. In a case where an i^{th} field starting from the "Estimated Delay Bound" field is present in the Supported Traffic Flow QoS Parameter Set field, an i^{th} bit of the bitmap is set to 1; or, in a case where an i^{th} field starting from the "Estimated Delay Bound" field is absent in the Supported Traffic Flow QoS Parameter Set field, an i^{th} bit of the bitmap is set to 0.

Specifically, the Estimated Delay Bound field is represented as an unsigned integer that is used to define a maximum amount of time (in microseconds), as estimated (e.g., based on scheduling capabilities of an AP and/or channel conditions), that may be achieved for the transmission of MSDUs or A-MSDUs for a specific traffic flow. This maximum amount of time is estimated from a moment when an MSDU or a first MSDU of MSDUs constituting an A-MSDU is marked upon arrival at a local (or source) MAC sublayer via a local (or source) MAC SAP, until the completion time when the MSDU or the A-MSDU is successfully transmitted or retransmitted to a destination. The completion time of the transmission of the MSDU or the A-MSDU includes a transmission duration of a corresponding acknowledgment frame.

Specifically, the Estimated MSDU Delivery Ratio field is configured to indicate a percentage of MSDUs or A-MSDUs, as estimated (e.g., based on scheduling capabilities of an AP and channel conditions), that may be successfully transmitted within the delay bound specified by the "Estimated Delay Bound field." The Estimated MSDU Delivery Ratio subfields may be encoded as listed in Table 5, i.e., values of the Estimated MSDU Delivery Ratio subfields as listed.

**Table 5: Values of Estimated MSDU Delivery Ratio Field**

| Value of Estimated MSDU Delivery Ratio Field | Estimated MSDU Delivery Ratio |
|---|---|
| 0 | Not specified |
| 1 | 95% |
| 2 | 96% |
| 3 | 97% |
| 4 | 98% |
| 5 | 99% |
| 6 | 99.9% |
| 7 | 99.99% |
| 8 | 99.999% |
| 9 | 99.9999% |
| 10-15 | Reserved |

Specifically, the Estimated MSDU Count Exponent field is represented as an unsigned integer that specifies the exponent used to calculate the number of incoming MSDUs for the estimated MSDU delivery ratio. The number of incoming MSDUs is equal to 10 raised to the power of the estimated MSDU count exponent.

Specifically, the Estimated Maximum MSDU Size field is represented as an unsigned integer that specifies a maximum length (in octets) of an MSDU or A-MSDU used to estimate QoS parameters for a traffic flow.

Specifically, the Estimated Burst Size field is represented as an unsigned integer that specifies a maximum burst (in octets) of MSDUs or A-MSDUs, belonging to a traffic flow arriving at the MAC SAP, within a duration specified in the Estimated Delay Bound field.

Specifically, the Estimated Averaging Window field is represented as an unsigned integer that specifies a duration (in units of TU) used to estimate a minimum data rate and a maximum data rate.

Specifically, the Estimated Minimum Data Rate field is represented as an unsigned integer that is used to define a minimum data rate (in kilobits per second) as estimated, and the minimum data rate is supported for transmitting MSDUs or A-MSDUs of a specific traffic flow at the MAC SAP.

Specifically, the Estimated Maximum Data Rate field is represented as an unsigned integer that is used to define a maximum data rate (in kilobits per second) as estimated, and the maximum data rate is supported for transmitting MSDUs or A-MSDUs of a specific traffic flow at the MAC SAP.

In some embodiments, in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the Supported Traffic Flow QoS Parameters field includes the Supported Traffic Flow QoS Parameter Set Identifier Bitmap field.

An i^{th} bit position in the Supported Traffic Flow QoS Parameter Set Identifier Bitmap field is configured to indicate whether an i^{th} QoS parameter set for traffic flow transmission, in a list of QoS parameter sets for traffic flow transmission, is supported, wherein i is a positive integer.

In the list of QoS parameter sets for traffic flow transmission, each QoS parameter set for traffic flow transmission includes at least one of the following QoS parameters: a delay bound, an MSDU delivery ratio, an MSDU count exponent, a maximum MSDU size, a burst size, an averaging window, a minimum data rate, or a maximum data rate.

In the list of QoS parameter sets for traffic flow transmission, part or all of the QoS parameters included in different QoS parameter sets for traffic flow transmission have different values.

Specifically, in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the Supported Traffic Flow QoS Parameters field may be as illustrated in FIG. 15.

Specifically, the QoS Parameter Set Identifier Bitmap Indicator field is configured to indicate whether the Supported Traffic Flow QoS Parameters field in the Estimated Supported Traffic Flow QoS Parameter Information field uses the Supported Traffic Flow QoS Parameter Set Identifier Bitmap field. For example, the QoS Parameter Set Identifier Bitmap Indicator field occupies 1 bit. Setting the QoS Parameter Set Identifier Bitmap Indicator field to 1 indicates that the Supported Traffic Flow QoS Parameter Set Identifier Bitmap field is used, and the Supported Traffic Flow QoS Parameters field may be as illustrated in FIG. 15; or setting the QoS Parameter Set Identifier Bitmap Indicator field to 0 indicates that the Supported Traffic Flow QoS Parameter Set Identifier Bitmap field is not used, and the Supported Traffic Flow QoS Parameters field may be as illustrated in FIG. 14. Alternatively, setting the QoS Parameter Set Identifier Bitmap Indicator field to 0 indicates that the Supported Traffic Flow QoS Parameter Set Identifier Bitmap field is used, and the Supported Traffic Flow QoS Parameters field may be as illustrated in FIG. 15; or setting the QoS Parameter Set Identifier Bitmap Indicator field to 1 indicates that the Supported Traffic Flow QoS Parameter Set Identifier Bitmap field is not used, and the Supported Traffic Flow QoS Parameters field may be as illustrated in FIG. 14.

In some embodiments, the Supported Traffic Flow QoS Parameter Set Identifier Bitmap field indicates support for a QoS type and/or corresponding QoS characteristics of a service corresponding to traffic flows. A value of 1 at an i^{th} bit position of the Supported Traffic Flow QoS Parameter Set Identifier Bitmap field indicates that a QoS type and/or corresponding QoS characteristics, of a service corresponding to a value of a QoS identifier being i, are supported. And, a value of 0 at an i^{th} bit position of the Supported Traffic Flow QoS Parameter Set Identifier Bitmap field indicates that a QoS type and/or corresponding QoS characteristics, of a service corresponding to a value of a QoS identifier being i, are not supported. Herein, the value of the QoS identifier may be defined to identify a service that is typically assumed to be frequently used. Therefore, by establishing a mapping relationship between a value of a QoS identifier and predefined or pre-configured (or standardized) service QoS characteristic parameters (including one or more parameters as defined in the Supported Traffic Flow QoS Parameters field as illustrated in FIG. 14), a service type and/or QoS characteristics corresponding to the value of the QoS identifier may be determined, such that the value of the QoS identifier may be used in signaling to reduce signaling overhead.

In some embodiments, the list of QoS parameter sets for traffic flow transmission is specified by a protocol or configured by the AP.

In some embodiments, the Available Service Time Parameters field includes at least one of: a Minimum Available Service Duration field, a Maximum Available Service Duration field, a Minimum Available Service Interval field, or a Maximum Available Service Interval field;

The Minimum Available Service Duration field is configured to indicate a minimum available service duration. The Maximum Available Service Duration field is configured to indicate a maximum available service duration. The Minimum Available Service Interval field is configured to indicate a minimum available service interval. The Maximum Available Service Interval field is configured to indicate a maximum available service interval.

Specifically, the Minimum Available Service Duration field indicates a minimum amount of service time available for traffic flow transmission during a service interval period, estimated based on scheduling capabilities of an AP and/or channel conditions. Herein, the service interval period refers to a time interval between start moments of two consecutive supported service durations as estimated. The Minimum Available Service Duration field may be represented as an unsigned integer, in units of TU.

Specifically, the Maximum Available Service Duration field indicates a maximum amount of service time available for traffic flow transmission during a service interval period, estimated based on scheduling capabilities of an AP and/or channel conditions. Herein, the service interval period refers to a time interval between start moments of two consecutive service durations that may be provided as estimated. The Maximum Available Service Duration field may be represented as an unsigned integer, in units of TU.

Specifically, the Minimum Available Service Interval field indicates a minimum time interval between start moments of two consecutive supported service durations, estimated based on scheduling capabilities of an AP and/or channel conditions. The Minimum Available Service Interval field may be represented as an unsigned integer, in units of microseconds.

Specifically, the Maximum Available Service Interval field indicates a maximum time interval between start moments of two consecutive supported service durations, estimated based on scheduling capabilities of an AP and/or channel conditions. The Maximum Available Service Interval field may be represented as an unsigned integer, in units of microseconds.

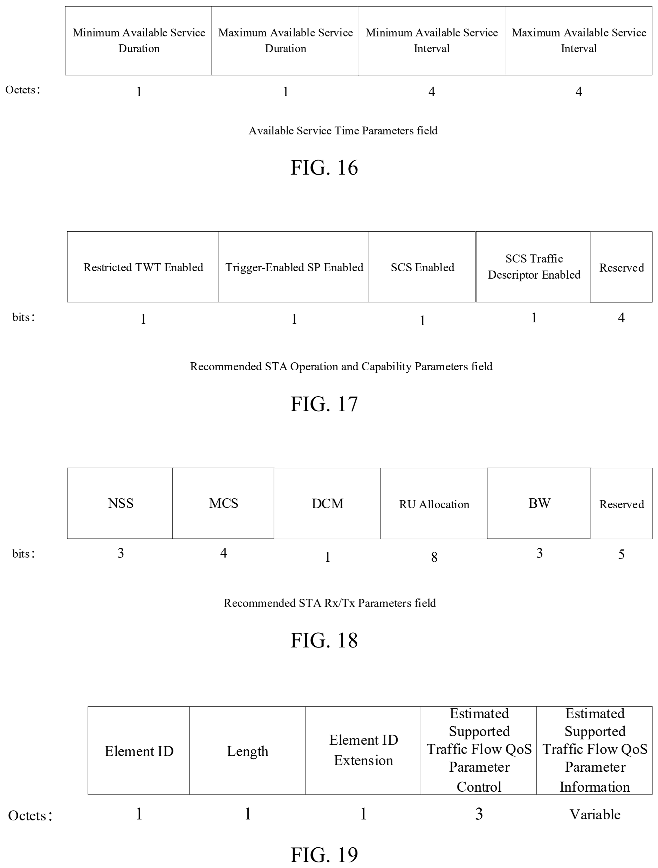

For example, the Available Service Time Parameters field may be as illustrated in FIG. 16. The Available Service Time Parameters field may include: a Minimum Available Service Duration field (occupying 1 octet), a Maximum Available Service Duration field (occupying 1 octet), a Minimum Available Service Interval field (occupying 4 octets), and a Maximum Available Service Interval field (occupying 4 octets).

In some embodiments, the Recommended STA Operation and Capability Parameters field includes, but is not limited to, at least one of: a Restricted TWT Enabled field, a Trigger-Enabled SP Enabled field, an SCS Enabled field, or an SCS Traffic Descriptor Enabled field;

The Restricted TWT Enabled field is configured to indicate whether the STA supports an R-TWT operation for traffic flow transmission. The Trigger-Enabled SP Enabled field is configured to indicate whether the STA supports an R-TWT operation based on a trigger-enabled SP for traffic flow transmission. The SCS Enabled field is configured to indicate whether the STA supports an SCS operation for traffic flow transmission. The SCS Traffic Descriptor Enabled field is configured to indicate whether the STA supports an SCS Traffic descriptor operation for traffic flow transmission.

Specifically, the Restricted TWT Enabled field may occupy 1 bit. A value of the Restricted TWT Enabled field being 0 indicates that the STA supports an R-TWT operation for traffic flow transmission; or a value of the Restricted TWT Enabled field being 1 indicates that the STA does not support an R-TWT operation for traffic flow transmission. Alternatively, a value of the Restricted TWT Enabled field being 1 indicates that the STA supports an R-TWT operation for traffic flow transmission; or a value of the Restricted TWT Enabled field being 0 indicates that the STA does not support an R-TWT operation for traffic flow transmission.

Specifically, the Trigger-Enabled SP Enabled field may occupy 1 bit. A value of the Trigger-Enabled SP Enabled field being 0 indicates that the STA supports an R-TWT operation based on a trigger-enabled SP for traffic flow transmission; or a value of the Trigger-Enabled SP Enabled field being 1 indicates that the STA does not support an R-TWT operation based on a trigger-enabled SP for traffic flow transmission. Alternatively, a value of the Trigger-Enabled SP Enabled field being 1 indicates that the STA supports an R-TWT operation based on a trigger-enabled SP for traffic flow transmission; or a value of the Trigger-Enabled SP Enabled field being 0 indicates that the STA does not support an R-TWT operation based on a trigger-enabled SP for traffic flow transmission.

Specifically, the SCS Enabled field may occupy 1 bit. A value of the SCS Enabled field being 0 indicates that the STA supports an SCS operation for traffic flow transmission; or a value of the SCS Enabled field being 1 indicates that the STA does not support an SCS operation for traffic flow transmission. Alternatively, a value of the SCS Enabled field being 1 indicates that the STA supports an SCS operation for traffic flow transmission; or a value of the SCS Enabled field being 0 indicates that the STA does not support an SCS operation for traffic flow transmission.

Specifically, the SCS Traffic Descriptor Enabled field may occupy 1 bit. A value of the SCS Traffic Descriptor Enabled field being 0 indicates that the STA supports an SCS traffic descriptor operation for traffic flow transmission; or a value of the SCS Traffic Descriptor Enabled field being 1 indicates that the STA does not support an SCS traffic descriptor operation for traffic flow transmission. Alternatively, a value of the SCS Traffic Descriptor Enabled field being 1 indicates that the STA supports an SCS Traffic descriptor operation for traffic flow transmission; or a value of the SCS Traffic Descriptor Enabled field being 0 indicates that the STA does not support an SCS traffic descriptor operation for traffic flow transmission.

For example, the Recommended STA Operation and Capability Parameters field may be as illustrated in FIG. 17. The Recommended STA Operation and Capability Parameters field may include: a Restricted TWT Enabled field (occupying 1 bit), a Trigger-Enabled SP Enabled field (occupying 1 bit), an SCS Enabled field (occupying 1 bit), and an SCS Traffic Descriptor Enabled field (occupying 1 bit).

In some embodiments, the Recommended STA Rx/Tx Parameters field includes, but is not limited to, at least one of: an NSS field, an MCS field, a DCM field, an RU Allocation field, or a BW field.

The NSS field is configured to indicate an NSS supported by the STA for reception or transmission. The MCS field is configured to indicate an MCS supported by the STA for reception or transmission. The DCM field is configured to indicate a DCM supported by the STA for reception or transmission. The RU Allocation field is configured to indicate an RU allocation supported by the STA for reception or transmission. The BW field is configured to indicate a BW supported by the STA for reception or transmission.

Specifically, the NSS field indicates a recommended NSS for a PPDU transmitted to a target STA, and is set to "NSS-1." In a case where the Direction field is set to 0 (Uplink), the NSS field indicates a recommended NSS for a PPDU carrying an MSDU or an A-MSDU transmitted from the STA to the AP; or in a case where the Direction field is set to 1 (Downlink), the NSS field indicates a recommended NSS for a PPDU carrying an MSDU or an A-MSDU transmitted from the AP to the STA.

Specifically, the MCS field indicates a recommended MCS for a PPDU transmitted to a target STA, and is set to "MCS index." In a case where the Direction field is set to 0 (Uplink), the MCS field indicates a recommended MCS for a PPDU carrying an MSDU or an A-MSDU transmitted from the STA to the AP; or in a case where the Direction field is set to 1 (Downlink), the MCS field indicates a recommended MCS for spatial streams of a PPDU carrying an MSDU or an A-MSDU transmitted from the AP to the STA.

Specifically, the DCM field indicates whether a DCM is recommended. In a case where the DCM field is set to 1, a DCM is recommended for a PPDU transmitted to a target STA; or in a case where the DCM field is set 0, a DCM is not recommended for a PPDU transmitted to a target STA. In a case where the Direction field is set to 0 (Uplink), the DCM field indicates whether DCM is recommended for a PPDU carrying an MSDU or an A-MSDU transmitted from the STA to the AP; or in a case where the Direction field is set to 1 (Downlink), the DCM field indicates whether DCM is recommended for a PPDU carrying an MSDUs or an A-MSDU transmitted from the AP to the STA.

Specifically, the RU Allocation field indicates one or more RUs to which a recommended MCS is applied for a PPDU transmitted to a target STA. In a case where the Direction field is set to 0 (Uplink), the RU Allocation field indicates one or more RUs to which a recommended MCS is applied for a PPDU carrying an MSDU or an A-MSDU transmitted from the STA to the AP; or in a case where the Direction field is set to 1 (Downlink), the RU Allocation field indicates one or more RUs to which a recommended MAC is applied for a PPDU carrying an MSDU or an A-MSDU transmitted from the AP to the STA.

Specifically, the BW field indicates a bandwidth to which a recommended MCS is applied for a PPDU transmitted to a target STA. In a case where the Direction field is set to 0 (Uplink), the BW field indicates a bandwidth to which a recommended MCS is applied for a PPDU carrying an MSDU or an A-MSDU transmitted from the STA to the AP; or in a case where the Direction field is set to 1 (Downlink), the BW field indicates a bandwidth to which a recommended MCS is applied for a PPDU carrying an MSDU or an A-MSDU transmitted from the AP to the STA.

For example, the Recommended STA Rx/Tx Parameters field may be as illustrated in FIG. 18. The Recommended STA Rx/Tx Parameters field may include: an NSS field (occupying 3 bits), an MCS field (occupying 4 bits), a DCM field (occupying 1 bit), an RU Allocation field (occupying 8 bits), and a BW field (occupying 3 bits).

In some embodiments, the first element is an Estimated Supported Traffic Flow QoS Parameters element. For example, the Estimated Supported Traffic Flow QoS Parameters element may be as illustrated in FIG. 19. The Estimated Supported Traffic Flow QoS Parameters element may include: an Estimated Supported Traffic Flow QoS Parameter Control field (occupying 3 octets), and an Estimated Supported Traffic Flow QoS Parameter Information field (with a variable number of octets).

In some embodiments, the first element is an R-TWT element.

In some embodiments, in a case where the first element is an R-TWT element, the first element includes an Estimated Supported Traffic Flow QoS Parameters field. The Estimated Supported Traffic Flow QoS Parameters field includes: the Estimated Supported Traffic Flow QoS Parameter Information field, and the Estimated Supported Traffic Flow QoS Parameter Control field.

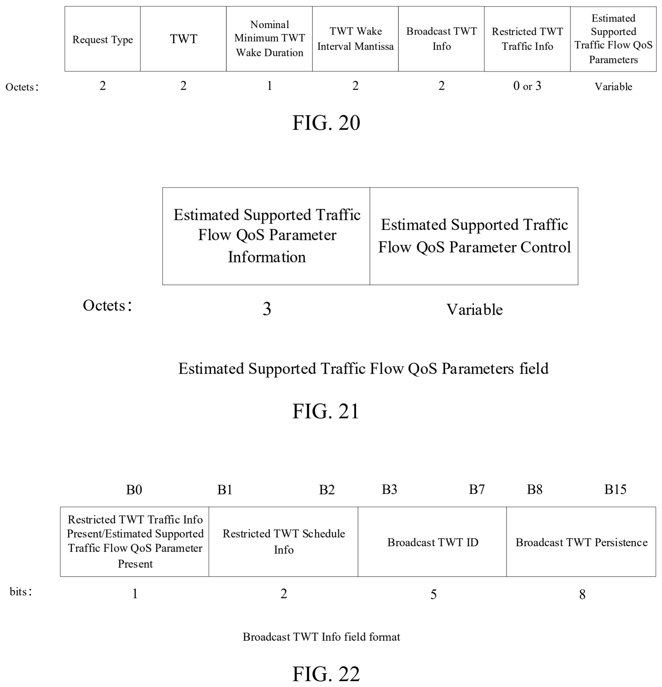

For example, the R-TWT element may be as illustrated in FIG. 20. The R-TWT element may include an Estimated Supported Traffic Flow QoS Parameters field (with a variable number of octets). The Estimated Supported Traffic Flow QoS Parameters field may be as illustrated in FIG. 21. The Estimated Supported Traffic Flow QoS Parameters field may include: an Estimated Supported Traffic Flow QoS Parameter Information field, and an Estimated Supported Traffic Flow QoS Parameter Control field.

In some embodiments, in a case where the first element is an R-TWT element, the first element further includes an Estimated Supported Traffic Flow QoS Parameter Present field. The Estimated Supported Traffic Flow QoS Parameter Present field is configured to indicate whether the Estimated Supported Traffic Flow QoS Parameters field is present in the first element.

In some embodiments, the Estimated Supported Traffic Flow QoS Parameter Present field is included within a Broadcast TWT Info field of the first element.

In some embodiments, the Estimated Supported Traffic Flow QoS Parameter Present field and a Restricted TWT Traffic Info Present field share at least one bit of the Broadcast TWT Info field. In a case where the first element does not include a Restricted TWT Traffic Info field, the at least one bit of the Broadcast TWT Info field corresponds only to the Estimated Supported Traffic Flow QoS Parameter Present field.

For example, the Broadcast TWT Info field may be as illustrated in FIG. 22. The Broadcast TWT Info field may include an Estimated Supported Traffic Flow QoS Parameter Present field sharing one bit of the Broadcast TWT Info field with a Restricted TWT Traffic Info Present field. In a case where the R-TWT element does not include the Restricted TWT Traffic Info field, the at least one bit of the Broadcast TWT Info field corresponds only to the Estimated Supported Traffic Flow QoS Parameter Present field.

For example, in a case where R-TWT period information is announced via a Management frame, i.e., in a case where a Negotiation Type subfield of the TWT element is set to 2, a Restricted TWT Parameter Set field of the R-TWT element does not include a Restricted TWT Traffic Info field. In this case, the "Restricted TWT Traffic Info Present/Estimated Supported Traffic Flow QoS Parameter Present" field of the Broadcast TWT Info field is indicated as the "Estimated Supported Traffic Flow QoS Parameter Present" field. In a case where a value of the "Estimated Supported Traffic Flow QoS Parameter Present" field is 1, the Restricted TWT Parameter Set field of the R-TWT element includes an Estimated Supported Traffic Flow QoS Parameters field; or in a case where a value of the "Estimated Supported Traffic Flow QoS Parameter Present" field is 0, the Restricted TWT Parameter Set field of the R-TWT element does not include an Estimated Supported Traffic Flow QoS Parameters field.

In some embodiments, in the case where the first element is an R-TWT element, the first frame is one of: a Beacon frame, a Probe Response frame, an Association Response frame, or a Reassociation Response frame.

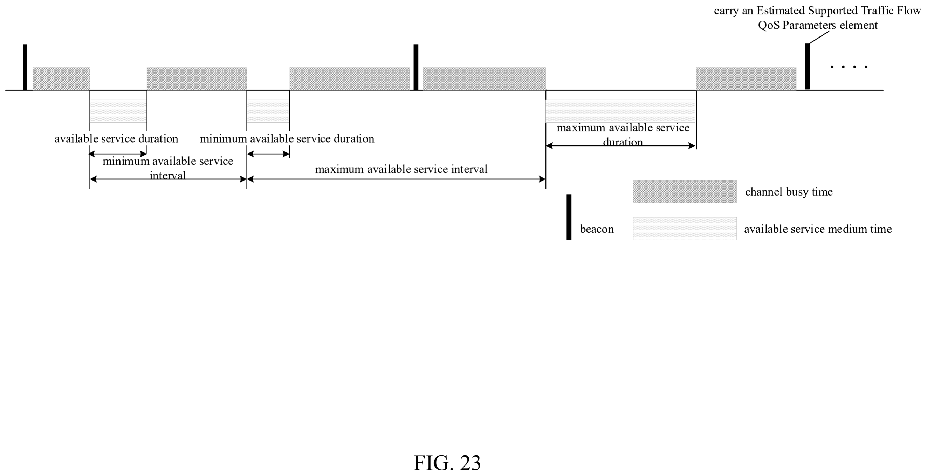

In some embodiments, the AP estimates the QoS parameter information for traffic flow transmission (e.g., delay-sensitive traffic flow transmission) supported by the AP on the first channel based on scheduling capabilities of the AP and/or channel conditions of the first channel (e.g., a channel on which the AP operates), as well as information on recommended traffic flow characteristic parameters, recommended STA or link operation and capability parameters, and recommended STA or link Rx/Tx parameters to meet the estimated QoS parameters for traffic flow transmission. In addition, the AP provides other STAs with the supported QoS parameter information for traffic flow transmission and the information on the recommended traffic flow characteristic parameters, the recommended STA operation and capability parameters, and the recommended STA Rx/Tx parameters for traffic flow transmission to meet the estimated QoS parameters for traffic flow transmission, by carrying the Estimated Supported Traffic Flow QoS Parameter element in a transmitted Beacon frame, a transmitted Probe Response frame, or a (Re)Association Response frame, or other Management frames. For example, the supported information is estimated based on scheduling capabilities of the AP and channel conditions. An example of QoS parameter estimation and signaling for traffic flow transmission in a BSS may be as illustrated in FIG. 23, and the AP carries relevant estimation information in a Beacon frame. Other STAs (e.g., associated non-AP STAs, non-AP STAs preparing for association, or other APs) performs, in response receiving the estimated QoS parameter information for traffic flow transmission provided by the AP, selection of an AP or a link for delay-sensitive traffic flow transmission using an AP or link selection algorithm specific to implementation. For example, AP 1 and AP 2 operate on a 2.4 GHz band and a 5GHz band, respectively, with the same operating bandwidth. A minimum available service duration and a maximum available service duration provided by AP 1 are both smaller than those provided by AP 2. And, a minimum available service interval and a maximum available service interval provided by AP 1 are both larger than those provided by AP 2. Based on the estimation information on the QoS parameters for traffic flows provided by AP 1 and AP 2, the BSS where AP 2 is located is more favorable for delay-sensitive traffic flow transmission. Therefore, a non-AP STA preparing for association (e.g., STA 1) with a demand for delay-sensitive traffic flow transmission may preferentially associate with AP 2.

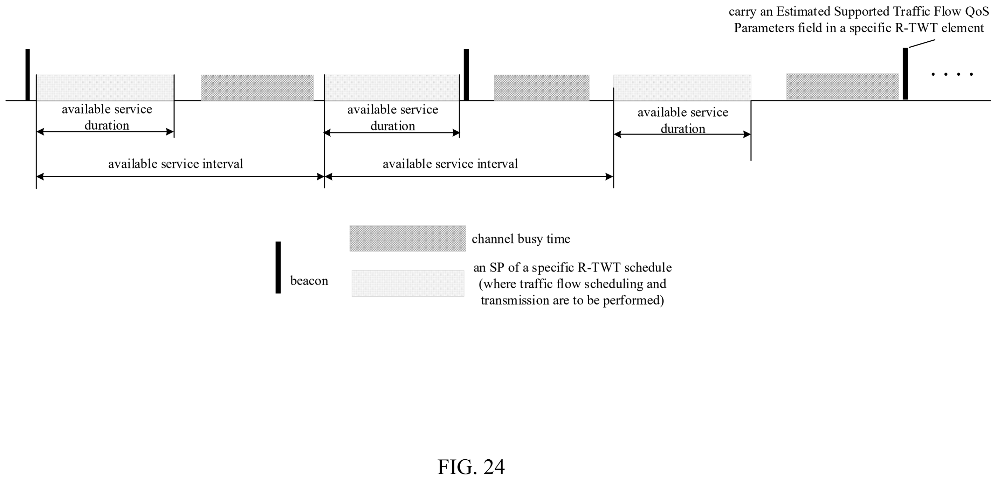

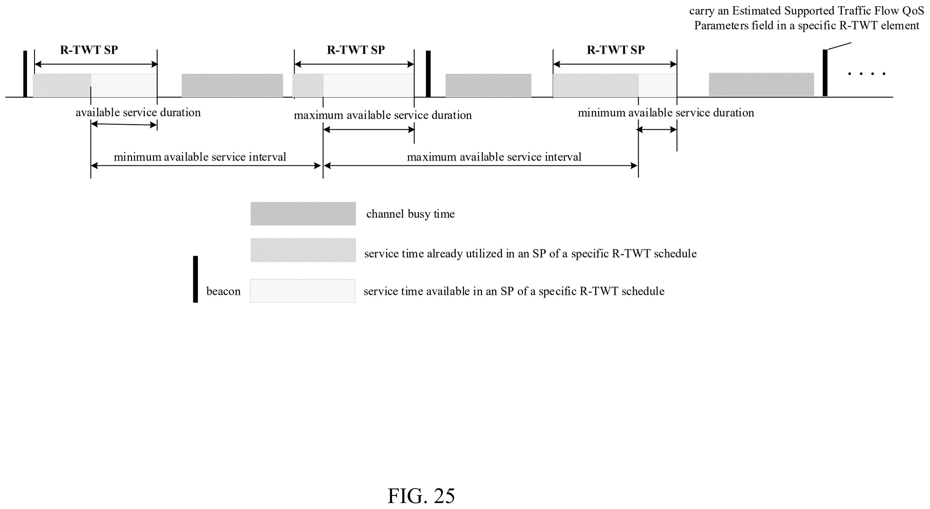

In some embodiments, for a specific delay-sensitive SP (e.g., an SP of a specific R-TWT schedule), the AP estimates, based on the scheduling capabilities of the AP and/or the channel conditions of the first channel (e.g., the channel on which the AP operates), the QoS parameter information for traffic flow transmission (e.g., delay-sensitive traffic flow transmission) supported by the AP on the first channel during the SP, as well as information on recommended traffic flow characteristic parameters, recommended STA or link operation and capability parameters, and recommended STA or link Rx/Tx capability parameters to meet the estimated QoS parameters for traffic flow transmission. In addition, the AP announces the QoS parameter information for traffic flow transmission corresponding to the SP of one or more specific R-TWT schedules in the BSS, along with the information on the recommended traffic flow characteristic parameters, the recommended STA operation and capability parameters, and recommended STA Rx/Tx parameters for traffic flow transmission to meet the estimated QoS parameters for traffic flow transmission, by including an "Estimated Supported Traffic Flow QoS Parameters field" in a Restricted TWT Parameter Set(s) field of a Broadcast TWT element carried in a transmitted Beacon frame, a transmitted Probe Response frame, or a transmitted (Re)Association Response frame, or other Management frames. Examples of QoS parameter estimation and signaling for traffic flow transmission based on a specific R-TWT in a BSS may be as illustrated in FIGS. 24 and 25. The AP carries relevant estimation information in the Broadcast TWT element of the Beacon frame.

For example, two R-TWT schedules are established in a BSS, namely, R-TWT Schedule 1 and R-TWT Schedule 2, and each of the two R-TWT schedules has a corresponding R-TWT SP. A minimum available service duration and a maximum available service duration provided by the R-TWT SP corresponding to R-TWT Schedule 1 are both smaller than those provided by the R-TWT SP corresponding to R-TWT Schedule 2; and a minimum available service interval and a maximum available service interval provided by the R-TWT SP corresponding to R-TWT Schedule 1 are both larger than those provided by the R-TWT SP corresponding to R-TWT Schedule 2. Based on the QoS parameter estimation information for traffic flows provided by R-TWT Schedule 1 and R-TWT Schedule 2, R-TWT Schedule 2 is more favorable for delay-sensitive traffic flow transmission. Therefore, a non-AP STA (e.g., STA 1) preparing to establish an R-TWT protocol with the AP and having a demand for delay-sensitive traffic flow transmission preferentially requests to become a member STA of the SP corresponding to R-TWT Schedule 2.

In view of the above, according to the embodiments of the present disclosure, the STA may acquire QoS parameter information for traffic flow transmission supported by the first AP on the first channel, enabling the STA to perform subsequent transmission of traffic flows (e.g., delay-sensitive traffic flows) based on the acquired QoS parameter information for traffic flow transmission supported by the first AP on the first channel, thereby optimizing transmission performances of traffic flows.

Specifically, by providing estimation information on QoS parameters for delay-sensitive traffic flow transmission based on scheduling capabilities of an AP and/or channel conditions of a current channel of an AP, as well as information on recommended traffic flow characteristic parameters, recommended STA or link operation and capability parameters, and recommended STA or link Rx/Tx capability parameters to meet the estimated QoS parameters for delay-sensitive traffic flow transmission, an STA receiving such information is enabled to use its conveyed contents for the following purposes: first, to select an AP or a link for low-delay traffic flow transmission using an AP or link selection algorithm specific to implementation; second, for a specific AP or link, to select an R-TWT corresponding to a specific R-TWT schedule, wherein the specific R-TWT schedule has been established by the specific AP or link, and the STA intends to join or participate in the specific R-TWT schedule.

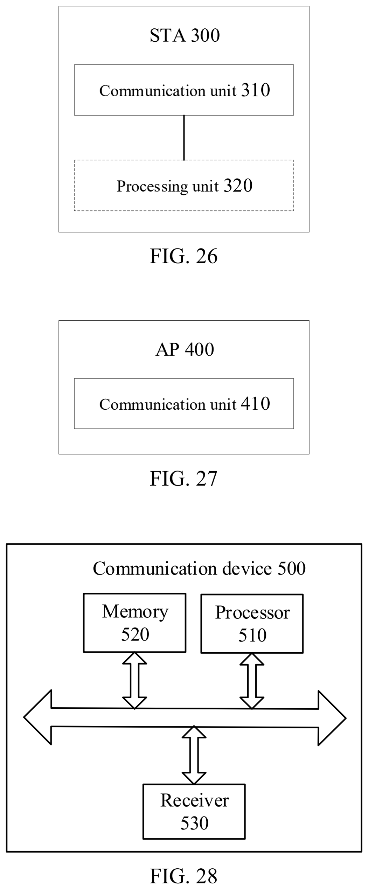

The method embodiments of the present disclosure are described in detail above with reference to FIGS. 5 to 25. The device embodiments of the present disclosure are described in detail hereinafter with reference to FIGS. 26 to 30. It should be understood that the device embodiments correspond to the method embodiments, and similar descriptions of the device embodiments may refer to the method embodiments.

FIG. 26 illustrates a schematic block diagram of an STA 300 according to some embodiments of the present disclosure.

As illustrated in FIG. 26, the STA 300 includes: a communication unit 310, configured to receive first information; wherein the first information includes at least QoS parameter information for traffic flow transmission supported by a first AP on a first channel.

In some embodiments, the QoS parameter information for traffic flow transmission supported by the first AP on the first channel is associated with an estimation result of QoS parameters for traffic flow transmission in a first BSS during a first estimation duration; or the QoS parameter information for traffic flow transmission supported by the first AP on the first channel is associated with an estimation result of QoS parameters for traffic flow transmission during N SPs in a first BSS within a first estimation duration, wherein N is a positive integer.

In some embodiments, in a case where the QoS parameter information for traffic flow transmission supported by the first AP on the first channel is associated with the estimation result of the QoS parameters for traffic flow transmission in the first BSS during the first estimation duration, the estimation result of the QoS parameters for traffic flow transmission in the first BSS during the first estimation duration is associated with one or more available service time parameters in the first BSS during the first estimation duration; wherein the one or more available service time parameters include at least one of: a minimum available service duration, a maximum available service duration, a minimum available service interval, or a maximum available service interval.

In some embodiments, the one or more available service time parameters in the first BSS during the first estimation duration are associated with at least one of: scheduling capabilities of the first AP, or channel conditions of the first channel.

In some embodiments, the first information further includes: the one or more available service time parameters in the first BSS during the first estimation duration.

In some embodiments, in a case where the QoS parameter information for traffic flow transmission supported by the first AP on the first channel is associated with the estimation result of the QoS parameters for traffic flow transmission during the N SPs in the first BSS within the first estimation duration: the N SPs are SPs in the first BSS where traffic flow scheduling and transmission are to be performed, or the N SPs are SPs in the first BSS where traffic flow scheduling and transmission have been performed.

In some embodiments, the estimation result of the QoS parameters for traffic flow transmission during the N SPs in the first BSS within the first estimation duration is associated with one or more available service time parameters during the N SPs in the first BSS within the first estimation duration; wherein the one or more available service time parameters include at least one of: a minimum available service duration, a maximum available service duration, a minimum available service interval, or a maximum available service interval.

In some embodiments, the one or more available service time parameters during the N SPs in the first BSS within the first estimation duration are associated with at least one of: scheduling capabilities of the first AP, or channel conditions of the first channel.

In some embodiments, the first information further includes: the one or more available service time parameters during the N SPs in the first BSS within the first estimation duration.

In some embodiments, the N SPs are R-TWT SPs corresponding to one or more R-TWT schedules within the first estimation duration, wherein the one or more R-TWT schedules have been established in the first BSS.

In some embodiments, the QoS parameter information for traffic flow transmission supported by the first AP on the first channel includes: m supported QoS parameter sets for traffic flow transmission, wherein each of the m supported QoS parameter sets for traffic flow transmission includes at least one of following QoS parameters: an estimated delay bound, an estimated MSDU delivery ratio, an estimated MSDU count exponent, an estimated maximum MSDU size, an estimated burst size, an estimated averaging window, an estimated minimum data rate, or an estimated maximum data rate; wherein *m* is a positive integer, and *m* is equal to 1 or *m* is greater than or equal to 2.

In some embodiments, in a case where m is greater than or equal to 2, different values are assigned to part or all of the QoS parameters included in different sets of the m supported QoS parameter sets for traffic flow transmission.

In some embodiments, the QoS parameter information for traffic flow transmission supported by the first AP on the first channel includes: an identifier bitmap for supported QoS parameter sets for traffic flow transmission, wherein an i^{th} bit position in the identifier bitmap is configured to indicate whether an i^{th} QoS parameter set for traffic flow transmission, in a list of QoS parameter sets for traffic flow transmission, is supported, i being a positive integer.

In the list of QoS parameter sets for traffic flow transmission, each QoS parameter set for traffic flow transmission includes at least one of following QoS parameters: a delay bound, an MSDU delivery ratio, an MSDU count exponent, a maximum MSDU size, a burst size, an averaging window, a minimum data rate, or a maximum data rate.

In the list of QoS parameter sets for traffic flow transmission, part or all of the QoS parameters included in different QoS parameter sets for traffic flow transmission have different values.

In some embodiments, the list of QoS parameter sets for traffic flow transmission is specified by a protocol, or configured by an AP.

In some embodiments, the first information further includes at least one of following information recommended based on the QoS parameter information for traffic flow transmission supported by the first AP on the first channel: operation and capability parameter information for the STA; or Rx/Tx parameter information for the STA.

In some embodiments, the operation and capability parameter information for the STA includes at least one of: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, or information indicating whether the STA supports an SCS traffic descriptor operation for traffic flow transmission.

In some embodiments, the Rx/Tx parameter information of the STA includes at least one of: an NSS supported by the STA for reception or transmission; an MCS supported by the STA for reception or transmission; a DCM supported by the STA for reception or transmission; an RU allocation supported by the STA for reception or transmission; or a BW supported by the STA for reception or transmission.

In some embodiments, the first information is carried by a first element in a first frame.

The first element includes an Estimated Supported Traffic Flow QoS Parameter Information field, and the Estimated Supported Traffic Flow QoS Parameter Information field includes at least one of: a Supported Traffic Flow QoS Parameters field, an Available Service Time Parameters field, a Recommended STA Operation and Capability Parameters field, or a Recommended STA Rx/Tx Parameters field.

The Supported Traffic Flow QoS Parameters field is configured to indicate the QoS parameter information for traffic flow transmission supported by the first AP on the first channel.

The Available Service Time Parameters field is configured to indicate one or more available service time parameters during N R-TWT SPs in a first BSS within a first estimation duration, wherein the QoS parameter information for traffic flow transmission supported by the first AP on the first channel is associated with the one or more available service time parameters during the N R-TWT SPs in the first BSS within the first estimation duration, N being a positive integer.

The Recommended STA Operation and Capability Parameters field is configured to indicate operation and capability parameter information recommended for the STA based on the QoS parameter information for traffic flow transmission supported by the first AP on the first channel.

The Recommended STA Rx/Tx Parameters field is configured to indicate Rx/Tx parameter information recommended for the STA based on the QoS parameter information for traffic flow transmission supported by the first AP on the first channel.

In some embodiments, the first element further includes an Estimated Supported Traffic Flow QoS Parameter Control field.

The Estimated Supported Traffic Flow QoS Parameter Control field includes at least one of: a Direction field, a QoS Parameter Set Identifier Bitmap Indicator field, a Supported Traffic Flow QoS Parameter Set Identifier Bitmap Size field, a Number of Supported Traffic Flow QoS Parameters field, a Supported Traffic Flow QoS Parameter Present Bitmap field, a Recommended STA Operation and Capability Parameter Present field, or a Recommended STA Rx/Tx Parameter Present field.

The Direction field is configured to indicate a transmission direction of traffic flow data corresponding to the first element.

The QoS Parameter Set Identifier Bitmap Indicator field is configured to indicate whether the Supported Traffic Flow QoS Parameters field uses a Supported Traffic Flow QoS Parameter Set Identifier Bitmap field to indicate the QoS parameter information for traffic flow transmission supported by the first AP on the first channel.

The Supported Traffic Flow QoS Parameter Set Identifier Bitmap Size field is configured to indicate a size of an identifier bitmap for supported QoS parameter sets for traffic flow transmission in a case where the Supported Traffic Flow QoS Parameters field uses the Supported Traffic Flow QoS Parameter Set Identifier Bitmap field to indicate the QoS parameter information for traffic flow transmission supported by the first AP on the first channel.

The Number of Supported Traffic Flow QoS Parameters field is configured to indicate a number of supported QoS parameters for traffic flow transmission in a Supported Traffic Flow QoS Parameter Set field in a case where the Supported Traffic Flow QoS Parameters field uses the Supported Traffic Flow QoS Parameter Set field to indicate the QoS parameter information for traffic flow transmission supported by the first AP on the first channel.

The Supported Traffic Flow QoS Parameter Present Bitmap field is configured to indicate whether at least one field in the Supported Traffic Flow QoS Parameter Set field is present in the case where the Supported Traffic Flow QoS Parameters field uses the Supported Traffic Flow QoS Parameter Set field to indicate the QoS parameter information for traffic flow transmission supported by the first AP on the first channel.

The Recommended STA Operation and Capability Parameter Present field is configured to indicate whether the Estimated Supported Traffic Flow QoS Parameter Information field includes the Recommended STA Operation and Capability Parameters field.

The Recommended STA Rx/Tx Parameter Present field is configured to indicate whether the Estimated Supported Traffic Flow QoS Parameter Information field includes the Recommended STA Rx/Tx Parameters field.

In some embodiments, the Supported Traffic Flow QoS Parameter Set Identifier Bitmap Size field and the Number of Supported Traffic Flow QoS Parameters field share a plurality of bits.

In a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the plurality of bits correspond only to the Supported Traffic Flow QoS Parameter Set Identifier Bitmap Size field; and/or in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the plurality of bits correspond only to the Number of Supported Traffic Flow QoS Parameters field.

In some embodiments, in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the Supported Traffic Flow QoS Parameters field includes m Supported Traffic Flow QoS Parameter Set fields, wherein *m* is a positive integer, and *m* is equal to 1 or *m* is greater than 2 or equal to 2.

Each of the m Supported Traffic Flow QoS Parameter Set fields includes at least one of: an Estimated Delay Bound field, an Estimated MSDU Delivery Ratio field, an Estimated MSDU Count Exponent field, an Estimated Maximum MSDU Size field, an Estimated Burst Size field, an Estimated Averaging Window field, an Estimated Minimum Data Rate field, or an Estimated Maximum Data Rate field.

The Estimated Delay Bound field is configured to indicate an estimated delay bound, the Estimated MSDU Delivery Ratio field is configured to indicate an estimated MSDU delivery ratio, the Estimated MSDU Count Exponent field is configured to indicate an estimated MSDU count exponent, the Estimated Maximum MSDU Size field is configured to indicate an estimated maximum MSDU size, the Estimated Burst Size field is configured to indicate an estimated burst size, the Estimated Averaging Window field is configured to indicate an estimated averaging window, the Estimated Minimum Data Rate field is configured to indicate an estimated minimum data rate, and the Estimated Maximum Data Rate field is configured to indicate an estimated maximum data rate.

In some embodiments, in a case where m is greater than or equal to 2, different values are assigned to part or all of QoS parameters indicated by different Supported Traffic Flow QoS Parameter Set fields in the m Supported Traffic Flow QoS Parameter Set fields.

In some embodiments, the at least one field includes part or all of: the Estimated Delay Bound field, the Estimated MSDU Delivery Ratio field, the Estimated MSDU Count Exponent field, the Estimated Maximum MSDU Size field, the Estimated Burst Size field, the Estimated Averaging Window field, the Estimated Minimum Data Rate field, or the Estimated Maximum Data Rate field.

In some embodiments, in a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the Supported Traffic Flow QoS Parameters field includes the Supported Traffic Flow QoS Parameter Set Identifier Bitmap field.

An i^{th} bit position in the Supported Traffic Flow QoS Parameter Set Identifier Bitmap field is configured to indicate whether an i^{th} QoS parameter set for traffic flow transmission, in a list of QoS parameter sets for traffic flow transmission, is supported, i being a positive integer.

In the list of QoS parameter sets for traffic flow transmission, each QoS parameter set for traffic flow transmission includes at least one of following QoS parameters: a delay bound, a MSDU delivery ratio, an MSDU count exponent, a maximum MSDU size, a burst size, an averaging window, a minimum data rate, or a maximum data rate.

In the list of QoS parameter sets for traffic flow transmission, part or all of the QoS parameters included in different QoS parameter sets for traffic flow transmission have different values.

In some embodiments, the list of QoS parameter sets for traffic flow transmission is specified by a protocol, or configured by an AP.

In some embodiments, the Available Service Time Parameters field includes at least one of: a Minimum Available Service Duration field, a Maximum Available Service Duration field, a Minimum Available Service Interval field, or a Maximum Available Service Interval field; wherein the Minimum Available Service Duration field is configured to indicate a minimum available service duration, the Maximum Available Service Duration field is configured to indicate a maximum available service duration, the Minimum Available Service Interval field is configured to indicate a minimum available service interval, and the Maximum Available Service Interval field is configured to indicate a maximum available service interval.

In some embodiments, the Recommended STA Operation and Capability Parameters field includes at least one of: a Restricted TWT Enabled field, a Trigger-Enabled SP Enabled field, an SCS Enabled field, or an SCS Traffic Descriptor Enabled field.

The Restricted TWT Enabled field is configured to indicate whether the STA supports an R-TWT operation for traffic flow transmission, the Trigger-Enabled SP Enabled field is configured to indicate whether the STA supports an R-TWT operation based on a trigger-enabled SP for traffic flow transmission, the SCS Enabled field is configured to indicate whether the STA supports an SCS operation for traffic flow transmission, and the SCS Traffic Descriptor Enabled field is configured to indicate whether the STA supports an SCS traffic descriptor operation for traffic flow transmission.

In some embodiments, the Recommended STA Rx/Tx Parameters field includes at least one of: an NSS field, an MCS field, a DCM field, an RU Allocation field, or a BW field.

The NSS field is configured to indicate an NSS supported by the STA for reception or transmission, the MCS field is configured to indicate an MCS supported by the STA for reception or transmission, the DCM field is configured to indicate a DCM supported by the STA for reception or transmission, the RU Allocation field is configured to indicate an RU allocation supported by the STA for reception or transmission, and the BW field is configured to indicate a BW supported by the STA for reception or transmission.

In some embodiments, the first element is an Estimated Supported Traffic Flow QoS Parameters element, or the first element is an R-TWT element.

In some embodiments, in a case where the first element is the R-TWT element, the first element includes an Estimated Supported Traffic Flow QoS Parameters field; wherein the Estimated Supported Traffic Flow QoS Parameters field includes: the Estimated Supported Traffic Flow QoS Parameter Information field, and an Estimated Supported Traffic Flow QoS Parameter Control field.

In some embodiments, the first element further includes an Estimated Supported Traffic Flow QoS Parameter Present field.

The Estimated Supported Traffic Flow QoS Parameter Present field is configured to indicate whether the Estimated Supported Traffic Flow QoS Parameters field is present in the first element.

In some embodiments, the Estimated Supported Traffic Flow QoS Parameter Present field is included within a Broadcast TWT Info field of the first element.

In some embodiments, the Estimated Supported Traffic Flow QoS Parameter Present field and a Restricted TWT Traffic Info Present field share at least one bit of the Broadcast TWT Info field; wherein in a case where the first element fail to include a Restricted TWT Traffic Info field, the at least one bit of the Broadcast TWT Info field corresponds only to the Estimated Supported Traffic Flow QoS Parameter Present field.

In some embodiments, the first frame is one of: a Beacon frame, a Probe Response frame, an Association Response frame, or a Reassociation Response frame.

In some embodiments, the STA 300 further includes: a processing unit 320.

The processing unit 320 is configured to select an AP and/or a link for traffic flow transmission based on the first information; and/or

The processing unit 320 is configured to select a broadcast TWT corresponding to a target R-TWT schedule based on the first information, wherein the target R-TWT schedule has been established by a target AP and the STA intends to join the target R-TWT schedule, and/or the processing unit 320 is configured to select a broadcast TWT corresponding to a target R-TWT schedule based on the first information, wherein the target R-TWT schedule has been established by a target link and the STA intends to join the target R-TWT schedule.

In some embodiments, the traffic flow includes at least a time-domain sensitive traffic flow.

In some embodiments, the communication unit described above may be a communication interface or a transceiver, or an input/output interface of a communication chip or a system-on-chip. The processing unit described above may include one or more processors.

It should be understood that the STA 300 according to the embodiments of the present disclosure may correspond to the STA in the method embodiments of the present disclosure, and the above operations and other operations and/or functions of each unit in the STA 300 are respectively intended to implement the corresponding processes of the STA in the method 200 illustrated in FIG. 5. For brevity, details are not elaborated herein.

FIG. 27 illustrates a schematic block diagram of an AP 400 according to some embodiments of the present disclosure. As illustrated in FIG. 27, the AP 400 includes: a communication unit 410, configured to transmit first information; wherein the first information includes at least QoS parameter information of traffic flow transmission supported by a first AP on a first channel.

In some embodiments, the QoS parameter information for traffic flow transmission supported by the first AP on the first channel is associated with an estimation result of QoS parameters for traffic flow transmission in a first BSS during a first estimation duration; or the QoS parameter information for traffic flow transmission supported by the first AP on the first channel is associated with an estimation result of QoS parameters for traffic flow transmission during N SPs in a first BSS within a first estimation duration, wherein N is a positive integer.

In some embodiments, in a case where the QoS parameter information for traffic flow transmission supported by the first AP on the first channel is associated with the estimation result of the QoS parameters for traffic flow transmission in the first BSS during the first estimation duration, the estimation result of the QoS parameters for traffic flow transmission in the first BSS during the first estimation duration is associated with one or more available service time parameters in the first BSS during the first estimation duration; wherein the one or more available service time parameters include at least one of: a minimum available service duration, a maximum available service duration, a minimum available service interval, or a maximum available service interval.

In some embodiments, the one or more available service time parameters in the first BSS during the first estimation duration are associated with at least one of: scheduling capabilities of the first AP, or channel conditions of the first channel.

In some embodiments, the first information further includes: the one or more available service time parameters in the first BSS during the first estimation duration.

In some embodiments, in a case where the QoS parameter information for traffic flow transmission supported by the first AP on the first channel is associated with the estimation result of the QoS parameters for traffic flow transmission during the N SPs in the first BSS within the first estimation duration, the N SPs are SPs in the first BSS where traffic flow scheduling and transmission are to be performed, or the N SPs are SPs in the first BSS where traffic flow scheduling and transmission have been performed.

In some embodiments, the estimation result of the QoS parameters for traffic flow transmission during the N SPs in the first BSS within the first estimation duration is associated with one or more available service time parameters during the N SPs in the first BSS within the first estimation duration; wherein the one or more available service time parameters include at least one of: a minimum available service duration, a maximum available service duration, a minimum available service interval, or a maximum available service interval.

In some embodiments, the one or more available service time parameters during the N SPs in the first BSS within the first estimation duration are associated with at least one of: scheduling capabilities of the first AP, or channel conditions of the first channel.

In some embodiments, the first information further includes the one or more available service time parameters during the N SPs in the first BSS within the first estimation duration.

In some embodiments, the N SPs are R-TWT SPs corresponding to one or more R-TWT schedules within the first estimation duration, wherein the one or more R-TWT schedules have been established in the first BSS.

In some embodiments, the QoS parameter information for traffic flow transmission supported by the first AP on the first channel includes: *m* supported QoS parameter sets for traffic flow transmission, wherein each of the *m* supported QoS parameter sets for traffic flow transmission includes at least one of following QoS parameters: an estimated delay bound, an estimated MSDU delivery ratio, an estimated MSDU count exponent, an estimated maximum MSDU size, an estimated burst size, an estimated averaging window, an estimated minimum data rate, or an estimated maximum data rate; wherein *m* is a positive integer, and *m* is equal to 1 or *m* is greater than or equal to 2.

In some embodiments, in a case where *m* is greater than or equal to 2, different values are assigned to part or all of the QoS parameters included in different sets of the *m* supported QoS parameter sets for traffic flow transmission.

In some embodiments, the QoS parameter information for traffic flow transmission supported by the first AP on the first channel includes: an identifier bitmap for supported QoS parameter sets for traffic flow transmission, wherein an i^{th} bit position in the identifier bitmap is configured to indicate whether an i^{th} QoS parameter set for traffic flow transmission, in a list of QoS parameter sets for traffic flow transmission, is supported, i being a positive integer.

In the list of QoS parameter sets for traffic flow transmission, each QoS parameter set for traffic flow transmission includes at least one of following QoS parameters: a delay bound, an MSDU delivery ratio, an MSDU count exponent, a maximum MSDU size, a burst size, an averaging window, a minimum data rate, or a maximum data rate.

In the list of QoS parameter sets for traffic flow transmission, part or all of the QoS parameters included in different QoS parameter sets for traffic flow transmission have different values.

In some embodiments, the list of QoS parameter sets for traffic flow transmission is specified by a protocol, or configured by an AP.

In some embodiments, the first information further includes at least one of following information recommended based on the QoS parameter information for traffic flow transmission supported by the first AP on the first channel: operation and capability parameter information for the STA; or Rx/Tx parameter information for the STA.

In some embodiments, the operation and capability parameter information for the STA includes at least one of: information indicating whether the STA supports an R-TWT operation for traffic flow transmission, information indicating whether the STA supports an R-TWT operation based on a trigger-enabled SP for traffic flow transmission, information indicating whether the STA supports an SCS operation for traffic flow transmission, or information indicating whether the STA supports an SCS traffic descriptor operation for traffic flow transmission.

In some embodiments, the Rx/Tx parameter information of the STA includes at least one of: an NSS supported by the STA for reception or transmission; an MCS supported by the STA for reception or transmission; a DCM supported by the STA for reception or transmission; an RU allocation supported by the STA for reception or transmission; or a BW supported by the STA for reception or transmission.

In some embodiments, the first information is carried by a first element in a first frame.

The first element includes an Estimated Supported Traffic Flow QoS Parameter Information field, and the Estimated Supported Traffic Flow QoS Parameter Information field includes at least one of: a Supported Traffic Flow QoS Parameters field, an Available Service Time Parameters field, a Recommended STA Operation and Capability Parameters field, or a Recommended STA Rx/Tx Parameters field.

The Supported Traffic Flow QoS Parameters field is configured to indicate the QoS parameter information for traffic flow transmission supported by the first AP on the first channel;

The Available Service Time Parameters field is configured to indicate one or more available service time parameters during N R-TWT SPs in a first BSS within a first estimation duration, wherein the QoS parameter information for traffic flow transmission supported by the first AP on the first channel is associated with the one or more available service time parameters during the N R-TWT SPs in the first BSS within the first estimation duration, N being a positive integer.

The Recommended STA Operation and Capability Parameters field is configured to indicate operation and capability parameter information recommended for the STA based on the QoS parameter information for traffic flow transmission supported by the first AP on the first channel.

The Recommended STA Rx/Tx Parameters field is configured to indicate Rx/Tx parameter information recommended for the STA based on the QoS parameter information for traffic flow transmission supported by the first AP on the first channel.

In some embodiments, the first element further includes an Estimated Supported Traffic Flow QoS Parameter Control field.

The Estimated Supported Traffic Flow QoS Parameter Control field includes at least one of: a Direction field, a QoS Parameter Set Identifier Bitmap Indicator field, a Supported Traffic Flow QoS Parameter Set Identifier Bitmap Size field, a Number of Supported Traffic Flow QoS Parameters field, a Supported Traffic Flow QoS Parameter Present Bitmap field, a Recommended STA Operation and Capability Parameter Present field, or a Recommended STA Rx/Tx Parameter Present field.

The Direction field is configured to indicate a transmission direction of traffic flow data corresponding to the first element.

The QoS Parameter Set Identifier Bitmap Indicator field is configured to indicate whether the Supported Traffic Flow QoS Parameters field uses a Supported Traffic Flow QoS Parameter Set Identifier Bitmap field to indicate the QoS parameter information for traffic flow transmission supported by the first AP on the first channel.

The Supported Traffic Flow QoS Parameter Set Identifier Bitmap Size field is configured to indicate a size of an identifier bitmap for supported QoS parameter sets for traffic flow transmission in a case where the Supported Traffic Flow QoS Parameters field uses the Supported Traffic Flow QoS Parameter Set Identifier Bitmap field to indicate the QoS parameter information for traffic flow transmission supported by the first AP on the first channel.

The Number of Supported Traffic Flow QoS Parameters field is configured to indicate a number of supported QoS parameters for traffic flow transmission in a Supported Traffic Flow QoS Parameter Set field in a case where the Supported Traffic Flow QoS Parameters field uses the Supported Traffic Flow QoS Parameter Set field to indicate the QoS parameter information for traffic flow transmission supported by the first AP on the first channel.

The Supported Traffic Flow QoS Parameter Present Bitmap field is configured to indicate whether at least one field in the Supported Traffic Flow QoS Parameter Set field is present in the case where the Supported Traffic Flow QoS Parameters field uses the Supported Traffic Flow QoS Parameter Set field to indicate the QoS parameter information for traffic flow transmission supported by the first AP on the first channel.

The Recommended STA Operation and Capability Parameter Present field is configured to indicate whether the Estimated Supported Traffic Flow QoS Parameter Information field includes the Recommended STA Operation and Capability Parameters field.

The Recommended STA Rx/Tx Parameter Present field is configured to indicate whether the Estimated Supported Traffic Flow QoS Parameter Information field includes the Recommended STA Rx/Tx Parameters field.

In some embodiments, the Supported Traffic Flow QoS Parameter Set Identifier Bitmap Size field and the Number of Supported Traffic Flow QoS Parameters field share a plurality of bits.

In a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the plurality of bits correspond only to the Supported Traffic Flow QoS Parameter Set Identifier Bitmap Size field; and/or in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the plurality of bits correspond only to the Number of Supported Traffic Flow QoS Parameters field.

In some embodiments, in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the Supported Traffic Flow QoS Parameters field includes *m* Supported Traffic Flow QoS Parameter Set fields, wherein *m* is a positive integer, and *m* is equal to 1 or *m* is greater than 2 or equal to 2.

Each of the m Supported Traffic Flow QoS Parameter Set fields includes at least one of: an Estimated Delay Bound field, an Estimated MSDU Delivery Ratio field, an Estimated MSDU Count Exponent field, an Estimated Maximum MSDU Size field, an Estimated Burst Size field, an Estimated Averaging Window field, an Estimated Minimum Data Rate field, or an Estimated Maximum Data Rate field.

The Estimated Delay Bound field is configured to indicate an estimated delay bound, the Estimated MSDU Delivery Ratio field is configured to indicate an estimated MSDU delivery ratio, the Estimated MSDU Count Exponent field is configured to indicate an estimated MSDU count exponent, the Estimated Maximum MSDU Size field is configured to indicate an estimated maximum MSDU size, the Estimated Burst Size field is configured to indicate an estimated burst size, the Estimated Averaging Window field is configured to indicate an estimated averaging window, the Estimated Minimum Data Rate field is configured to indicate an estimated minimum data rate, and the Estimated Maximum Data Rate field is configured to indicate an estimated maximum data rate.

In some embodiments, in a case where *m* is greater than or equal to 2, different values are assigned to part or all of QoS parameters indicated by different Supported Traffic Flow QoS Parameter Set fields in the *m* Supported Traffic Flow QoS Parameter Set fields.

In some embodiments, the at least one field includes part or all of: the Estimated Delay Bound field, the Estimated MSDU Delivery Ratio field, the Estimated MSDU Count Exponent field, the Estimated Maximum MSDU Size field, the Estimated Burst Size field, the Estimated Averaging Window field, the Estimated Minimum Data Rate field, or the Estimated Maximum Data Rate field.

In some embodiments, in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the Supported Traffic Flow QoS Parameters field includes the Supported Traffic Flow QoS Parameter Set Identifier Bitmap field.

An i^{th} bit position in the Supported Traffic Flow QoS Parameter Set Identifier Bitmap field is configured to indicate whether an i^{th} QoS parameter set for traffic flow transmission, in a list of QoS parameter sets for traffic flow transmission, is supported, i being a positive integer.

In the list of QoS parameter sets for traffic flow transmission, each QoS parameter set for traffic flow transmission includes at least one of following QoS parameters: a delay bound, a MSDU delivery ratio, an MSDU count exponent, a maximum MSDU size, a burst size, an averaging window, a minimum data rate, or a maximum data rate.

In the list of QoS parameter sets for traffic flow transmission, part or all of the QoS parameters included in different QoS parameter sets for traffic flow transmission have different values.

In some embodiments, the list of QoS parameter sets for traffic flow transmission is specified by a protocol, or configured by an AP.

In some embodiments, the Available Service Time Parameters field includes at least one of: a Minimum Available Service Duration field, a Maximum Available Service Duration field, a Minimum Available Service Interval field, or a Maximum Available Service Interval field.

The Minimum Available Service Duration field is configured to indicate a minimum available service duration, the Maximum Available Service Duration field is configured to indicate a maximum available service duration, the Minimum Available Service Interval field is configured to indicate a minimum available service interval, and the Maximum Available Service Interval field is configured to indicate a maximum available service interval.

In some embodiments, the Recommended STA Operation and Capability Parameters field includes at least one of: a Restricted TWT Enabled field, a Trigger-Enabled SP Enabled field, an SCS Enabled field, or an SCS Traffic Descriptor Enabled field.

The Restricted TWT Enabled field is configured to indicate whether the STA supports an R-TWT operation for traffic flow transmission, the Trigger-Enabled SP Enabled field is configured to indicate whether the STA supports an R-TWT operation based on a trigger-enabled SP for traffic flow transmission, the SCS Enabled field is configured to indicate whether the STA supports an SCS operation for traffic flow transmission, and the SCS Traffic Descriptor Enabled field is configured to indicate whether the STA supports an SCS traffic descriptor operation for traffic flow transmission.

In some embodiments, the Recommended STA Rx/Tx Parameters field includes at least one of: an NSS field, an MCS field, a DCM field, an RU Allocation field, or a BW field.

The NSS field is configured to indicate an NSS supported by the STA for reception or transmission, the MCS field is configured to indicate an MCS supported by the STA for reception or transmission, the DCM field is configured to indicate a DCM supported by the STA for reception or transmission, the RU Allocation field is configured to indicate an RU allocation supported by the STA for reception or transmission, and the BW field is configured to indicate a BW supported by the STA for reception or transmission.

In some embodiments, the first element is an Estimated Supported Traffic Flow QoS Parameters element, or the first element is an R-TWT element.

In some embodiments, in a case where the first element is the R-TWT element, the first element includes an Estimated Supported Traffic Flow QoS Parameters field; wherein the Estimated Supported Traffic Flow QoS Parameters field includes: the Estimated Supported Traffic Flow QoS Parameter Information field, and an Estimated Supported Traffic Flow QoS Parameter Control field.

In some embodiments, the first element further includes an Estimated Supported Traffic Flow QoS Parameter Present field; wherein the Estimated Supported Traffic Flow QoS Parameter Present field is configured to indicate whether the Estimated Supported Traffic Flow QoS Parameters field is present in the first element.

In some embodiments, the Estimated Supported Traffic Flow QoS Parameter Present field is included within a Broadcast TWT Info field of the first element.

In some embodiments, the Estimated Supported Traffic Flow QoS Parameter Present field and a Restricted TWT Traffic Info Present field share at least one bit of the Broadcast TWT Info field; wherein in a case where the first element fails to include a Restricted TWT Traffic Info field, the at least one bit of the Broadcast TWT Info field corresponds only to the Estimated Supported Traffic Flow QoS Parameter Present field.

In some embodiments, the first frame is one of: a Beacon frame, a Probe Response frame, an Association Response frame, or a Reassociation Response frame.

In some embodiments, the first information is used by the STA to select an AP and/or a link for traffic flow transmission; and/or the first information is used by the STA to select a broadcast TWT corresponding to a target R-TWT schedule, wherein the target R-TWT schedule has been established by a target AP and the STA intends to join the target R-TWT schedule, and/or the first information is used by the STA to select a broadcast TWT corresponding to a target R-TWT schedule, wherein the target R-TWT schedule has been established by a target link and the STA intends to join the target R-TWT schedule.

In some embodiments, the traffic flow includes at least a time-domain sensitive traffic flow.

In some embodiments, the communication unit described above may be a communication interface or a transceiver, or an input/output interface of a communication chip or a system-on-chip. The processing unit described above may include one or more processors.

It should be understood that the AP 400 according to the embodiments of the present disclosure may correspond to the AP in the method embodiments of the present disclosure, and the above operations and other operations and/or functions of each unit in the AP 400 are respectively intended to implement the corresponding processes of the AP in the method 200 illustrated in FIG. 5. For brevity, details are not elaborated herein.

FIG. 28 is a schematic structural diagram of a communication device 500 provided by some embodiments of the present disclosure. The communication device 500 illustrated in FIG. 28 includes a processor 510, wherein the processor 510 may read one or more computer programs from a memory and run the one or more computer programs to perform the method in the embodiments of the present disclosure.

In some embodiments, as illustrated in FIG. 28, the communication device 500 may further include a memory 520. The processor 510 may read one or more computer programs from the memory 520 and run the one or more computer programs to perform the method in the embodiments of the present disclosure.

The memory 520 may be a separate device independent of the processor 510, or may be integrated into the processor 510.

In some embodiments, as illustrated in FIG. 28, the communication device 500 may further include a transceiver 530. The processor 510 may control the transceiver 530 to communicate with other devices, and specifically, the transceiver 530 may be controlled to transmit information or data to other devices or receive information or data from other devices.

The transceiver 530 may include a transmitter and a receiver. The transceiver 530 may further include an antenna, and the number of antennas may be one or more.

In some embodiments, the processor 510 may implement functions of a processing unit in an STA, or the processor 510 may implement functions of a processing unit in an AP. For brevity, details are not elaborated herein.

In some embodiments, the transceiver 530 may implement functions of a communication unit in an STA. For brevity, details are not elaborated herein.

In some embodiments, the transceiver 530 may implement functions of a communication unit in an AP. For brevity, details are not elaborated herein.

In some embodiments, the communication device 500 may specifically be the AP in the embodiments of the present disclosure, and the communication device 500 may perform the corresponding processes performed by the AP in the methods according to the embodiments of the present disclosure. For brevity, details are not elaborated herein.

In some embodiments, the communication device 500 may specifically be the STA in the embodiments of the present disclosure, and the communication device 500 may perform the corresponding processes performed by the STA in the methods according to the embodiments of the present disclosure. For brevity, details are not elaborated herein.

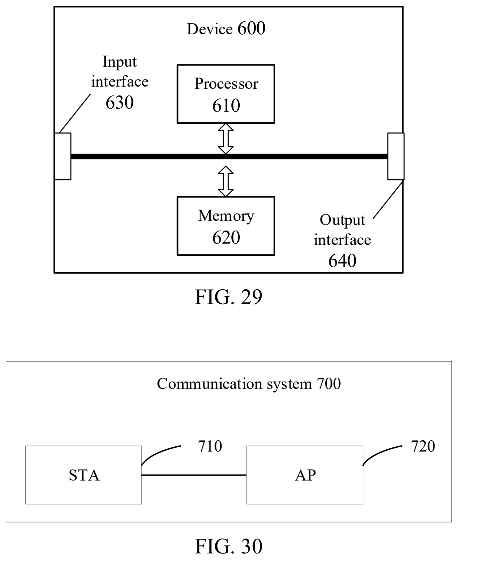

FIG. 29 is a schematic structural diagram of an apparatus 600 according to some embodiments of the present disclosure. The apparatus 600 illustrated in FIG. 29 includes a processor 610, wherein the processor 610 is configured to read one or more computer programs from a memory and run the one or more computer programs to perform the methods according to the embodiments of the present disclosure.

In some embodiments, as illustrated in FIG. 29, the apparatus 600 may further include a memory 620. The processor 610 is configured to read one or more computer programs from the memory 620 and run the one or more computer program to perform the methods according to the embodiments of the present disclosure.

The memory 620 may be a separate device independent of the processor 610, or may be integrated into the processor 610.

In some embodiments, the processor 610 may implement functions of a processing unit in an STA, or the processor 610 may implement functions of a processing unit in an AP. For brevity, details are not elaborated herein.

In some embodiments, the apparatus 600 may further include an input interface 630. The processor 610 may control the input interface 630 to communicate with other devices or chips, and specifically, the input interface 630 may be controlled to acquire information or data from other devices or chips. Optionally, the processor 610 may be deployed inside or outside a chip.

In some embodiments, the input interface 630 may implement functions of a communication unit in an STA, or the input interface 630 may implement functions of a communication unit in an AP.

In some embodiments, the apparatus 600 may further include an output interface 640. The processor 610 may control the output interface 640 to communicate with other devices or chips. Specifically, the output interface 640 may be controlled to output information or data to other devices or chips. Optionally, the processor 610 may be located inside or outside a chip.

In some embodiments, the output interface 640 may implement functions of a communication unit in an STA, or the output interface 640 may implement functions of a communication unit in an AP.

In some embodiments, the apparatus may be applied to the AP in the embodiments of the present disclosure, and the apparatus may perform the corresponding processes performed by the AP in the methods according to the embodiments of the present disclosure. For brevity, details are not elaborated herein.

In some embodiments, the apparatus may be applied to the STA in the embodiments of the present disclosure, and the apparatus may perform the corresponding processes performed by the STA in the methods according to the embodiments of the present disclosure. For brevity, details are not elaborated herein.

In some embodiments, the apparatus mentioned in the embodiments of the present disclosure may also be a chip. For example, the apparatus may be a system-level chip, a system chip, a chip system, or a system-on-chip, or the like.

FIG. 30 is a schematic block diagram of a communication system 700 provided by some embodiments of the present disclosure. As illustrated in FIG. 30, the communication system 700 includes an STA 710 and an AP 720.

The STA 710 may be configured to implement corresponding functions implemented by the STA in the above methods, and the AP 720 may be configured to implement the corresponding functions implemented by the AP in the above methods. For brevity, details are not elaborated herein.

It should be understood that the processor in the embodiments of the present disclosure may be an integrated circuit chip with signal processing capabilities. In a process for perform the steps of the method embodiments as described above, each step may be completed by integrated logic circuits of hardware in the processor or instructions in the form of software. The processor may be a general-purpose processor, a digital signal processor (DSP), an application specific integrated circuit (ASIC), a field-programmable gate array (FPGA) or other programmable logic devices, a discrete gate, or a transistor logic device, or a discrete hardware component. The processor may perform or execute the methods, processes (steps), and logical block diagrams disclosed in the embodiments of the present disclosure. A general-purpose processor may be a microprocessor or the processor may also be any conventional processor, or the like. The processes of the methods disclosed in the embodiments of the present disclosure may be directly embodied as being performed by a hardware decoding processor, or performed by a combination of hardware and software modules in the decoding processor. The software module may be located in a random-access memory (RAM), a flash memory, a read-only memory (ROM), a programmable ROM (PROM), or an electrically erasable programmable memory (EEPROM), a register, or other mature storage medium in the art. The storage medium is a component within a memory system, and the processor reads the information in the memory system and completes the processes of the above methods in combination with the hardware of the processor.

It may be understood that the memory in the embodiments of the present disclosure may be a volatile memory or a non-volatile memory, or may include both volatile and non-volatile memories. The non-volatile memory may be an ROM, a PROM, an erasable PROM (EPROM), an EEPROM, or a flash memory. The volatile memory may be an RAM used as an external cache. By way of example rather than limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous-link DRAM (SLDRAM), or a direct Rambus^{®} RAM (DR RAM). It should be noted that the memory in the systems and methods described in this disclosure is intended to include, but is not limited to, these and any other suitable types of memory.

It should be understood that the above memory is illustrative but not restrictive. For example, the memory in the embodiments of the present disclosure may also be an SRAM, a DRAM, a SDRAM, a DDR SDRAM, an ESDRAM, a SLDRAM, or a DR RAM, or the like. That is, the memory in the embodiments of the present disclosure is intended to include, but is not limited to, these and any other suitable types of memory.

Some embodiments of the present disclosure further provide a computer-readable storage medium for storing one or more computer programs.

In some embodiments, the computer-readable storage medium may be applied to the AP in the embodiments of the present disclosure, and the one or more computer program, when loaded and run by a computer, cause the computer to perform the corresponding processes performed by the AP in the methods according to the embodiments of the present disclosure. For brevity, details are not elaborated herein.

In some embodiments, the computer-readable storage medium may be applied to the STA in the embodiments of the present disclosure, and the one or more computer programs, when loaded and run by a computer, cause the computer to perform the corresponding processes performed by the STA in the methods according to the embodiments of the present disclosure. For brevity, details are not elaborated herein.

Some embodiments of the present disclosure further provide a computer program product, including one or more computer program instructions.

In some embodiments, the computer program product may be applied to the AP in the embodiments of the present disclosure, and the one or more computer program instructions, when loaded and executed by a computer, cause the computer to perform the corresponding processes performed by the AP in the methods according to the embodiments of the present disclosure. For brevity, details are not elaborated herein.

In some embodiments, the computer program product may be applied to the STA in the embodiments of the present disclosure, and the one or more computer program instructions, when loaded and executed by a computer, cause the computer to perform the corresponding processes performed by the STA in the methods according to the embodiments of the present disclosure. For brevity, details are not elaborated herein.

Some embodiments of the present disclosure further provide a computer program.

In some embodiments, the computer program may be applied to the AP in the embodiments of the present disclosure. The computer program, when run on a computer, causes the computer to perform the corresponding processes performed by the AP in the methods according to the embodiments of the present disclosure. For brevity, details are not elaborated herein.

In some embodiments, the computer program may be applied to the STA in the embodiments of the present disclosure. The computer program, when run on a computer, causes the computer to perform the corresponding processes performed by the STA in the methods according to the embodiments of the present disclosure. For brevity, details are not elaborated herein.

Those of ordinary skill in the art may understand that units and algorithm steps of each example described in conjunction with the embodiments disclosed herein may be implemented by electronic hardware, or a combination of computer software and electronic hardware. Whether functions are implemented in hardware or software depends on the specific application and design constraints of the technical solutions. Professionals and technicians may use different methods for each specific application to implement the described functions, but such implementation should not be considered beyond the scope of the present disclosure.

Those skilled in the art may clearly understand that, for the convenience and conciseness of description, specific working processes of the above-described systems, apparatuses, and units may refer to the corresponding processes in the foregoing method embodiments, which are not elaborated herein.

In the embodiments of the present disclosure, it should be understood that the disclosed systems, apparatuses, and methods may be implemented in other ways. For example, the device embodiments described above are only illustrative. For example, the division of the units is only a logical function division. In actual implementation, other division methods may be used. For example, a plurality of units or components may be combined or integrated into another system, or some features may be ignored or not implemented. In addition, the displayed or discussed mutual couplings or direct couplings or communication connections may be indirect couplings or communication connections via some interfaces, devices, or units, and may be in electrical, mechanical, or other forms.

The units described as separate components may or may not be physically separated, and the components displayed as units may or may not be physical units, that is, the components may be located in one place, or may be distributed on a plurality of network units. Some or all of the units may be selected according to actual needs to achieve the purpose of the solution of the present disclosure.

In addition, functional units in various embodiments of the present disclosure may be integrated into a single processing unit, or each unit may exist physically as a separate entity, or two or more units may be integrated into a single unit.

The described functionality, when implemented in the form of a software functional unit and sold or used as an independent product, may be stored in a computer-readable storage medium. Based on this understanding, the essence of the technical solutions in this disclosure, or the parts that contribute to the prior art, or portions of the technical solutions, may be embodied in the form of a software product. This computer software product is stored in a storage medium and includes several instructions that enable a computer device (which may be a personal computer, a server, or a network device, or the like) to execute all or part of the steps described in the various embodiments of the present disclosure. The aforementioned storage medium includes various medium capable of storing program codes, such as USB flash drives, mobile hard drives, ROM, RAM, magnetic disks, or optical discs.

Described above are merely some exemplary embodiments of the present disclosure. However, the scope of protection of the present disclosure is not limited thereto. Any person skilled in the art may readily conceive of variations or substitutions within the technical scope disclosed in the present disclosure, and these variations or substitutions should be encompassed within the scope of protection of the present disclosure. Therefore, the scope of protection of the present disclosure shall be determined by the protection scope specified in the claims.

## Claims

1. A method for wireless communication, performed by a station, STA, the method comprising:
receiving first information;
wherein the first information comprises at least quality of service, QoS, parameter information for traffic flow transmission supported by a first access point, AP, on a first channel.

2. The method according to claim 1, wherein the QoS parameter information for traffic flow transmission supported by the first AP on the first channel is associated with:
an estimation result of QoS parameters for traffic flow transmission in a first basic service set, BSS, during a first estimation duration; or
an estimation result of QoS parameters for traffic flow transmission during N service periods, SPs, in a first BSS within a first estimation duration, wherein N is a positive integer.

3. The method according to claim 2, wherein
in a case where the QoS parameter information for traffic flow transmission supported by the first AP on the first channel is associated with the estimation result of the QoS parameters for traffic flow transmission in the first BSS during the first estimation duration, the estimation result of the QoS parameters for traffic flow transmission in the first BSS during the first estimation duration is associated with one or more available service time parameters in the first BSS during the first estimation duration;
wherein the one or more available service time parameters comprise at least one of: a minimum available service duration, a maximum available service duration, a minimum available service interval, or a maximum available service interval.

4. The method according to claim 3, wherein the one or more available service time parameters in the first BSS during the first estimation duration are associated with at least one of: scheduling capabilities of the first AP, or channel conditions of the first channel.

5. The method according to claim 4, wherein the first information further comprises the one or more available service time parameters in the first BSS during the first estimation duration.

6. The method according to claim 2, wherein in a case where the QoS parameter information for traffic flow transmission supported by the first AP on the first channel is associated with the estimation result of the QoS parameters for traffic flow transmission during the N SPs in the first BSS within the first estimation duration:
the N SPs are SPs in the first BSS where traffic flow scheduling and transmission are to be performed, or
the N SPs are SPs in the first BSS where traffic flow scheduling and transmission have been performed.

7. The method according to claim 6, wherein
the estimation result of the QoS parameters for traffic flow transmission during the N SPs in the first BSS within the first estimation duration is associated with one or more available service time parameters during the N SPs in the first BSS within the first estimation duration;
wherein the one or more available service time parameters comprise at least one of: a minimum available service duration, a maximum available service duration, a minimum available service interval, or a maximum available service interval.

8. The method according to claim 7, wherein
the one or more available service time parameters during the N SPs in the first BSS within the first estimation duration are associated with at least one of: scheduling capabilities of the first AP, or channel conditions of the first channel.

9. The method according to claim 7 or 8, wherein the first information further comprises the one or more available service time parameters during the N SPs in the first BSS within the first estimation duration.

10. The method according to any one of claims 6 to 9, wherein the N SPs are restricted target wake time, R-TWT, SPs corresponding to one or more R-TWT schedules within the first estimation duration, wherein the one or more R-TWT schedules have been established in the first BSS.

11. The method according to any one of claims 1 to 10, wherein the QoS parameter information for traffic flow transmission supported by the first AP on the first channel comprises:
*m* supported QoS parameter sets for traffic flow transmission, wherein each of the *m* supported QoS parameter sets for traffic flow transmission comprises at least one of following QoS parameters: an estimated delay bound, an estimated medium access control service data unit, MSDU, delivery ratio, an estimated MSDU count exponent, an estimated maximum MSDU size, an estimated burst size, an estimated averaging window, an estimated minimum data rate, or an estimated maximum data rate;
wherein *m* is a positive integer, and *m* is equal to 1 or *m* is greater than or equal to 2.

12. The method according to claim 11, wherein
in a case where *m* is greater than or equal to 2, different values are assigned to part or all of the QoS parameters included in different sets of the *m* supported QoS parameter sets for traffic flow transmission.

13. The method according to any one of claims 1 to 10, wherein the QoS parameter information for traffic flow transmission supported by the first AP on the first channel comprises:
an identifier bitmap for supported QoS parameter sets for traffic flow transmission, wherein an i^{th} bit position in the identifier bitmap is configured to indicate whether an i^{th} QoS parameter set for traffic flow transmission, in a list of QoS parameter sets for traffic flow transmission, is supported, i being a positive integer;
wherein in the list of QoS parameter sets for traffic flow transmission, each QoS parameter set for traffic flow transmission comprises at least one of following QoS parameters: a delay bound, a medium access control service data unit, MSDU, delivery ratio, an MSDU count exponent, a maximum MSDU size, a burst size, an averaging window, a minimum data rate, or a maximum data rate;
wherein in the list of QoS parameter sets for traffic flow transmission, part or all of the QoS parameters included in different QoS parameter sets for traffic flow transmission have different values.

14. The method according to claim 13, wherein the list of QoS parameter sets for traffic flow transmission is specified by a protocol, or configured by an AP.

15. The method according to any one of claims 1 to 14, wherein the first information further comprises at least one of following information recommended based on the QoS parameter information for traffic flow transmission supported by the first AP on the first channel:
operation and capability parameter information for the STA; or
reception/transmission, Rx/Tx, parameter information for the STA.

16. The method according to claim 15, wherein the operation and capability parameter information for the STA comprises at least one of:
information indicating whether the STA supports a restricted target wake time, R-TWT, operation for traffic flow transmission,
information indicating whether the STA supports an R-TWT operation based on a trigger-enabled service period, SP, for traffic flow transmission,
information indicating whether the STA supports a stream classification service, SCS, operation for traffic flow transmission, or
information indicating whether the STA supports an SCS traffic descriptor operation for traffic flow transmission.

17. The method according to claim 15, wherein the Rx/Tx parameter information for the STA comprises at least one of:
a number of spatial streams, NSS, supported by the STA for reception or transmission;
a modulation and coding scheme, MCS, supported by the STA for reception or transmission;
a dual carrier modulation, DCM, supported by the STA for reception or transmission;
a resource unit, RU, allocation supported by the STA for reception or transmission; or
a bandwidth, BW, supported by the STA for reception or transmission.

18. The method according to any one of claims 1 to 17, wherein the first information is carried by a first element in a first frame;
wherein the first element comprises an Estimated Supported Traffic Flow QoS Parameter Information field comprising at least one of:
a Supported Traffic Flow QoS Parameters field, configured to indicate the QoS parameter information for traffic flow transmission supported by the first AP on the first channel;
an Available Service Time Parameters field, configured to indicate one or more available service time parameters during N restricted target wake time, R-TWT, service periods, SPs, in a first basic service set, BSS, within a first estimation duration, wherein the QoS parameter information for traffic flow transmission supported by the first AP on the first channel is associated with the one or more available service time parameters during the N R-TWT SPs in the first BSS within the first estimation duration, N being a positive integer;
a Recommended STA Operation and Capability Parameters field, configured to indicate operation and capability parameter information recommended for the STA based on the QoS parameter information for traffic flow transmission supported by the first AP on the first channel; or
a Recommended STA Rx/Tx Parameters field, configured to indicate reception/transmission, Rx/Tx, parameter information recommended for the STA based on the QoS parameter information for traffic flow transmission supported by the first AP on the first channel.

19. The method according to claim 18, wherein the first element further comprises an Estimated Supported Traffic Flow QoS Parameter Control field comprising at least one of:
a Direction field, configured to indicate a transmission direction of traffic flow data corresponding to the first element;
a QoS Parameter Set Identifier Bitmap Indicator field, configured to indicate whether the Supported Traffic Flow QoS Parameters field uses a Supported Traffic Flow QoS Parameter Set Identifier Bitmap field to indicate the QoS parameter information for traffic flow transmission supported by the first AP on the first channel;
a Supported Traffic Flow QoS Parameter Set Identifier Bitmap Size field, configured to indicate a size of an identifier bitmap for supported QoS parameter sets for traffic flow transmission in a case where the Supported Traffic Flow QoS Parameters field uses the Supported Traffic Flow QoS Parameter Set Identifier Bitmap field to indicate the QoS parameter information for traffic flow transmission supported by the first AP on the first channel;
a Number of Supported Traffic Flow QoS Parameters field, configured to indicate a number of supported QoS parameters for traffic flow transmission in a Supported Traffic Flow QoS Parameter Set field in a case where the Supported Traffic Flow QoS Parameters field uses the Supported Traffic Flow QoS Parameter Set field to indicate the QoS parameter information for traffic flow transmission supported by the first AP on the first channel;
a Supported Traffic Flow QoS Parameter Present Bitmap field, configured to indicate whether at least one field in the Supported Traffic Flow QoS Parameter Set field is present in a case where the Supported Traffic Flow QoS Parameters field uses the Supported Traffic Flow QoS Parameter Set field to indicate the QoS parameter information for traffic flow transmission supported by the first AP on the first channel;
a Recommended STA Operation and Capability Parameter Present field, configured to indicate whether the Estimated Supported Traffic Flow QoS Parameter Information field comprises the Recommended STA Operation and Capability Parameters field; or
a Recommended STA Rx/Tx Parameter Present field, configured to indicate whether the Estimated Supported Traffic Flow QoS Parameter Information field comprises the Recommended STA Rx/Tx Parameters field.

20. The method according to claim 19, wherein the Supported Traffic Flow QoS Parameter Set Identifier Bitmap Size field and the Number of Supported Traffic Flow QoS Parameters field share a plurality of bits; wherein
in a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the plurality of bits correspond only to the Supported Traffic Flow QoS Parameter Set Identifier Bitmap Size field; and/or
in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the plurality of bits correspond only to the Number of Supported Traffic Flow QoS Parameters field.

21. The method according to claim 19 or 20, wherein
in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the Supported Traffic Flow QoS Parameters field comprises *m* Supported Traffic Flow QoS Parameter Set fields, wherein *m* is a positive integer, and *m* is equal to 1 or *m* is greater than 2 or equal to 2;
wherein each of the *m* Supported Traffic Flow QoS Parameter Set fields comprises at least one of:
an Estimated Delay Bound field, configured to indicate an estimated delay bound;
an Estimated MSDU Delivery Ratio field, configured to indicate an estimated medium access control service data unit, MSDU, delivery ratio;
an Estimated MSDU Count Exponent field, configured to indicate an estimated MSDU count exponent;
an Estimated Maximum MSDU Size field, configured to indicate an estimated maximum MSDU size;
an Estimated Burst Size field, configured to indicate an estimated burst size;
an Estimated Averaging Window field, configured to indicate an estimated averaging window;
an Estimated Minimum Data Rate field, configured to indicate an estimated minimum data rate; or
an Estimated Maximum Data Rate field, configured to indicate an estimated maximum data rate.

22. The method according to claim 21, wherein
in a case where *m* is greater than or equal to 2, different values are assigned to part or all of QoS parameters indicated by different Supported Traffic Flow QoS Parameter Set fields in the *m* Supported Traffic Flow QoS Parameter Set fields.

23. The method according to claim 21 or 22, wherein the at least one field comprises part or all of:
the Estimated Delay Bound field, the Estimated MSDU Delivery Ratio field, the Estimated MSDU Count Exponent field, the Estimated Maximum MSDU Size field, the Estimated Burst Size field, the Estimated Averaging Window field, the Estimated Minimum Data Rate field, or the Estimated Maximum Data Rate field.

24. The method according to claim 19 or 20, wherein in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel,
the Supported Traffic Flow QoS Parameters field comprises the Supported Traffic Flow QoS Parameter Set Identifier Bitmap field, wherein an i^{th} bit position in the Supported Traffic Flow QoS Parameter Set Identifier Bitmap field is configured to indicate whether an i^{th} QoS parameter set for traffic flow transmission, in a list of QoS parameter sets for traffic flow transmission, is supported, i being a positive integer;
wherein in the list of QoS parameter sets for traffic flow transmission, each QoS parameter set for traffic flow transmission comprises at least one of following QoS parameters: a delay bound, a medium access control service data unit, MSDU, delivery ratio, an MSDU count exponent, a maximum MSDU size, a burst size, an averaging window, a minimum data rate, or a maximum data rate;
wherein in the list of QoS parameter sets for traffic flow transmission, part or all of the QoS parameters included in different QoS parameter sets for traffic flow transmission have different values.

25. The method according to claim 24, wherein the list of QoS parameter sets for traffic flow transmission is specified by a protocol, or configured by an AP.

26. The method according to any one of claims 18 to 25, wherein the Available Service Time Parameters field comprises at least one of:
a Minimum Available Service Duration field, configured to indicate a minimum available service duration;
a Maximum Available Service Duration field, configured to indicate a maximum available service duration;
a Minimum Available Service Interval field, configured to indicate a minimum available service interval; or
a Maximum Available Service Interval field, configured to indicate a maximum available service interval.

27. The method according to any one of claims 18 to 26, wherein the Recommended STA Operation and Capability Parameters field comprises at least one of:
a Restricted TWT Enabled field, configured to indicate whether the STA supports an R-TWT operation for traffic flow transmission;
a Trigger-Enabled SP Enabled field, configured to indicate whether the STA supports an R-TWT operation based on a trigger-enabled SP for traffic flow transmission;
an SCS Enabled field, configured to indicate whether the STA supports a stream classification service, SCS, operation for traffic flow transmission; or
an SCS Traffic Descriptor Enabled field, configured to indicate whether the STA supports an SCS traffic descriptor operation for traffic flow transmission.

28. The method according to any one of claims 18 to 27, wherein the Recommended STA Rx/Tx Parameters field comprises at least one of:
an NSS field, configured to indicate a number of spatial streams, NSS, supported by the STA for reception or transmission;
an MCS field, configured to indicate a modulation and coding scheme, MCS, supported by the STA for reception or transmission;
a DCM field, configured to indicate a dual carrier modulation, DCM, supported by the STA for reception or transmission;
an RU Allocation field, configured to indicate a resource unit, RU, allocation supported by the STA for reception or transmission; or
a BW field, configured to indicate a bandwidth, BW, supported by the STA for reception or transmission.

29. The method according to any one of claims 18 to 28, wherein the first element is:
an Estimated Supported Traffic Flow QoS Parameters element; or
an R-TWT element.

30. The method according to claim 29, wherein in a case where the first element is the R-TWT element, the first element comprises an Estimated Supported Traffic Flow QoS Parameters field;
wherein the Estimated Supported Traffic Flow QoS Parameters field comprises: the Estimated Supported Traffic Flow QoS Parameter Information field, and an Estimated Supported Traffic Flow QoS Parameter Control field.

31. The method according to claim 30, wherein the first element further comprises an Estimated Supported Traffic Flow QoS Parameter Present field, configured to indicate whether the Estimated Supported Traffic Flow QoS Parameters field is present in the first element.

32. The method according to claim 31, wherein the Estimated Supported Traffic Flow QoS Parameter Present field is included within a Broadcast TWT Info field of the first element.

33. The method according to claim 32, wherein the Estimated Supported Traffic Flow QoS Parameter Present field and a Restricted TWT Traffic Info Present field share at least one bit of the Broadcast TWT Info field;
wherein in a case where the first element fails to include a Restricted TWT Traffic Info field, the at least one bit of the Broadcast TWT Info field corresponds only to the Estimated Supported Traffic Flow QoS Parameter Present field.

34. The method according to any one of claims 18 to 33, wherein the first frame is one of: a Beacon frame, a Probe Response frame, an Association Response frame, or a Reassociation Response frame.

35. The method according to any one of claims 1 to 34, further comprising:
selecting, based on the first information, an AP and/or a link for traffic flow transmission; and/or
selecting, based on the first information, a broadcast target wake time, TWT, corresponding to a target R-TWT schedule, wherein the target R-TWT schedule has been established by a target AP and the STA intends to join the target R-TWT schedule; and/or
selecting, based on the first information, a broadcast TWT corresponding to a target R-TWT schedule, wherein the target R-TWT schedule has been established by a target link and the STA intends to join the target R-TWT schedule.

36. The method according to any one of claims 1 to 35, wherein the traffic flow comprises at least a time-domain sensitive traffic flow.

37. A method for wireless communication, performed by an access point, AP, the method comprising:
transmitting first information;
wherein the first information comprises at least quality of service, QoS, parameter information for traffic flow transmission supported by a first AP on a first channel.

38. The method according to claim 37, wherein the QoS parameter information for traffic flow transmission supported by the first AP on the first channel is associated with:
an estimation result of QoS parameters for traffic flow transmission in a first basic service set, BSS, during a first estimation duration; or
an estimation result of QoS parameters for traffic flow transmission during N service periods, SPs, in a first BSS within a first estimation duration, wherein N is a positive integer.

39. The method according to claim 38, wherein
in a case where the QoS parameter information for traffic flow transmission supported by the first AP on the first channel is associated with the estimation result of the QoS parameters for traffic flow transmission in the first BSS during the first estimation duration, the estimation result of the QoS parameters for traffic flow transmission in the first BSS during the first estimation duration is associated with one or more available service time parameters in the first BSS during the first estimation duration;
wherein the one or more available service time parameters comprise at least one of: a minimum available service duration, a maximum available service duration, a minimum available service interval, or a maximum available service interval.

40. The method according to claim 39, wherein the one or more available service time parameters in the first BSS during the first estimation duration are associated with at least one of: scheduling capabilities of the first AP, or channel conditions of the first channel.

41. The method according to claim 40, wherein the first information further comprises the one or more available service time parameters in the first BSS during the first estimation duration.

42. The method according to claim 38, wherein in a case where the QoS parameter information for traffic flow transmission supported by the first AP on the first channel is associated with the estimation result of the QoS parameters for traffic flow transmission during the N SPs in the first BSS within the first estimation duration:
the N SPs are SPs in the first BSS where traffic flow scheduling and transmission are to be performed, or
the N SPs are SPs in the first BSS where traffic flow scheduling and transmission have been performed.

43. The method according to claim 42, wherein
the estimation result of the QoS parameters for traffic flow transmission during the N service periods in the first BSS within the first estimation duration is associated with one or more available service time parameters during the N SPs in the first BSS within the first estimation duration;
wherein the one or more available service time parameters comprise at least one of: a minimum available service duration, a maximum available service duration, a minimum available service interval, or a maximum available service interval.

44. The method according to claim 43, wherein
the one or more available service time parameters during the N SPs in the first BSS within the first estimation duration are associated with at least one of: scheduling capabilities of the first AP, or channel conditions of the first channel.

45. The method according to claim 43 or 44, wherein the first information further comprises the one or more available service time parameters during the N SPs in the first BSS within the first estimation duration.

46. The method according to any one of claims 42 to 45, wherein the N SPs are restricted target wake time, R-TWT, SPs corresponding to one or more R-TWT schedules within the first estimation duration, wherein the one or more R-TWT schedules have been established in the first BSS.

47. The method according to any one of claims 37 to 46, wherein the QoS parameter information for traffic flow transmission supported by the first AP on the first channel comprises:
*m* supported QoS parameter sets for traffic flow transmission, wherein each of the *m* supported QoS parameter sets for traffic flow transmission comprises at least one of following QoS parameters: an estimated delay bound, an estimated medium access control service data unit, MSDU, delivery ratio, an estimated MSDU count exponent, an estimated maximum MSDU size, an estimated burst size, an estimated averaging window, an estimated minimum data rate, or an estimated maximum data rate;
wherein *m* is a positive integer, and *m* is equal to 1 or *m* is greater than or equal to 2.

48. The method according to claim 47, wherein
in a case where *m* is greater than or equal to 2, different values are assigned to part or all of the QoS parameters included in different sets of the *m* supported QoS parameter sets for traffic flow transmission.

49. The method according to any one of claims 37 to 46, wherein the QoS parameter information for traffic flow transmission supported by the first AP on the first channel comprises:
an identifier bitmap for supported QoS parameter sets for traffic flow transmission, wherein an i^{th} bit position in the identifier bitmap is configured to indicate whether an i^{th} QoS parameter set for traffic flow transmission, in a list of QoS parameter sets for traffic flow transmission, is supported, i being a positive integer;
wherein, in the list of QoS parameter sets for traffic flow transmission, each QoS parameter set for traffic flow transmission comprises at least one of following QoS parameters: a delay bound, a medium access control service data unit, MSDU, delivery ratio, an MSDU count exponent, a maximum MSDU size, a burst size, an averaging window, a minimum data rate, or a maximum data rate;
wherein in the list of QoS parameter sets for traffic flow transmission, part or all of the QoS parameters included in different QoS parameter sets for traffic flow transmission have different values.

50. The method according to claim 49, wherein the list of QoS parameter sets for traffic flow transmission is specified by a protocol, or configured by an AP.

51. The method according to any one of claims 37 to 50, wherein the first information further comprises at least one of following information recommended based on the QoS parameter information for traffic flow transmission supported by the first AP on the first channel:
operation and capability parameter information for the STA; or
reception/transmission, Rx/Tx, parameter information for the STA.

52. The method according to claim 51, wherein the operation and capability parameter information for the STA comprises at least one of:
information indicating whether the STA supports a restricted target wake time, R-TWT, operation for traffic flow transmission,
information indicating whether the STA supports an R-TWT operation based on a trigger-enabled service period, SP, for traffic flow transmission,
information indicating whether the STA supports a stream classification service, SCS, operation for traffic flow transmission, or
information indicating whether the STA supports an SCS traffic descriptor operation for traffic flow transmission.

53. The method according to claim 51, wherein the Rx/Tx parameter information for the STA comprises at least one of:
a number of spatial streams, NSS, supported by the STA for reception or transmission;
a modulation and coding scheme, MCS, supported by the STA for reception or transmission;
a dual carrier modulation, DCM, supported by the STA for reception or transmission;
a resource unit, RU, allocation supported by the STA for reception or transmission; or
a bandwidth, BW, supported by the STA for reception or transmission.

54. The method according to any one of claims 37 to 53, wherein the first information is carried by a first element in a first frame;
wherein the first element comprises an Estimated Supported Traffic Flow QoS Parameter Information field comprising at least one of:
a Supported Traffic Flow QoS Parameters field, configured to indicate the QoS parameter information for traffic flow transmission supported by the first AP on the first channel;
an Available Service Time Parameters field, configured to indicate one or more available service time parameters during N restricted target wake time, R-TWT, service periods, SPs, in a first basic service set, BSS, within a first estimation duration, wherein the QoS parameter information for traffic flow transmission supported by the first AP on the first channel is associated with the one or more available service time parameters during the N R-TWT SPs in the first BSS within the first estimation duration, N being a positive integer;
a Recommended STA Operation and Capability Parameters field, configured to indicate operation and capability parameter information recommended for the STA based on the QoS parameter information for traffic flow transmission supported by the first AP on the first channel; or
a Recommended STA Rx/Tx Parameters field, configured to indicate reception/transmission, Rx/Tx, parameter information recommended for the STA based on the QoS parameter information for traffic flow transmission supported by the first AP on the first channel.

55. The method according to claim 54, wherein the first element further comprises an Estimated Supported Traffic Flow QoS Parameter Control field comprising at least one of:
a Direction field, configured to indicate a transmission direction of traffic flow data corresponding to the first element;
a QoS Parameter Set Identifier Bitmap Indicator field, configured to indicate whether the Supported Traffic Flow QoS Parameters field uses a Supported Traffic Flow QoS Parameter Set Identifier Bitmap field to indicate the QoS parameter information for traffic flow transmission supported by the first AP on the first channel;
a Supported Traffic Flow QoS Parameter Set Identifier Bitmap Size field, configured to indicate a size of an identifier bitmap for supported QoS parameter sets for traffic flow transmission in a case where the Supported Traffic Flow QoS Parameters field uses the Supported Traffic Flow QoS Parameter Set Identifier Bitmap field to indicate the QoS parameter information for traffic flow transmission supported by the first AP on the first channel;
a Number of Supported Traffic Flow QoS Parameters field, configured to indicate a number of supported QoS parameters for traffic flow transmission in a Supported Traffic Flow QoS Parameter Set field in a case where the Supported Traffic Flow QoS Parameters field uses the Supported Traffic Flow QoS Parameter Set field to indicate the QoS parameter information for traffic flow transmission supported by the first AP on the first channel;
a Supported Traffic Flow QoS Parameter Present Bitmap field, configured to indicate whether at least one field in the Supported Traffic Flow QoS Parameter Set field is present in a case where the Supported Traffic Flow QoS Parameters field uses the Supported Traffic Flow QoS Parameter Set field to indicate the QoS parameter information for traffic flow transmission supported by the first AP on the first channel;
a Recommended STA Operation and Capability Parameter Present field, configured to indicate whether the Estimated Supported Traffic Flow QoS Parameter Information field comprises the Recommended STA Operation and Capability Parameters field; or
a Recommended STA Rx/Tx Parameter Present field, configured to indicate whether the Estimated Supported Traffic Flow QoS Parameter Information field comprises the Recommended STA Rx/Tx Parameters field.

56. The method according to claim 55, wherein the Supported Traffic Flow QoS Parameter Set Identifier Bitmap Size field and the Number of Supported Traffic Flow QoS Parameters field share a plurality of bits; wherein
in a case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel, the plurality of bits correspond only to the Supported Traffic Flow QoS Parameter Set Identifier Bitmap Size field; and/or,
in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the plurality of bits correspond only to the Number Of Supported Traffic Flow QoS Parameters field.

57. The method according to claim 55 or 56, wherein
in a case where the QoS Parameter Set Identifier Bitmap Indicator field is configured to indicate that the Supported Traffic Flow QoS Parameters field fails to use the Supported Traffic Flow QoS Parameter Set Identifier Bitmap field to indicate the QoS parameter information for traffic flow transmission supported by the first AP on the first channel, the Supported Traffic Flow QoS Parameters field comprises *m* Supported Traffic Flow QoS Parameter Set fields, wherein *m* is a positive integer, and *m* is equal to 1 or *m* is greater than 2 or equal to 2;
wherein each of the *m* Supported Traffic Flow QoS Parameter Set fields comprises at least one of:
an Estimated Delay Bound field, configured to indicate an estimated delay bound;
an Estimated MSDU Delivery Ratio field, configured to indicate an estimated medium access control service data unit, MSDU, delivery ratio;
an Estimated MSDU Count Exponent field, configured to indicate an estimated MSDU count exponent;
an Estimated Maximum MSDU Size field, configured to indicate an estimated maximum MSDU size;
an Estimated Burst Size field, configured to indicate an estimated burst size;
an Estimated Averaging Window field, configured to indicate an estimated averaging window;
an Estimated Minimum Data Rate field, configured to indicate an estimated minimum data rate; or
an Estimated Maximum Data Rate field, configured to indicate an estimated maximum data rate.

58. The method according to claim 57, wherein
in a case where *m* is greater than or equal to 2, different values are assigned to part or all of QoS parameters indicated by different Supported Traffic Flow QoS Parameter Set fields in the *m* Supported Traffic Flow QoS Parameter Set fields.

59. The method according to claim 57 or 58, wherein the at least one field comprises part or all of:
the Estimated Delay Bound field, the Estimated MSDU Delivery Ratio field, the Estimated MSDU Count Exponent field, the Estimated Maximum MSDU Size field, the Estimated Burst Size field, the Estimated Averaging Window field, the Estimated Minimum Data Rate field, or the Estimated Maximum Data Rate field.

60. The method according to claim 55 or 56, wherein, in the case where the QoS Parameter Set Identifier Bitmap Indicator field is configured to indicate that the Supported Traffic Flow QoS Parameters field uses the Supported Traffic Flow QoS Parameter Set Identifier Bitmap field to indicate the QoS parameter information for traffic flow transmission supported by the first AP on the first channel,
the Supported Traffic Flow QoS Parameters field comprises the Supported Traffic Flow QoS Parameter Set Identifier Bitmap field, wherein an i^{th} bit position in the Supported Traffic Flow QoS Parameter Set Identifier Bitmap field is configured to indicate whether an i^{th} QoS parameter set for traffic flow transmission, in a list of QoS parameter sets for traffic flow transmission, is supported, i being a positive integer;
wherein in the list of QoS parameter sets for traffic flow transmission, each QoS parameter set for traffic flow transmission comprises at least one of following QoS parameters: a delay bound, a medium access control service data unit, MSDU, delivery ratio, an MSDU count exponent, a maximum MSDU size, a burst size, an averaging window, a minimum data rate, or a maximum data rate;
wherein in the list of QoS parameter sets for traffic flow transmission, part or all of the QoS parameters included in different QoS parameter sets for traffic flow transmission have different values.

61. The method according to claim 60, wherein the list of QoS parameter sets for traffic flow transmission is specified by a protocol, or configured by an AP.

62. The method according to any one of claims 54 to 61, wherein the Available Service Time Parameters field at least one of:
a Minimum Available Service Duration field, configured to indicate a minimum available service duration;
a Maximum Available Service Duration field, configured to indicate a maximum available service duration;
a Minimum Available Service Interval field, configured to indicate a minimum available service interval; or
a Maximum Available Service Interval field, configured to indicate a maximum available service interval.

63. The method according to any one of claims 54 to 62, wherein the Recommended STA Operation and Capability Parameters field comprises at least one of:
a Restricted TWT Enabled field, configured to indicate whether the STA supports an R-TWT operation for traffic flow transmission;
a Trigger-Enabled SP Enabled field, configured to indicate whether the STA supports an R-TWT operation based on a trigger-enabled SP for traffic flow transmission;
an SCS Enabled field, configured to indicate whether the STA supports a stream classification service, SCS, operation for traffic flow transmission; or
an SCS Traffic Descriptor Enabled field, configured to indicate whether the STA supports an SCS traffic descriptor operation for traffic flow transmission.

64. The method according to any one of claims 54 to 63, wherein the Recommended STA Rx/Tx Parameters field comprises at least one of:
an NSS field, configured to indicate a number of spatial streams, NSS, supported by the STA for reception or transmission;
an MCS field, configured to indicate a modulation and coding scheme, MCS, supported by the STA for reception or transmission;
a DCM field, configured to indicate a dual carrier modulation, DCM, supported by the STA for reception or transmission;
an RU Allocation field, configured to indicate a resource unit, RU, allocation supported by the STA for reception or transmission; or
a BW field, configured to indicate a bandwidth, BW, supported by the STA for reception or transmission.

65. The method according to any one of claims 54 to 64, wherein the first element is:
an Estimated Supported Traffic Flow QoS Parameters element; or
an R-TWT element.

66. The method according to claim 65, wherein, in a case where the first element is the R-TWT element, the first element comprises an Estimated Supported Traffic Flow QoS Parameters field;
wherein the Estimated Supported Traffic Flow QoS Parameters field comprises: the Estimated Supported Traffic Flow QoS Parameter Information field, and an Estimated Supported Traffic Flow QoS Parameter Control field.

67. The method according to claim 66, wherein the first element further comprises an Estimated Supported Traffic Flow QoS Parameter Present field, configured to indicate whether the Estimated Supported Traffic Flow QoS Parameters field is present in the first element.

68. The method according to claim 67, wherein the Estimated Supported Traffic Flow QoS Parameter Present field is included within a Broadcast TWT Info field of the first element.

69. The method according to claim 68, wherein the Estimated Supported Traffic Flow QoS Parameter Present field and a Restricted TWT Traffic Info Present field share at least one bit of the Broadcast TWT Info field;
wherein in a case where the first element fails to include a Restricted TWT Traffic Info field, the at least one bit of the Broadcast TWT Info field corresponds only to the Estimated Supported Traffic Flow QoS Parameter Present field.

70. The method according to any one of claims 54 to 69, wherein the first frame is one of: a Beacon frame, a Probe Response frame, an Association Response frame, or a Reassociation Response frame.

71. The method according to any one of claims 37 to 70, wherein the first information is used by the STA to select
an AP and/or a link for traffic flow transmission; and/or
a broadcast target wake time, TWT, corresponding to a target R-TWT schedule, wherein the target R-TWT schedule has been established by a target AP and the STA intends to join the target R-TWT schedule; and/or
a broadcast TWT corresponding to a target R-TWT schedule, wherein the target R-TWT schedule has been established by a target link and the STA intends to join the target R-TWT schedule.

72. The method according to any one of claims 37 to 71, wherein the traffic flow comprises at least a time-domain sensitive traffic flow.

73. A station, STA, comprising:
a communication unit, configured to receive first information;
wherein the first information comprises at least quality of service, QoS, parameter information for traffic flow transmission supported by a first access point, AP, on a first channel.

74. An access point, AP, comprising:
a communication unit, configured to transmit first information;
wherein the first information comprises at least quality of service, QoS, parameter information for traffic flow transmission supported by a first AP on a first channel.

75. A station, STA, comprising:
a processor; and
a memory configured to store one or more computer programs;
wherein the processor is configured to call and run the one or more computer programs stored in the memory, to cause the STA to perform the method as defined in any one of claims 1 to 37.

76. An access point, AP, comprising:
a processor; and
a memory, configured to store one or more computer programs;
wherein the processor is configured to call and run the one or more computer programs stored in the memory, to cause the AP to perform the method as defined in any one of claims 38 to 72.

77. A chip, comprising:
a processor, configured to call and run one or more computer programs stored in a memory, to cause a device equipped with the chip to perform the method as defined in any one of claims 1 to 37.

78. A chip, comprising:
a processor, configured to call and run one or more computer programs stored in a memory, to cause a device equipped with the chip to perform the method as defined in any one of claims 38 to 72.

79. A computer-readable storage medium, configured to store one or more computer programs, wherein the one or more computer programs, when called and run, cause the method as defined in any one of claims 1 to 37 to be performed.

80. A computer-readable storage medium, configured to store one or more computer programs, wherein the one or more computer programs, when called and run, cause the method as defined in any one of claims 38 to 72 to be performed.

81. A computer program product, comprising: one or more computer instructions, wherein the one or more computer instructions, when called and executed, cause the method as defined in any one of claims 1 to 37 to be performed.

82. A computer program product, comprising: one or more computer instructions, wherein the one or more computer instructions, when called and executed, cause the method as defined in any one of claims 38 to 72 to be performed.

83. A computer program, wherein the computer program, when called and run, causes the method as defined in any one of claims 1 to 37 to be performed.

84. A computer program, wherein the computer program, when called and run, causes the method as defined in any one of claims 38 to 72 to be performed.
